(19) **Europäisches Patentamt / European Patent Office / Office européen des brevets**

(11) **EP 2 596 947 B1**

(12) **EUROPEAN PATENT SPECIFICATION**

(45) Date of publication and mention of the grant of the patent:
**06.02.2019 Bulletin 2019/06**

(21) Application number: **11809657.7**

(22) Date of filing: **20.07.2011**

(51) Int Cl.:
**B32B 5/28** (2006.01)   **B29C 70/06** (2006.01)
**B29C 70/10** (2006.01)   **B32B 27/02** (2006.01)
**B32B 27/04** (2006.01)   **B32B 27/32** (2006.01)
**B32B 27/38** (2006.01)   **B29K 63/00** (2006.01)
**B29K 105/08** (2006.01)   **C08J 5/24** (2006.01)

(86) International application number:
**PCT/JP2011/066419**

(87) International publication number:
**WO 2012/011487 (26.01.2012 Gazette 2012/04)**

(54) **PREPREG, FIBER-REINFORCED COMPOSITE MATERIAL, AND PROCESS FOR PRODUCING PREPREG**

PREPREG, FASERVERSTÄRKTES VERBUNDMATERIAL UND VERFAHREN ZUR HERSTELLUNG DES PREPREGS

MATÉRIAU COMPOSITE PRÉIMPRÉGNÉ, RENFORCÉ PAR DES FIBRES, ET PROCÉDÉ DE FABRICATION DU MATÉRIAU PRÉIMPRÉGNÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.07.2010 JP 2010163713**
**21.07.2010 JP 2010163712**

(43) Date of publication of application:
**29.05.2013 Bulletin 2013/22**

(73) Proprietor: **Toray Industries, Inc.**
**Tokyo 103-8666 (JP)**

(72) Inventors:
• **FUJIWARA, Takayuki**
  **Ehime 791-3193 (JP)**
• **MISUMI, Jun**
  **Ehime 791-3193 (JP)**
• **MATSUDA, Ayumi**
  **Ehime 791-3193 (JP)**
• **YOSHIOKA, Kenichi**
  **Ehime 791-3193 (JP)**

(74) Representative: **Mewburn Ellis LLP**
**City Tower**
**40 Basinghall Street**
**London EC2V 5DE (GB)**

(56) References cited:
JP-A- 8 127 662    JP-A- H0 641 332
JP-A- H1 143 546   JP-A- S6 426 651
JP-A- H03 149 230  JP-A- H08 225 667
JP-A- H08 259 713  JP-A- H08 283 435
JP-A- 2000 127 304 JP-A- 2004 074 471

EP 2 596 947 B1

**Description**

TECHNICAL FIELD

The present invention relates to: a fiber-reinforced composite material suitable for use in sport-related applications and general industry-related purposes; a prepreg used suitably for producing the fiber-reinforced composite material; and a process for producing the prepreg.

More specifically, the present invention relates to: a fiber-reinforced composite material which can be used suitably as various frames, pipes, shafts, wheels, and curved disks for these products in airplanes, ships, automobiles, bicycles, etc. and industrial machines such as pumps and brushcutters, tubular articles such as golf club shafts, fishing rods, ski poles, badminton rackets and tent poles, various sporting goods and leisure time amusement goods such as skis, snow boards, golf club heads and bicycle rims, and civil engineering and construction materials, and also suitable for repairing and reinforcing these goods; a prepreg used suitably for producing the fiber-reinforced composite material; and a process for producing the prepreg.

BACKGROUND ART

Fiber-reinforced composite materials produced using carbon fibers or aramid fibers as reinforcing fibers have high specific strengths and high specific elastic moduli, and therefore have been used widely for structural materials for aircraft, automobiles, etc.; and for sport-related applications and general industry-related purposes including tennis rackets, golf shafts, fishing rods and bicycles.

In the recent golf clubs, most of heads are made of metals and are getting larger and, therefore, vibrations and rigid feeling transmitted to hands upon the hitting of balls are increased. Thus, the demand on the improvement in vibration damping performance and the feeling of ball hitting has been increased.

Patent Document 1 discloses a golf club shaft in which a vibration-damping layer comprising a woven metal braid is provided on at least a part in the longitudinal direction of a shaft comprising a fiber-reinforced resin. However, in this case, although vibration damping performance is improved, the mass of the shaft is increased, since a metal fiber having a higher specific gravity than that of a carbon fiber, which has been used usually in a golf shaft, is used.

Patent Document 2 discloses a golf club shaft in which at least one layer of a polyester film is arranged between fiber-reinforced resin layers or inside of the innermost layer of the fiber-reinforced resin layers. In this case, although vibration damping performance is improved, the flexural strength and torsional strength of the shaft are decreased since the polyester has a lower modulus compared with that of an epoxy resin which has been usually used as a matrix resin in a fiber-reinforced resin for the golf shaft.

In tennis rackets, for the purpose of reducing weights and improving repulsive force and controllability, carbon fiber composite materials in each of which an epoxy resin is used as a matrix have been used positively. The impact generated upon the hitting of balls using a racket is transmitted to the body in the form of vibrations through the racket. It is known that, when receiving the vibrations repeatedly, fatigues are accumulated in the elbow and therefore the vibrations induce so-called "tennis elbow" (a disease associated with pain in the elbow). Therefore, it is desirable to reduce the vibrations.

Patent Document 3 discloses a tennis racket made of a fiber-reinforced composite material in which an epoxy resin composition comprising a specific epoxy resin, rubber particles incompatible with an epoxy resin and polyvinyl formal is used as a matrix resin. In this case, the rubber particles incompatible with an epoxy resin penetrate into the inside of reinforcing fiber bundles and, at the same time, some rubber microparticles are filtered off through the reinforcing fibers, and therefore a larger amount of the rubber component exists on the surface of a prepreg compared with that in the inside of the prepreg. Consequently, a larger amount of the rubber component can exist between the layers of the prepreg after the lamination of the layers. As a result, it becomes possible to provide a racket having superior vibration damping performance and also having superior ball hitting feeling compared with the case in which rubber microparticles compatible with an epoxy resin are used and the rubber component is present uniformly in a prepreg. However, since the rubber particles having a lower modulus than that of an epoxy resin penetrate even into the inside of the reinforcing fiber bundles, the modulus of the matrix resin in the reinforcing fiber bundles is decreased, leading to the deterioration in rigidity and strength of the racket.

Meanwhile, prepregs each produced by complexing a reinforcing fiber with a thermoplastic resin fiber are disclosed in Patent Documents 4 and 5. In Patent Document 4, polyamide 12, polyether imide or the like is used. In this case, although the impact resistance and the fatigue properties of a fiber-reinforced composite material are improved, vibration damping performance near room temperature is insufficient. In Patent Document 5, a long fiber made of a thermoplastic resin is used. The technique using a long fiber is advantageous, since the penetration of a thermoplastic resin component into reinforcing fiber bundles can be prevented. In Patent Document 5, long fibers of Nylon 6, Nylon 66 and the like are used. Therefore, although the impact resistance and fatigue properties of the fiber-reinforced composite material are improved, the vibration damping performance near room temperature is insufficient.

Patent Document 6 discloses a fishing rod having improved vibration damping performance for the purpose of transmitting a slight fish strike with high sensitivity. In this document, a urethane elastomer sheet is arranged between fiber-reinforced resin layers. The urethane elastomer sheet can greatly improve vibration damping performance of a fiber-reinforced composite material, but can greatly deteriorate the rigidity and strength of the fiber-reinforced composite material.

JP08-259713-A describes a prepreg including reinforcing fibers, an epoxy resin composition and a particulate, fibrous or filmy thermoplastic resin. JP06-041332-A describes a prepreg composed of a reinforcing fiber filament, a matrix resin and fine particles of thermoplastic resin. JP08-225667-A describes a prepreg including a reinforcing fiber and a matrix resin. JP08-283435-A describes a yarn prepreg produced by impregnating reinforcing fiber bundles with a thermosetting resin and a resin including elastomer or thermoplastic resin near to the surfaces of the fiber bundles. JP03-149230-A describes a release sheet carrying a resin and superimposed on each surface of a sheeted reinforcing fiber.

PRIOR ART DOCUMENTS

PATENT DOCUMENTS

Patent Document 1: Japanese Patent Laid-open Publication No. 2009-261473
Patent Document 2: Japanese Patent Laid-open Publication No. 2008-237373
Patent Document 3: Japanese Patent Laid-open Publication No. 2003-012889
Patent Document 4: Japanese Patent Laid-open Publication No. 4-292909
Patent Document 5: Japanese Patent Laid-open Publication No. 7-252372
Patent Document 6: Japanese Patent Laid-open Publication No. 4-207139

SUMMARY OF THE INVENTION

PROBLEMS TO BE SOLVED BY THE INVENTION

An object of the present invention is to provide: a fiber-reinforced composite material having excellent rigidity, strength and vibration damping performance; a prepreg which can be used suitably for the production of the fiber-reinforced composite material; and a process for producing the prepreg.

MEANS FOR SOLVING THE PROBLEMS

The present inventors have made intensive and extensive studies for the purpose of solving the above-mentioned problems . As a result, it was found that a fiber-reinforced composite material which has a specified constitution and a prepreg which can be used for producing the fiber-reinforced composite material can solve the above-mentioned problems. This finding lead to the accomplishment of the present invention. The constitution of the present invention is as follows.

(1) A prepreg containing components (A) to (C) as mentioned below, wherein the component (A) is arranged on one surface or both surfaces of a layer comprising the components (B) and (C) :

(A) a non-woven fabric comprising a thermoplastic elastomer and/or a polyolefin which has a value of $\tan\delta$ of 0.06 or more at 10°C as measured in a viscoelasticity measurement in which a plate-like molding comprising only component (A) is measured using a dynamic viscoelasticity measurement from -70 to 250°C at a temperature rise rate of 5°C/min and is incompatible with the component (B), herein components (A) and (B) being incompatible means that the glass transition temperature of the cured product of the resin composition comprising the components (A) and (B) is observed at the same temperature as the glass transition temperatures of the plate-like molding comprising only the component (A) and the cured resin produced by curing only the component (B) as measured by a dynamic viscoelasticity measurement from -70 to 250°C at a temperature rise rate of 5°C/min ;
(B) a first epoxy resin composition; and
(C) a reinforcing fiber.

(2) A process for producing the prepreg recited in item (1), containing the steps of: impregnating the component (C) with the component (B) to produce a prepreg precursor; and attaching the component (A) onto the prepreg precursor.

(3) A fiber-reinforced composite material containing components (E) to (G) as mentioned below, wherein multiple layers each comprising the components (F) and (G) are laminated together, and the component (E) is arranged between the layers each comprising the components (F) and (G):

(E) a non-woven fabric comprising a thermoplastic elastomer and/or a polyolefin which has a value of tanδ of 0.06 or more at 10°C in which a plate-like molding comprising only component (E) is measured using a dynamic viscoelasticity measurement from -70 to 250°C at a temperature rise rate of 5°C/min, and is incompatible with a third epoxy resin composition herein components (E) and the third epoxy resin composition being incompatible means that the glass transition temperature of the cured product of the resin composition comprising the component (E) and the third epoxy resin composition is observed at the same temperature as the glass transition temperatures of the plate-like molding comprising only the component (E) and the cured resin produced by curing only the third epoxy resin composition as measured by a dynamic viscoelasticity measurement from -70 to 250°C at a temperature rise rate of 5°C/min;
(F) a cured product of the third epoxy resin composition; and
(G) a reinforcing fiber.

EFFECTS OF THE INVENTION

According to the present invention, it is possible to provide: a fiber-reinforced composite material which has excellent rigidity, strength and vibration damping performance; and a prepreg which can be used suitably for the production of the fiber-reinforced composite material. That is, according to the fiber-reinforced composite material and the prepreg of the present invention, it is possible to improve vibration damping performance of a fiber-reinforced composite material without deteriorating rigidity and strength thereof by arranging a non-woven fabric comprising a thermoplastic elastomer and/or a polyolefin each having high vibration damping performance between layers of the fiber-reinforced composite material. The present invention is useful for the improvement in ball hitting feel of a golf shaft, the improvement in impact absorption performance of a tennis racket, the improvement in fish strike sensitivity of a fishing rod, and so on.

BRIEF DESCRIPTION OF THE DRAWINGS

Fig. 1 shows a cross-sectional view of a prepreg comprising the components (A) to (C), wherein the component (A) is arranged on one surface of a layer comprising the components (B) and (C).
Fig. 2 shows a cross-sectional view of a prepreg comprising the components (A) to (C), wherein the component (A) is arranged on both surfaces of a layer comprising the components (B) and (C).
Fig. 3 shows a cross-sectional view of a prepreg comprising the components (A) to (D), wherein the component (A) is arranged on one surface of a layer comprising the components (B) and (C) in such a state that the component (A) is contained in the component (D).
Fig. 4 shows a cross-sectional view of a prepreg comprising the components (A) to (D), wherein the component (A) is arranged on both surfaces of a layer comprising the components (B) and (C) in such a state that the component (A) is contained in the component (D).
Fig. 5 shows a cross-sectional view of a fiber-reinforced composite material comprising the components (E) to (G), wherein the component (E) is arranged between adjacent two layers each comprising the components (F) and (G) in a laminate comprising the layers.
Fig. 6 shows a cross-sectional view of a fiber-reinforced composite material comprising the components (E) to (H), wherein the component (E) is arranged between adjacent two layers each comprising the components (F) and (G) in a laminate comprising the layers in such a state that the component (E) is contained in the component (H).
Fig. 7 shows a cross-sectional view of a prepreg laminate comprising the components (E) to (G), wherein 20 plies of a layer comprising the components (F) and (G) are laminated together and 19 plies of a layer comprising the component (E) are respectively arranged between every adjacent two of the 20 layers.
Fig. 8 shows a cross-sectional view of a prepreg laminate comprising the components (E) to (H), wherein 20 plies of a layer comprising the components (F) and (G) are laminated together and 19 plies of a layer comprising the components (E) and (H) are respectively arranged between every adjacent two of the 20 layers.
Fig. 9 shows a cross-sectional view of a prepreg laminate comprising the components (E) to (G), wherein 20 plies of a layer comprising the components (F) and (G) are laminated together and 9 plies of a layer comprising the component (E) are respectively arranged between any adjacent two of the 20 layers.

Fig. 10 shows a cross-sectional view of a prepreg laminate comprising the components (E) to (H), wherein 20 plies of a layer comprising the components (F) and (G) are laminated together and 9 plies of a layer comprising the components (E) and (H) are respectively arranged between any adjacent two of the 20 layers.

Fig. 11 shows a cross-sectional view of a prepreg laminate comprising the components (E) to (G), wherein 20 plies of a layer comprising the components (F) and (G) are laminated together and 4 plies of a layer comprising the component (E) are respectively arranged between any adjacent two of the 20 layers.

Fig. 12 shows a cross-sectional view of a prepreg laminate comprising the components (E) to (H), wherein 20 plies of a layer comprising the components (F) and (G) are laminated together and 4 plies of a layer comprising the components (E) and (H) are respectively arranged between any adjacent two of the 20 layers.

Fig. 13 shows a cross-sectional view of a prepreg laminate comprising the components (E) to (G), wherein 20 plies of a layer comprising the components (F) and (G) are laminated together and one ply of a layer comprising the component (E) is arranged at the center of the 20 layers.

Fig. 14 shows a cross-sectional view of a prepreg laminate comprising the components (E) to (H), wherein 20 plies of a layer comprising the components (F) and (G) are laminated together and one ply of a layer comprising the components (E) and (H) is arranged at the center of the 20 layers.

Fig. 15 shows a cross-sectional view of a fiber-reinforced composite material comprising the components (E) to (G), wherein polyamide elastomer particles (J) are present between layers each comprising the components (F) and (G) in a laminate comprising the layers.

## MODES FOR CARRYING OUT THE INVENTION

The present invention is described more in detail below.

The prepreg according to the present invention contains the following components (A) to (C):

(A) a non-woven fabric comprising a thermoplastic elastomer and/or a polyolefin which has a value of $\tan\delta$ of 0.06 or more at 10°C as measured in a viscoelasticity measurement in which a plate-like molding comprising only component (A) is measured using a dynamic viscoelasticity measurement from -70 to 250°C at a temperature rise rate of 5°C/min and is incompatible with the component (B), herein components (A) and (B) being incompatible means that the glass transition temperature of the cured product of the resin composition comprising the components (A) and (B) is observed at the same temperature as the glass transition temperatures of the plate-like molding comprising only the component (A) and the cured resin produced by curing only the component (B) as measured by a dynamic viscoelasticity measurement from -70 to 250°C at a temperature rise rate of 5°C/min;

(B) a first epoxy resin composition; and

(C) a reinforcing fiber.

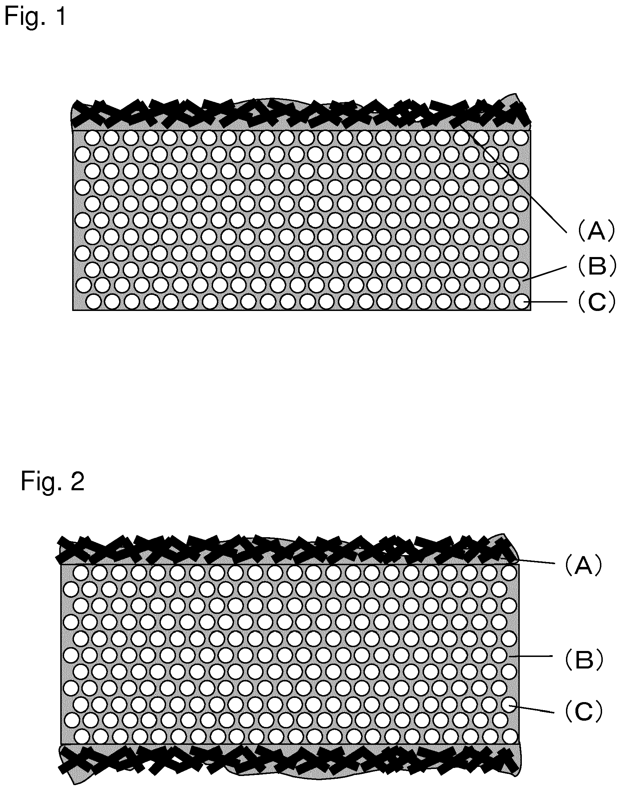

Cross-sectional views of preferred aspects of the prepreg according to the present invention are illustrated in Figs. 1 to 4. As illustrated in Figs. 1 to 4, the component (C) is impregnated with the component (B) to form a layer, and the component (A) is arranged on one surface or both surfaces of the layer comprising the components (B) and (C).

The component (A) to be used in the present invention is required to have a value of $\tan\delta$ at 10°C of 0.06 or more, preferably 0.07 or more, more preferably 0.09 or more in a viscoelasticity measurement. If the value of $\tan\delta$ is less than 0.06, the vibration damping performance is insufficient. The value of $\tan\delta$ at 10°C can be determined by measuring the dynamic viscoelasticity of a plate-like molding that is produced by introducing the component (A) into a stainless steel mold and then subjecting the component (A) to a press molding procedure.

The component (A) is also required to comprise a thermoplastic elastomer and/or a polyolefin. The term "thermoplastic elastomer" refers to a block copolymer comprising a soft segment and a hard segment, which is a polymer that exhibits rubber elasticity at ambient temperature and can be softened upon being heated to exhibit plasticity. A common elastomer such as a vulcanized rubber cannot exhibit fluidity upon being heated, and therefore cannot enable the production of a non-woven fabric. As for the thermoplastic elastomer, a polystyrene-based thermoplastic elastomer, a polyolefin-based thermoplastic elastomer, a polyvinyl chloride-based thermoplastic elastomer, a polyurethane-based thermoplastic elastomer, a polyester-based thermoplastic elastomer, a polyamide-based thermoplastic elastomer, an ionomer-based thermoplastic elastomer, a fluorine-containing thermoplastic elastomer and so on can be used. Among these, from the viewpoint of the adhesion to an epoxy resin, a polyamide-based thermoplastic elastomer having a polyamide structure and a polyether structure or a polyester-based thermoplastic elastomer having a polyester structure and a polyether structure are preferred. Examples of commercially available products of the polyamide-based thermoplastic elastomer having a polyamide structure and a polyether structure include "UBESTA XPA (registered trademark)" (manufactured by Ube Industries, Ltd.), "PEBAX (registered trademark)" (manufactured by Arkema), and "NOVAMID (registered trademark) " (manufactured by DSM Japan Engineering Plastics K.K.). Examples of commercially available products of the polyester-based thermoplastic elastomer having a polyester structure and a polyether structure include "Hytrel (registered trademark)" (manufactured by Du Pont-Toray Co., Ltd.) and "Pelprene (registered trademark)" (manufactured by Toyobo Co., Ltd.).

The term "polyolefin" refers to a polymer produced by homopolymerizing or copolymerizing an alkene or an alkyne. Examples of the polyolefin include: polyolefins produced by homopolymerization, such as polyethylene, polypropylene and polybutylene; and polyolefins produced by copolymerization, such as a polypropylene-polyethylene copolymer and a polybutylene-polypropylene copolymer. Among these components, from the viewpoint of vibration damping performance, specific gravity and cost, a polypropylene or polypropylene copolymer is preferred. Examples of the polypropylene copolymer include a polypropylene-ethylene random copolymer, a polypropylene-1-butene random copolymer, a polypropylene-ethylene-1-butene random copolymer and a polypropylene-ethylene-ethylene polypropylene rubber block copolymer. A polyolefin having a polar group introduced into the molecule thereof is more preferably used, from the viewpoint of the adhesion to the component (B). Examples of the polyolefin having a polar group introduced into the molecule thereof include a chlorinated polyolefin, an acid-modified polyolefin and an amide-modified polyolefin. Examples of the commercially available products of polyethylene include "Suntec-HD (registered trademark)" (manufactured by Asahi Kasei Chemicals Corporation), "Novatec HD (registered trademark)" (manufactured by Japan Polyethylene Corporation), "Miperon (registered trademark)" (manufactured by Mitsui Chemicals, Inc.) and "Sumikathene (registered trademark)" (manufactured by Sumitomo Chemical Co., Ltd.), and examples of the commercially available products of polypropylene include "Sumistran (registered trademark)" (manufactured by Sumitomo Chemical Co., Ltd.) and "Daicel PP (registered trademark)" (manufactured by Daicel Polymers, Ltd.). Examples of the commercially available products of a polypropylene copolymer include "Primepolypro (registered trademark)" J226E, J226T, J227T, J229E, BJS-MU, J704LB and J715M (manufactured by Prime Polymer Co., Ltd.). Examples of the commercially available products of a polyolefin having a polar group introduced into the molecule thereof include "Admer (registered trademark)" (manufactured by Mitsui Chemicals, Inc.), "Modic (registered trademark)" and "Linklon (registered trademark)" (which are manufactured by Mitsubishi Chemical Corporation), "Arrowbase (registered trademark)" (manufactured by Unitika Co., Ltd.), "Hardlen (registered trademark)" (manufactured by Toyobo Co., Ltd.) and "Adtex (registered trademark) " (manufactured by Japan Polyethylene Corporation).

The component (A) is also required to have the form of a non-woven fabric. The term "non-woven fabric" refers to a cloth-like material produced by binding fibers together into the form of a thin-layer fiber assembly (web) by a chemical or mechanical method (e.g., adhesion, fusion, tangling) without spinning, weaving or knitting the fibers. When the component (A) is used in the form of a non-woven fabric, it becomes possible to provide a fiber-reinforced composite material having excellent rigidity, strength and vibration damping performance. When a film is used in place of a non-woven fabric, although the vibration damping performance of the fiber-reinforced composite material is improved, the rigidity of the thermoplastic elastomer and/or the polyolefin is decreased compared with that of a matrix resin in the reinforcing fibers and therefore the rigidity and the strength of the resultant fiber-reinforced composite material are greatly decreased. When a non-woven fabric is used as the component (A), a layer of the non-woven fabric is impregnated with a first epoxy resin composition, which is the component (B) detailed below, and therefore the rigidity of the non-woven fabric layer is increased, whereby the vibration damping performance of the fiber-reinforced composite material can be improved while preventing the decrease in rigidity and strength of the fiber-reinforced composite material. If a film is adhered in place of the non-woven fabric onto a layer comprising the components (B) and (C), the film covers the surface of the resultant prepreg completely and therefore the tackiness of the prepreg is lost. If particles are used in place of the non-woven fabric, although the vibration damping performance of the resultant fiber-reinforced composite material is improved, the particles, which have lower rigidity compared with that of a matrix resin in the reinforcing fibers, penetrate into the inside of reinforcing fiber bundles, which may result in the deterioration in rigidity or strength of the fiber-reinforced composite material. When the component (A) has the form of a non-woven fabric, the penetration of the component (A) into the inside of the reinforcing fiber bundles can be prevented and the decrease in rigidity and strength of the fiber-reinforced composite material can also be prevented. If particles are added to the epoxy resin composition, the viscosity of the resin composition is increased and therefore the amount of the particles to be added is limited. If the amount of the particles to be added is limited to a small amount, it is often difficult to achieve high vibration damping performance.

Examples of the component (A) include: a non-woven fabric comprising a thermoplastic elastomer, such as "Straflex (registered trademark) " (manufactured by Idemitsu Unitech Co., Ltd.) and "Kuraflex (registered trademark)" (manufactured by Kuraray Co., Ltd.); and a polyolefin non-woven fabric, such as "Stratec (registered trademark)" RN2020 and RN2050 (manufactured by Idemitsu Unitech Co., Ltd.), "Toraymicron (registered trademark)" EM02010 and EM05010 (manufactured by Toray Industries Inc.) and "Straflex (registered trademark)" UN5050 (manufactured by Idemitsu Unitech Co., Ltd.).

It is also required that the thermoplastic elastomer and/or the polyolefin of the component (A) and the first epoxy resin composition of the component (B) are incompatible with each other. If the thermoplastic elastomer and/or the polyolefin of the component (A) and the first epoxy resin composition of the component (B) are compatible with each other, the rigidity, the strength and the glass transition temperature of the resultant fiber-reinforced composite material are decreased and the effect of improving vibration damping performance is also decreased.

A fact that the components (A) and (B) are incompatible with each other can be confirmed by a glass transition temperature that is obtained from a storage modulus curve in the measurement of a dynamic viscoelasticity of a cured product of a resin composition comprising the components (A) and (B). That is, the glass transition temperatures of a cured product of a resin composition comprising the components (A) and (B), a plate-like molding comprising only the component (A) and a cured resin produced by curing only the component (B) are measured by a dynamic viscoelasticity measurement. When the components (A) and (B) are incompatible with each other, the glass transition temperature of the cured product of the resin composition comprising the components (A) and (B) is observed at the same temperature as the glass transition temperatures of the plate-like molding comprising only the component (A) and the cured resin produced by curing only the component (B). The term "same temperature" as used herein means that the difference between glass transition temperatures falls within the range from -3 to 3°C.

The production of a cured product of the resin composition comprising the components (A) and (B) is carried out in the following manner. The component (A) is granulated by freeze-pulverization, the pulverized component (A) is kneaded with the component (B) to produce a resin composition, and then the resin composition is defoamed in vacuo. Subsequently, the resin composition is injected into a mold that is so set as to produce a molded product having a thickness of 2 mm by means of a 2 mm-thick spacer made of "Teflon (registered trademark)" arranged therein and then cured under conditions that enable the complete curing of the component (B), thereby producing a plate-like cured product having no void formed therein. The term "conditions that enable the complete curing of the component (B)" as used herein means that no residual heat generation is observed when a cured resin produced by curing the component (B) is subjected to a differential scanning calorimetric measurement in a temperature range from room temperature to 250°C.

The plate-like molding comprising only the component (A) can be produced by introducing the component (A) into a 2 mm-thick stainless steel mold and performing press molding at a pressure of 50 kg/cm$^2$ for 5 minutes.

The production of the cured resin from the component (B) is carried out in the following manner. The component (B) is defoamed in vacuo, and then the resultant product is cured in a mold that is so set as to form a molded product having a thickness of 2 mm by means of a 2 mm-thick spacer made of "Teflon (registered trademark)" arranged therein under the conditions under which the component (B) can be cured completely. In this manner, a plate-like cured product having no void formed therein can be produced.

The component (A) preferably has a fabric weight of 5 to 100 g/m$^2$, more preferably 10 to 50 g/m$^2$. If the fabric weight of the component (A) is less than 5 g/m$^2$, although the rigidity and the strength of the resultant fiber-reinforced composite material are excellent, the vibration damping performance of the fiber-reinforced composite material tends to be hardly improved. Further, if the fabric weight of the component (A) is less than 5 g/m$^2$, the deformation or breakage of the prepreg often occur by the action of the tensile force applied during handling, and therefore the prepreg is difficult to handle. On the other hand, if the fabric weight of the component (A) exceeds 100 g/m$^2$, it is difficult to impregnate the inside of the non-woven fabric with the matrix resin and therefore voids are often formed in the fiber-reinforced composite material. Therefore, although the vibration damping performance of the resultant fiber-reinforced composite material is excellent, the rigidity and the strength of the resultant fiber-reinforced composite material tend to be deteriorated. Further, if the fabric weight of the component (A) exceeds 100 g/m$^2$, fibers are filled densely and therefore the rigidity of a layer containing the component (A) is decreased. As a result, the rigidity and the strength of the resultant fiber-reinforced composite material tend to be decreased. The fabric weight of the component (A) can be measured by a method described in JIS L1906 (2005).

It is preferred that the glass transition temperature of the thermoplastic elastomer to be used for the component (A) does not fall within the range from -10°C to 100°C exclusive. If the glass transition temperature falls in this temperature range, when the fiber-reinforced composite material is applied to a golf shaft, a tennis racket, a fishing rod, a skis or the like, the strength of these articles may be altered depending on the environments in which these articles are used, which is not desirable.

The polyolefin constituting the component (A) preferably has a specific gravity of 0.95 or less. If the specific gravity is larger than 0.95, the weight of the fiber-reinforced composite material is often increased, which is not desirable. The specific gravity is a value that is measured in accordance with a water displacement method described in JIS K7112 (2005) .

The first epoxy resin composition of the component (B) is not particularly limited, and comprises an epoxy resin and a curing agent and may optionally contain a curing catalyst and the like.

Examples of the epoxy resin to be used in the component (B) include a bisphenol type epoxy resin, an amine type epoxy resin, a phenol novolac type epoxy resin, a cresol novolac type epoxy resin, a resorcinol type epoxy resin, a phenol aralkyl type epoxy resin, a dicyclopentadiene type epoxy resin, an epoxy resin having a biphenyl skeleton, an isocyanate-modified epoxy resin and a urethane-modified epoxy resin. At least one component selected from these components can be used.

The term "bisphenol type epoxy resin" as used herein refers to an epoxy resin produced by glycidylating two phenolic hydroxy groups in a bisphenol compound, and includes a bisphenol A type epoxy resin, a bisphenol F type epoxy resin, a bisphenol AD type epoxy resin, a bisphenol S type epoxy resin, or a halogen substituted product, an alkyl substituted product or a hydrogenated product thereof. Besides a monomer, a polymeric substance having multiple repeating units may also be used suitably.

Examples of commercially available products of the bisphenol A type epoxy resin include "jER (registered trademark)" 825, "jER (registered trademark)" 828, "jER (registered trademark)" 834, "jER (registered trademark)" 1001, "jER (registered trademark)" 1002, "jER (registered trademark)" 1003, "jER (registered trademark)" 1003F, "jER (registered trademark)" 1004, "jER (registered trademark)" 1004AF, "jER (registered trademark)" 1005F, "jER (registered trademark)" 1006FS, "jER (registered trademark)" 1007, "jER (registered trademark)" 1009 and "jER (registered trademark)" 1010 (which are manufactured by Mitsubishi Chemical Corporation). Examples of commercially available products of the brominated bisphenol A type epoxy resin include "jER (registered trademark) " 505, "jER (registered trademark) " 5050, "jER (registered trademark)" 5051, "jER (registered trademark)" 5054 and "jER (registered trademark)" 5057 (which are manufactured by Mitsubishi Chemical Corporation). Examples of commercially available products of the hydrogenated bisphenol A type epoxy resin include ST5080, ST4000D, ST4100D and ST5100 (which are manufactured by Nippon Steel Chemical Co., Ltd.).

Examples of commercially available products of the bisphenol F type epoxy resin include "jER (registered trademark)" 806, "jER (registered trademark)" 807, "jER (registered trademark)" 4002P, "jER (registered trademark)" 4004P, "jER (registered trademark)" 4007P, "jER (registered trademark) " 4009P and "jER (registered trademark) " 4010P (which are manufactured by Mitsubishi Chemical Corporation), and "Epotohto (registered trademark)" YDF2001 and "Epotohto (registered trademark)" YDF2004 (which are manufactured by Nippon Steel Chemical Co., Ltd.). An example of commercially available product of the tetramethylbisphenol F type epoxy resin is YSLV-80XY (manufactured by Nippon Steel Chemical Co., Ltd.).

An example of the bisphenol S type epoxy resin is "Epiclon (registered trademark)" EXA-154 (manufactured by DIC Corporation).

Among these compounds, a bisphenol A type epoxy resin or a bisphenol F type epoxy resin is preferred, since a good balance among modulus, toughness and heat resistance can be achieved.

Examples of the amine type epoxy resin include tetraglycidyl diaminodiphenylmethane, triglycidyl aminophenol, triglycidyl aminocresol, tetraglycidyl xylylene diamine, and halogen-substituted products, alkynol-substituted products, hydrogenated products thereof and so on.

Examples of commercially available products of tetraglycidyl diaminodiphenylmethane include "Sumiepoxy (registered trademark)" ELM434 (manufactured by Sumitomo Chemical Co., Ltd.), YH434L (manufactured by Nippon Steel Chemical Co., Ltd.), "jER (registered trademark)" 604 (manufactured by Mitsubishi Chemical Corporation), and "Araldite (registered trademark)" MY720 and MY721 (which are manufactured by Huntsman Advanced Materials). Examples of commercially available products of triglycidyl aminophenol or triglycidyl aminocresol include "Sumiepoxy (registered trademark)" ELM100 (manufactured by Sumitomo Chemical Co., Ltd.), "Araldite (registered trademark)" MY0500, MY0510 and MY0600 (which are manufactured by Huntsman Advanced Materials) and "jER (registered trademark)" 630 (manufactured by Mitsubishi Chemical Corporation). Examples of commercially available products of tetraglycidyl xylylenediamine and hydrogenated products thereof include TETRAD-X and TETRAD-C (which are manufactured by Mitsubishi Gas Chemical Company, Inc.).

Examples of commercially available products of the phenol novolac type epoxy resin include "jER (registered trademark)" 152 and "jER (registered trademark)" 154 (which are manufactured by Mitsubishi Chemical Corporation), and "Epiclon (registered trademark)" N-740, N-770 and N-775 (which are manufactured by DIC Corporation).

Examples of commercially available products of the cresol novolac type epoxy resin include "Epiclon (registered trademark)" N-660, N-665, N-670, N-673 and N-695 (which are manufactured by DIC Corporation), and EOCN-1020, EOCN-102S and EOCN-104S (which are manufactured by Nippon Kayaku Co., Ltd.) .

An example of commercially available product of the resorcinol type epoxy resin is "Denacol (registered trademark) " EX-201 (manufactured by Nagase chemteX Corporation).

Examples of commercially available products of the dicyclopentadiene type epoxy resin include "Epiclon (registered trademark)" HP7200, HP7200L, HP7200H and HP7200HH (which are manufactured by DIC Corporation), "Tactix (registered trademark) " 558 (manufactured by Huntsman Advanced Material), and XD-1000-1L and XD-1000-2L (which are manufactured by Nippon Kayaku Co., Ltd.).

Examples of commercially available products of the epoxy resin having a biphenyl skeleton include "jER (registered trademark)" YX4000H, YX4000 and YL6616 (which are manufactured by Mitsubishi Chemical Corporation), and NC-3000 (manufactured by Nippon Kayaku Co., Ltd.).

Examples of commercially available products of the isocyanate- and urethane-modified epoxy resins include AER4152 (manufactured by Asahi Kasei Epoxy Co., Ltd.) and ACR1348 (manufactured by ADEKA Corporation) each of which has an oxazolidone ring.

An epoxy resin having an epoxy equivalent of 800 to 5500 is used preferably, since the adhesion between the component (A) and the non-woven fabric can be increased and excellent vibration damping performance can be imparted.

More preferably, the epoxy resin has an epoxy equivalent of 800 to 2500. If the epoxy equivalent is smaller than 800, the effect of improving adhesion is often deteriorated. If the epoxy equivalent is larger than 5500, the viscosity of the resultant epoxy resin composition is increased and therefore it is often difficult to produce a prepreg. A bisphenol type epoxy resin having an epoxy equivalent of 800 to 5500 is also preferred from the viewpoint of the balance between vibration damping performance and rigidity. A bisphenol A type epoxy resin and a bisphenol F type epoxy resin each having an epoxy equivalent of 800 to 5500 are more preferred.

The curing agent to be used in the component (B) is a compound capable of curing the epoxy resin. The curing agent is not particularly limited, and a compound selected from dicyandiamide and derivatives thereof and diaminodiphenyl sulfone is preferably used, since these compounds have good storage stability. In addition, amines such as aromatic amines and alicyclic amines, acid anhydrides, polyaminoamides, organic acid hydrazides and isocyanates can also be used.

Examples of commercially available products of the dicyandiamide include DICY-7 and DICY-15 (which are manufactured by Mitsubishi Chemical Corporation).

The total amount of the curing agent is preferably such an amount that the amount of an active hydrogen group is 0.6 to 1.2 equivalents, more preferably 0.7 to 1.0 equivalent, relative to 1 equivalent of an epoxy group in all of the epoxy resin components. The term "active hydrogen group" as used herein refers to a functional group that can react with an epoxy group. If the amount of the active hydrogen group is less than 0.6 equivalent, the reaction rate, the heat resistance and the modulus of a cured resin are often decreased, resulting in the decrease in the glass transition temperature and strength of the resultant fiber-reinforced composite material. If the amount of the active hydrogen group exceeds 1.2 equivalents, although the reaction rate, the glass transition temperature and the modulus of the cured product are satisfactory, the plastic deformation ability is often deteriorated, resulting the decrease in impact resistance of the resultant fiber-reinforced composite material.

As one element to be contained in the component (B), a curing catalyst for the epoxy resin may also be used. Examples of the curing catalyst include a urea compound, a tertiary amine or a salt thereof, an imidazole or a salt thereof, and a Lewis or Bronsted acid or a salt thereof. Among these compounds, a urea compound is preferably used, from the viewpoint of the balance between storage stability and the catalytic ability.

Examples of the urea compound include N,N-dimethyl-N'-(3,4-dichlorophenyl)urea, toluene bis(dimethylurea), 4,4'-methylene bis(phenyldimethylurea) and 3-phenyl-1,1-dimethylurea. Examples of commercially available products of the urea compound include DCMU99 (manufactured by Hodogaya Chemical Co., Ltd.), and Omicure24, Omicure52 and Omicure94 (which are manufactured by Emerald Performance Materials, LLC).

The amount of the urea compound to be added is preferably 1 to 4 parts by mass, more preferably 1.5 to 3 parts by mass relative to 100 parts by mass of the total amount of the epoxy resin components . If the amount of the urea compound to be added is less than 1 part by mass, the reaction cannot proceed satisfactorily and the modulus and the heat resistance of a cured resin are often insufficient. If the amount of the urea compound to be added exceeds 4 parts by mass, the self-polymerization reaction of the epoxy resin inhibits the reaction between the epoxy resin and the curing agent, leading to the deterioration in toughness of the cured resin or the decrease in modulus of the cured resin.

In the component (B), any thermoplastic resin other than the component (A) may be added, as long as the effect of the present invention is not deteriorated. Examples of the thermoplastic resin include a thermoplastic resin that is soluble in an epoxy resin and organic particles such as rubber particles and thermoplastic resin particles. As the thermoplastic resin that is soluble in an epoxy resin, a thermoplastic resin having a hydrogen-bonding functional group which is expected to have an effect of improving the adhesion between a resin and a reinforcing fiber is preferably used. Examples of the thermoplastic resin which is soluble in an epoxy resin and has a hydrogen-bonding functional group include a thermoplastic resin having an alcoholic hydroxy group, a thermoplastic resin having an amide bond, and a thermoplastic resin having a sulfonyl group.

Examples of the thermoplastic resin having an alcoholic hydroxy group include a polyvinyl acetal resin such as polyvinyl formal and polyvinyl butyral, a polyvinyl alcohol and a phenoxy resin. Examples of the thermoplastic resin having an amide bond include polyamide, polyimide and polyvinyl pyrrolidone. An example of the thermoplastic resin having a sulfonyl group is polysulfone. The polyamide, the polyimide and the polysulfone may have a functional group such as an ether bond and a carbonyl group in the main chain thereof. The polyamide may have a substituent on a nitrogen atom in the amide group.

Examples of commercially available products of the thermoplastic resin soluble in an epoxy resin and having a hydrogen-bonding functional group include: "Denkabutyral and "Denkaformal (registered trademarks)" (manufactured by Denki Kagaku Kogyo Kabushiki Kaisha) and "Vinylec (registered trademark)" (manufactured by JNC Corporation) which are polyvinyl acetal resins; "UCAR (registered trademark)" PKHP (manufactured by Union Carbide Corporation) which is a phenoxy resin; "Macromelt (registered trademark)" (manufactured by Henkel-Hakusui Corporation) and "Amilan (registered trademark)" CM4000 (manufactured by Toray Industries Inc.) which are polyamide resins; "Ultem (registered trademark)" (manufactured by General Electric Co., Ltd.) and "Matrimid (registered trademark)" 5218 (manufactured by Ciba Inc.) which are polyimides; "Sumikaexcel (registered trademark)" (manufactured by Sumitomo Chemical Co., Ltd.) and "UDEL (registered trademark)" (manufactured by Solvay Advanced Polymers Kabushiki Kaisha) which are polysulfones; and "Luviskol (registered trademark)" (manufactured by BASF Japan Ltd.) which is polyvinyl pyrrolidone.

The acrylic resin has high incompatibility with an epoxy resin, and therefore can be used suitably for controlling viscoelasticity. Examples of commercially available products of the acrylic resin include "Dianal (registered trademark)" BR series (manufactured by Mitsubishi Rayon Co., Ltd.), "Matsumoto Microsphere (registered trademark)" M, M100 and M500 (manufactured by Matsumoto Yushi-Seiyaku Co., Ltd.), and "Nanostrength (registered trademark)" E40F, M22N and M52N (manufactured by Arkema).

It is also possible to add rubber particles. As for the rubber particles, crosslinked rubber particles and core-shell rubber particles produced by the graft polymerization of different polymers on the surfaces of crosslinked rubber particles are preferably used, from the viewpoint of handling properties and the like.

Examples of commercially available products of the crosslinked rubber particles include FX501P (manufactured by Japan Synthetic Rubber Corporation) which comprises a crosslinked product of a carboxyl-modified butadiene-acrylonitrile copolymer, and CX-MN series (manufactured by Nippon Shokubai Co., Ltd.) and YR-500 series (Nippon Steel Chemical Co., Ltd.) each of which comprises acrylic rubber microparticles.

Examples of commercially available products of the core-shell rubber particles include "Paraloid (registered trademark)" EXL-2655 (manufactured by Kureha Corporation) which comprises a butadiene-alkyl methacrylate-styrene copolymer, "Staphyloid (registered trademark)" AC-3355 and TR-2122 (manufactured by Takeda Pharmaceutical Co., Ltd.) each of which comprises an acrylic acid ester-methacrylic acid ester copolymer, "PARALOID (registered trademark)" EXL-2611 and EXL-3387 (manufactured by Rohm & Haas) each of which comprises a butyl acrylate-methyl methacrylate copolymer, and "Kane Ace (registered trademark)" MX series (manufactured by Kaneka Corporation).

As for the thermoplastic resin particles, polyamide particles and polyimide particles are preferably used. Examples of commercially available products of the polyamide particles include SP-500 (manufactured by Toray Industries Inc.) and "Orgasol (registered trademark)" (manufactured by Arkema) .

As the component (C), a reinforcing fiber is used. The reinforcing fiber is not particularly limited, and a glass fiber, a carbon fiber, an aramid fiber, a boron fiber, an alumina fiber, a silicon carbide fiber or the like can be used. At least two of these fibers may be used in a mixed form. Among these fibers, a carbon fiber is preferably used, since a fiber-reinforced composite material having a light weight and high rigidity can be produced.

Among carbon fibers, a carbon fiber having a tensile modulus of 230 to 550 GPa is preferred, since a fiber-reinforced composite material having a lighter weight and higher rigidity and also having excellent vibration damping performance can be produced. If the tensile modulus is less than 230 GPa, the rigidity and the vibration damping performance of the resultant fiber-reinforced composite material tend to be decreased. If the tensile modulus exceeds 550 GPa, the adhesion property between the carbon fiber and the epoxy resin tends to be decreased. When the adhesion property between the carbon fiber and the epoxy resin is decreased, although the vibration damping performance of the resultant fiber-reinforced composite material may be improved through the energy conversion caused by the frictional heat generated between the carbon fiber and the epoxy resin, the strength of the resultant fiber-reinforced composite material may be decreased, which is not desirable. From the viewpoint of the balance between the mechanical properties and the vibration damping performance of the resultant fiber-reinforced composite material, a carbon fiber having a tensile modulus of 230 to 300 GPa is used more preferably.

The form of the reinforcing fiber is not particularly limited. For example, a long fiber which is stretched and arranged in one direction, a tow, a fabric, a mat, a knit, a braid, and short fibers which are chopped in lengths of less than 10 mm can be used. The term "long fiber" as used herein refers to substantially continuous single fibers or fiber bundles which are 10 mm or more in length. The term "short fibers" as used herein refer to a fiber bundle comprising fibers that are cut into lengths of shorter than 10 mm. Particularly in the use applications for which high specific strength and high specific modulus are required, such a form that a reinforcing fiber bundle is stretched and arranged in one direction is most suitable. From the viewpoint of ease of handling, a cloth-like (fabric-like) form is also suitable for the present invention.

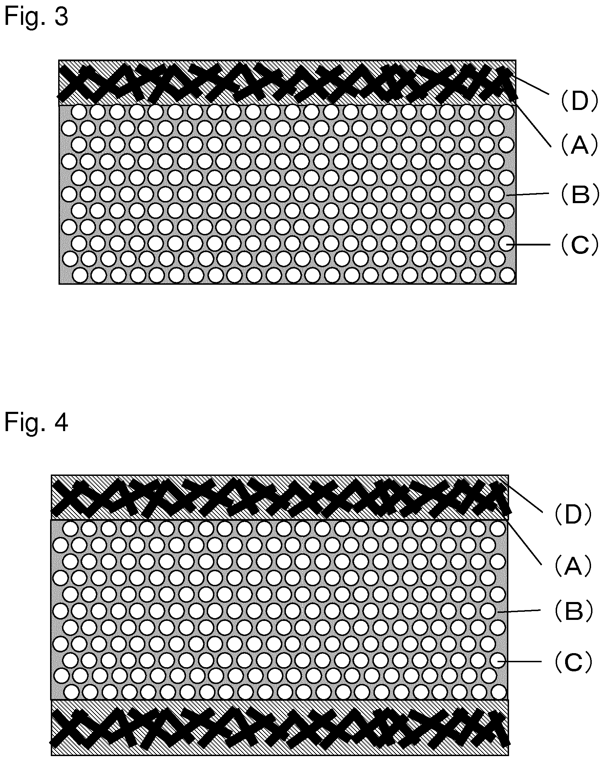

The prepreg according to the present invention may additionally contain the component (D), as illustrated in Fig. 3 or Fig. 4. The component (D) is a second epoxy resin composition which is incompatible with the component (A) herein components (A) and (D) being incompatible means that the glass transition temperature of the cured product of the resin composition comprising the components (A) and (D) is observed at the same temperature as the glass transition temperatures of the plate-like molding comprising only the component (A) and the cured resin produced by curing only the component (D) as measured by a dynamic viscoelasticity measurement from -70 to 250°C at a temperature rise rate of 5°C/min. In this aspect, it is preferred that the component (A) is arranged on one surface or both surfaces of the layer comprising the components (B) and (C) and the component (A) is arranged in the state that the component (A) is contained in the component (D). When the component (A) is in the state in which the component (A) is contained in the component (D), the formation of voids, which are formed during the lamination and curing of the prepreg to produce the fiber-reinforced composite material, can be prevented. The component (D) is not particularly limited, and any epoxy resin composition may be used. The component (D) comprises an epoxy resin and a curing agent, and may contain a curing catalyst or the like, if necessary. As for the epoxy resin, the curing agent, the curing catalyst and so on in the component (D), those components exemplified for the component (B) can be used. The component (D) (the second epoxy resin composition) may be different from the component (B) (the first epoxy resin composition), but is preferably the same as the component (B). The term "same" as used herein means that the types of the epoxy resin, the curing agent and the curing catalyst are same as those constituting the component (B) and the difference in the content of each of the components is within 5 mass%.

It is preferred that the mass of the component (D) to be impregnated per unit area of the component (A) is 95 to 130% of the value d which is determined in accordance with the formula (1) shown below. In this aspect, the resultant fiber-reinforced composite material contains a layer comprising a cured product of the components (A) and (D) and arranged between layers each comprising a cured product of the components (B) and (C) in the laminate comprising the layer. In formula (1), the term "β/3" represents the thickness of the component (A) in the resultant fiber-reinforced composite material. The non-woven fabric, which corresponds to the component (A), is compressed during molding, and therefore the thickness of the non-woven fabric in the fiber-reinforced composite material is about 1/3 of the thickness of the non-woven fabric in the prepreg. In formula (1), the term "A/α" represents the thickness corresponding to a proportion that the fiber constituting the non-woven fabric occupies in the non-woven fabric. That is, the term "β/3 - A/α" represents the thickness corresponding to the proportion occupied by space among fibers of the non-woven fabric in the resultant fiber-reinforced composite material. Therefore, the term "d" in formula (1) represents the mass, per unit area, of the component (D) required for tightly filling the space among the fibers of the component (A) with a cured product of the component (D) in the resultant fiber-reinforced composite material. In this manner, the present inventors found that an excellent fiber-reinforced composite material can be produced by determining the mass of the component (D) to be impregnated per unit area of the component (A) in accordance with formula (1) in the production of the prepreg.

If the mass of the component (D) to be impregnated per unit area of the component (A) is less than 95% of d, voids are formed in the resultant fiber-reinforced composite material and therefore the rigidity and the strength of the fiber-reinforced composite material tend to be decreased. If the mass of the component (D) to be impregnated per unit area of the component (A) exceeds 130% of d, the vibration damping performance of the resultant fiber-reinforced composite material tends to be decreased.

$$d = (β/3 - A/α) \cdot γ \qquad (1)$$

A: the fabric weight of the component (A) $(g/m^2)$
α: the specific gravity of a resin constituting the component (A) $(g/cm^3)$
β: the thickness of the component (A) $(\mu m)$
γ: the specific gravity of a cured product of the component (D) $(g/cm^3)$

The thickness of the component (A) is a value determined by the method described in JIS L1906 (2005) . The fabric weight of the component (A) is a value determined by the method described in JIS L1906 (2005) . The specific gravity of a resin constituting the component (A) and the specific gravity of a cured product of the component (D) are values determined by the water displacement method described in JIS K7112 (2005). The thickness of the component (A) is a value determined by the method described in JIS L1906 (2005).

It is preferred that the glass transition temperature of a cured resin produced by curing the component (B) is 100°C or higher. If the glass transition temperature of the cured resin is lower than 100°C, the warpage or strain of the fiber-reinforced composite material may occur during the molding thereof and the deformation of the fiber-reinforced composite material may also occur upon the use thereof under high-temperature environments. The curing of the component (B) can be carried out by, for example, heating at 130°C for 90 minutes.

It is also preferred that the glass transition temperature of a cured resin produced by curing the component (D) is 100°C or higher. If the glass transition temperature of the cured product is lower than 100°C, the warpage or strain of the fiber-reinforced composite material may occur during the molding thereof and the deformation of the fiber-reinforced composite material may also occur upon the use thereof under high-temperature environments. The curing of the component (D) can be carried out by, for example, heating at 130°C for 90 minutes . The glass transition temperature of the cured resin of the component (D) can be determined in the same manner as in the determination of the glass transition temperature of the cured resin of the component (B). That is, the glass transition temperature can be determined by defoaming the component (D) in vacuo, and then measuring the dynamic viscoelasticity of a cured resin produced by curing the defoamed product in a mold that is so set as to form a molded product having a thickness of 2 mm by means of a 2 mm-thick spacer made of "Teflon (registered trademark)" arranged therein.

The process for producing the prepreg according to the present invention is not particularly limited, and the prepreg can be produced suitably by either of the methods (1) and (2) mentioned below.

(1) A process for producing the prepreg, comprising the steps of: impregnating the component (C) with the component (B) to produce a prepreg precursor; and attaching the component (A) onto the prepreg precursor.

(2) A process for producing the prepreg, comprising the following steps (I) to (III):

(I) impregnating the component (A) with the component (D) to produce a non-woven fabric sheet;
(II) impregnating the component (C) with the component (B) to produce a prepreg precursor; and
(III) attaching the non-woven fabric sheet produced in step (I) onto the prepreg precursor produced in step (II).

Examples of the method for impregnating the component (C) with the component (B) include a wet method in which the epoxy resin composition is dissolved in a solvent such as methyl ethyl ketone or methanol to reduce the viscosity of the epoxy resin composition and then the impregnation is performed and a hot-melt method (a dry method) in which the viscosity of the epoxy resin composition is reduced by heating and then the impregnation is performed.

An example of the wet method is a method in which the reinforcing fiber is immersed in a solution of the epoxy resin composition and then drawn up from the solution and the solvent is evaporated from the reinforcing fiber using an oven or the like. An example of the hot-melt method is: a method in which a fiber base comprising the reinforcing fiber is directly impregnated with the epoxy resin composition of which the viscosity has been reduced by heating; or a method in which a film is produced by coating a release paper or the like with the epoxy resin composition, the film is superposed on both surfaces or one surface of the fiber base comprising the reinforcing fiber, and then the resultant laminate is pressurized under heating, thereby impregnating the fiber base comprising the reinforcing fiber with a resin. The hot-melt method is preferred, since substantially no solvent remains in the prepreg.

It is preferred that the prepreg precursor produced by impregnating the component (C) with the component (B) has a reinforcing fiber content per unit area of 50 to 200 $g/m^2$. If the reinforcing fiber content is less than 50 $g/m^2$, it is required to increase the number of plies to be laminated for achieving a desired thickness in the formation of the fiber-reinforced composite material and therefore the work operation may become complicated. On the other hand, if the reinforcing fiber content exceeds 200 $g/m^2$, the draping property of the prepreg tends to be deteriorated. The fiber mass content preferably falls within the range from 50 to 90 mass%, more preferably from 55 to 85 mass%, still more preferably from 60 to 80 mass%. The term "fiber mass content" as used herein refers to the ratio of the mass of the reinforcing fiber in the component (C) relative to the total mass of the prepreg precursor. If the fiber mass content is less than 50 mass%, the amount of the resin to be added is too large and, therefore, it becomes impossible to achieve the advantages of the fiber-reinforced composite material having excellent specific strength and specific modulus or the amount of heat generated upon curing becomes too high during the production of the fiber-reinforced composite material. If the fiber mass content exceeds 90 mass%, the impregnation of the resin often fails and therefore many voids may be formed in the resultant fiber-reinforced composite material.

As the method for impregnating the component (A) with the component (D), the same method as that employed for the impregnation of the component (C) with the component (B) can be employed. When the wet method is employed for the impregnation, it is preferred to use a solvent in which the component (A) cannot be dissolved for the purpose of keeping the shape of the component (A). When the hot-melt method is employed for the impregnation, it is preferred to impregnate the component (A) at a temperature equal to or lower than the melting point of the component (A) for the purpose of keeping the shape of the component (A).

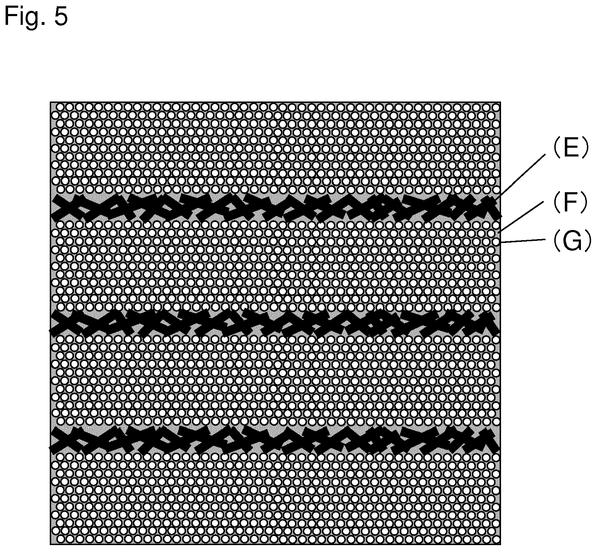

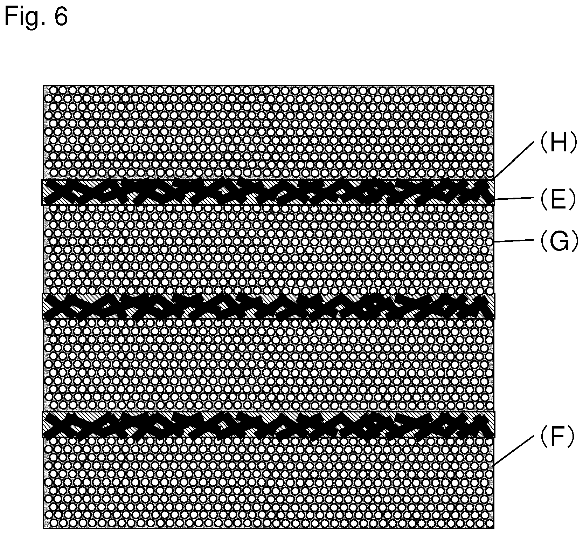

The fiber-reinforced composite material according to the present invention is described below. The fiber-reinforced composite material according to the present invention comprises the components (E) to (G) mentioned below, wherein multiple plies of a layer comprising the components (F) and (G) are laminated together and the component (E) is arranged between every adjacent two of the multiple plies of the layer comprising the components (F) and (G). The cross-sectional views of preferred aspects of the fiber-reinforced composite material are illustrated in Figs. 5 and 6. The term "between every adjacent two of the plies" refers to regions which are located between every adjacent two of the multiple plies of the layer comprising the components (F) and (G) and do not contain the component (G):

(E) a non-woven fabric comprising a thermoplastic elastomer and/or a polyolefin which has a value of $\tan\delta$ of 0.06 or more at 10°C in a viscoelasticity measurement in which a plate-like molding comprising only component (E) is measured using a dynamic viscoelasticity measurement from -70 to 250°C at a temperature rise rate of 5°C/min, and is incompatible with a third epoxy resin composition , herein components (E) and the third epoxy resin composition being incompatible means that the glass transition temperature of the cured product of the resin composition comprising the component (E) and the third epoxy resin composition is observed at the same temperature as the glass transition temperatures of the plate-like molding comprising only the component (E) and the cured resin produced by curing only the third epoxy resin composition as measured by a dynamic viscoelasticity measurement from -70 to 250°C at a temperature rise rate of 5°C/min;
(F) a cured resin of the third epoxy resin composition; and
(G) a reinforcing fiber.

The component (E) is required to have a value of tan$\delta$ at 10°C of 0.06 or more, preferably 0.07 or more, still more preferably 0.09 or more, in a viscoelasticity measurement. If the value of tan$\delta$ is less than 0.06, the vibration damping performance is insufficient. The value of tan$\delta$ at 10°C can be determined in the same manner as in the measurement of the value of tan$\delta$ at 10°C of the component (A). That is, the value of tan$\delta$ at 10°C can be determined by measuring the dynamic viscoelasticity of a plate-like molding produced by placing the component (E) in a mold made of stainless steel and then press-molding the component (E) in the mold.

The component (E) to be used in the present invention is required to have the form of a non-woven fabric. When the component (E) is used in the form of a non-woven fabric, a fiber-reinforced composite material having excellent rigidity, strength and vibration damping performance can be produced. If the component (E) is used in the form of a film in place of a non-woven fabric, although the vibration damping performance of the fiber-reinforced composite material is improved, the rigidity of the thermoplastic elastomer and/or the polyolefin is lower than that of the matrix resin in the reinforcing fiber and, therefore, the rigidity and the strength of the fiber-reinforced composite material are greatly decreased. When a non-woven fabric is used as the component (E), a layer of the non-woven fabric can be impregnated with the below-mentioned third epoxy resin composition, which is the component (F), to improve the rigidity of the non-woven fabric layer. Thus, it becomes possible to improve the vibration damping performance of the fiber-reinforced composite material while preventing the decrease in rigidity and strength of the fiber-reinforced composite material. If particles are used in place of a non-woven fabric, although the vibration damping performance of the fiber-reinforced composite material is improved, the particles, which have lower rigidity compared with that of the matrix resin in the reinforcing fiber, penetrate even into the inside of the reinforcing fiber bundle and, therefore, the rigidity or strength of the fiber-reinforced composite material may be decreased. When the component (E) is used in the form of a non-woven fabric, the penetration of the component (E) into the inside of the reinforcing fiber bundle can be prevented and, therefore, the decrease in rigidity and strength of the fiber-reinforced composite material can also be prevented. Further, if particles are added to the epoxy resin composition upon use, the viscosity of the resin composition is increased and, therefore, the amount of the particles to be added is limited. If the amount of particles to be added is limited to a small amount, it is difficult to achieve high vibration damping performance of the fiber-reinforced composite material.

Further, the thermoplastic elastomer and/or the polyolefin to be used as the component (E) is also required to be incompatible with the third epoxy resin composition. If the thermoplastic elastomer is compatible with the third epoxy resin composition, the rigidity, strength and the glass transition temperature of the fiber-reinforced composite material are decreased and the effect of vibration damping performance of the fiber-reinforced composite material is insufficient.

The incompatibility between the component (E) and the third epoxy resin composition can be confirmed by a glass transition temperature determined from a storage modulus curve that is produced by carrying out the dynamic viscoelasticity measurement of a cured product of a resin composition comprising the component (E) and the third epoxy resin composition. That is, glass transition temperatures of a cured product of a resin composition comprising the component (E) and the third epoxy resin composition, a plate-like molding comprising only the component (E) and the component (F) are measured by the dynamic viscoelasticity measurement. When the component (E) and the third epoxy resin composition are incompatible with each other (i.e., the component (E) and the third epoxy resin composition do not dissolve in each other), the glass transition temperature of the cured product of the resin composition comprising the component (E) and the third epoxy resin composition is observed at the same temperature as the glass transition temperature of the plate-like molding comprising only the component (E) and the glass transition temperature of the component (F). The term "same temperature" as used herein means that the difference between the glass transition temperatures falls within the range from -3°C to 3°C. The cured product can be produced by the same method as that employed for the production of a cured product from the components (A) and (B).

The cured product of the resin composition comprising the component (E) and the third epoxy resin composition, the plate-like molding comprising the component (E) and the component (F) can be produced by the same methods as those employed for the production of the cured product of the resin composition comprising the components (A) and (B), the plate-like molding comprising only the component (A) and the cured product produced by curing only the component (B). The glass transition temperatures can be determined by carrying out the dynamic viscoelasticity measurement of the plate-like cured product and the plate-like molding, which are produced by the above-mentioned methods, by the above-mentioned method.

It is preferred that the component (E) is contained in an amount of 2 to 20 mass%, more preferably 4 to 10 mass%, in the fiber-reinforced composite material. If the amount is less than 2 mass%, although the rigidity and the strength of the fiber-reinforced composite material are excellent, the vibration damping performance of the fiber-reinforced composite material tends to be decreased. On the other hand, if the amount exceeds 20 mass%, although the vibration damping performance of the resultant fiber-reinforced composite material is excellent, the rigidity and the strength of the resultant fiber-reinforced composite material tend to be decreased.

As the component (E), those materials which are exemplified for the component (A) can be used.

The component (F) is a cured product of the third epoxy resin composition. The third epoxy resin composition comprises an epoxy resin and a curing agent, and may additionally contain a curing catalyst and so on, if necessary.

As the epoxy resin, the curing agent, the curing catalyst and so on, those compounds which are exemplified for the component (B) can be used.

As the component (G), a reinforcing fiber is used. The reinforcing fiber is not particularly limited, and those materials which are exemplified for the component (C) can be used.

The fiber-reinforced composite material according to the present invention may additionally contain the component (H), as illustrated in Fig. 6. The component (H) is a cured product of the fourth epoxy resin composition which is incompatible with the component (E). In this aspect, it is preferred that the component (E) is contained in the component (H). When the component (E) is in the state contained in the component (H), the formation of voids can be prevented during the production of the fiber-reinforced composite material through lamination and curing.

The fourth epoxy resin composition comprises an epoxy resin and a curing agent, and may additionally contain a curing catalyst and so on, if necessary. As the epoxy resin, the curing agent, the curing catalyst and so on in the component (H), those compounds which are exemplified for the component (B) can be used.

The process for producing the fiber-reinforced composite material according to the present invention is not particularly limited, and the fiber-reinforced composite material can be produced by a prepreg laminate molding method, a resin transfer molding method, a resin film infusion method, a hand lay-up method, a sheet molding compound method, a filament winding method, a pultrusion method or the like. Among these methods, a prepreg laminate molding method using the prepreg according to the present invention is preferred, since the resultant fiber-reinforced composite material can have excellent rigidity and strength.

The prepreg laminate molding method is a method in which a prepreg is shaped and/or laminated and then the resin is thermally cured while applying a pressure to the resultant shaped product and/or laminate . As the method for applying heat and the pressure, a press molding method, an autoclave molding method, a bagging molding method, a wrapping tape method, an inner pressure molding method and the like can be employed properly.

The autoclave molding method is a method in which a prepreg is laminated on a tool plate having a predetermined shape, the resultant laminate is covered with a bagging film, and the resultant product is thermally cured by applying a pressure while degassing the inside of the laminate. In the autoclave molding method, the orientation of fibers can be controlled precisely and the formation of voids can be reduced, whereby a molding having excellent mechanical properties and high quality can be produced.

The wrapping tape method is a method in which a prepreg is wound around a core metal such as a mandrel to thereby mold a tubular body made of the fiber-reinforced composite material. The wrapping tape method is suitable for the production of a bar-shaped body such as a golf shaft and a fishing rod. More specifically, a prepreg is wound around a mandrel, a wrapping tape made of a thermoplastic film is then wound around the outside of the prepreg for the purpose of fixing the prepreg and applying a pressure to the prepreg, and the resin is then thermally cured in an oven, and the core metal is then pulled out, thereby producing a tubular body.

The inner pressure molding method is a method in which the molding is carried out by winding a prepreg around an inner-pressure-applying body such as a tube made of a thermoplastic resin to produce a preform, setting the preform in a mold, and introducing a high-pressure gas into the inner-pressure-applying body to apply a pressure and simultaneously heating the mold. This method is employed suitably for the molding of a body having a complicated shape such as a golf shaft, a bat and a tennis or badminton racket.

With respect to the curing temperature and the curing time period to be employed in the molding of the fiber-reinforced composite material in an autoclave, the optimal temperature and the optimal time period vary depending on the types and amounts of the curing agent or the curing catalyst selected. From the viewpoint of heat resistance after curing, it is preferred to carry out the curing at a temperature of 120 to 220°C for 0.5 to 8 hours. The temperature rise rate is preferably 0.1 to 10°C/min. If the temperature rise rate is less than 0.1°C/min., the time required for reaching the desired curing temperature becomes too long and, therefore, the workability is often deteriorated. If the temperature rise rate exceeds 10°C/min., the differences in temperature occur at many parts in the reinforcing fiber and, therefore, it is difficult to produce a homogeneous cured product.

In the molding of the fiber-reinforced composite material, effects such as the improvement in quality of the surface of the resultant molding or the prevention of the formation of voids in the inside of the resultant molding can be achieved easily by increasing or decreasing the pressure.

It is preferred that the loss coefficient of the fiber-reinforced composite material according to the present invention is 130% or more relative to that of a fiber-reinforced composite material comprising the same components as those of the aforementioned fiber-reinforced composite material except that the component (E) is not contained. If the loss coefficient is less than 130%, the effect of improving ball feel or the effect of reducing elbow fatigue tends to be decreased when a golf shaft, a fishing rod, a tennis racket or the like is molded. The term "a fiber-reinforced composite material comprising the same components as those of the aforementioned fiber-reinforced composite material except that the component (E) is not contained" as used herein means that a fiber-reinforced composite material is produced employing the same content ratio and under the same production conditions as those for the fiber-reinforced composite material to be measured, except that the component (E) is not contained, and the resultant fiber-reinforced composite material is used as a sample to be measured on its physical properties. The term "the same content ratio" as used herein means that the difference in content of each of the components is within 5 mass%.

It is also preferred that the 0° flexural strength of the fiber-reinforced composite material according to the present invention is 90% or more of the flexural strength of a fiber-reinforced composite material comprising the same components as those of the aforementioned fiber-reinforced composite material except that the component (E) is not contained. The term "flexural strength" as used herein refers to a value that is calculated in terms of a fiber volume content (Vf) of 60%. The term "fiber volume content" refers to the ratio of the volume of the reinforcing fiber relative to the total volume of the fiber-reinforced composite material. If the flexural strength is less than 90%, strength of a molding such as a golf shaft, a fishing rod or a tennis racket is insufficient and the weight of the molding may be increased when sufficient strength of the molding is to be produced.

It is also preferred that the 0° flexural modulus of the fiber-reinforced composite material according to the present invention is 90% or more of that of a fiber-reinforced composite material comprising the same components as those of the aforementioned fiber-reinforced composite material except that the component (E) is not contained. If the 0° flexural modulus is less than 90%, the rigidity of a molding such as a golf shaft, a fishing rod or a tennis racket is insufficient and the weight of the molding may be increased when sufficient rigidity of the molding is to be achieved.

It is also preferred that the fiber-reinforced composite material according to the present invention has no glass transition temperature in a range from 10 to 100°C. If a glass transition temperature is observed in this temperature range, deformation may occur during the step of coating of the fiber-reinforced composite material or the step of polishing the fiber-reinforced composite material.

The fiber-reinforced composite material produced in the present invention can be used suitably in sport-related applications, general industry-related applications and aerospace-related applications. More specifically, the fiber-reinforced composite material can be used in: sport-related applications, such as a golf shaft, a fishing rod, a tennis or badminton racket, a stick for hockey or the like, a bicycle component, a bicycle frame, a bicycle wheel and ski poles; and general industry-related applications such as a structural material for moving vehicles such as automobiles, ships and rail vehicles, a drive shaft, a plate spring, a windmill blade, a pressure container, a flywheel, a paper-making roller, a roof material, a cable, and a repairing/reinforcing material.

EXAMPLES

Hereinafter, the effect of the present invention will be described in more detail with reference to specific examples. However, the present invention is not limited to the below-mentioned examples.

The components (A) to (E) used in examples and comparative examples are as follows.

(A-1 to A-4) : Polyamide polyether elastomer non-woven fabrics

"UBESTA XPA (registered trademark) " 9048X1 (manufactured by Ube Industries, Ltd..) was transformed into non-woven fabrics. The non-woven fabrics had the following properties: the value of tan$\delta$ at 10°C: 0.09, the glass transition temperature: -38°C, the specific gravity of the resin: 1.02 g/cm$^3$, the fabric weight: (A-1) 10 g/m$^2$, (A-2) 35 g/m$^2$, (A-3) 70 g/m$^2$ and (A-4) 140 g/m$^2$, and the thickness: (A-2) 250 $\mu$m, (A-4) 650 $\mu$m

(A-5, A-6): Polyester polyether elastomer non-woven fabrics

"Hytrel (registered trademark)" 5557 (manufactured by DuPont-Toray Co. Ltd.) was transformed into non-woven fabrics. The non-woven fabrics had the following properties: the value of tan$\delta$ at 10°C: 0.07, the glass transition temperature: -45°C, the specific gravity of the resin: 1.19 g/cm$^3$, the fabric weight: (A-5) 20 g/m$^2$, (A-6) 80 g/m$^2$, and the thickness: (A-6) 480 $\mu$m.

(A-7): A styrene-based block copolymer non-woven fabric

"Kuraflex (registered trademark)" SIS0100 (manufactured by Kuraray Co., Ltd.), the value of tan$\delta$ at 10°C: 0.10, the glass transition temperature: -60°C, the specific gravity of the resin: 0.9 g/cm$^3$, the fabric weight: 100 g/m$^2$, and the thickness: 570 $\mu$m.

(A-8): A polyurethane non-woven fabric

"Kuraflex (registered trademark)" UC0050 (manufactured by Kuraray Co., Ltd.), the value of tan$\delta$ at 10°C: 0.20, the glass transition temperature: -38°C, the fabric weight: 50 g/m$^2$, and the thickness: 300 $\mu$m.

(A-9): A Nylon 12 non-woven fabric

Nylon 12 was transformed into a non-woven fabric. The non-woven fabric has the following properties : the value of tan$\delta$ at 10°C: 0.03, the glass transition temperature: 40°C, the specific gravity of the resin: 1.02 g/cm$^3$, and the fabric weight: 20 g/m$^2$.

(A-10): A polyamide polyether elastomer film

"UBESTA XPA (registered trademark) " 9048X1 (manufactured by Ube Industries, Ltd..) resin pellets were arranged uniformly on a stainless plate having a 30 $\mu$m-thick spacer placed therein, and then subjected to press molding at a temperature of 280°C and a pressure of 50 kg/cm$^2$ for 5 minutes. The film thickness: 30 $\mu$m.

(A-11): Polyamide polyether elastomer particles
"UBESTA XPA (registered trademark) " 9048X1 (manufactured by Ube Industries, Ltd..) was freeze-pulverized. The volume average particle diameter: 20 $\mu$m.
(A-12): A polypropylene non-woven fabric
"Stratec (registered trademark)" RN2015 (manufactured by Idemitsu Unitech Co., Ltd.) : the value of tan$\delta$ at 10°C: 0.075, the glass transition temperature: -3°C, the specific gravity of the resin: 0.9 g/cm$^3$, the fabric weight: 15 g/m$^2$, and the thickness: 160 $\mu$m.
(A-13): A polypropylene non-woven fabric
"Stratec (registered trademark)" RN2050 (manufactured by Idemitsu Unitech Co., Ltd.) : the value of tan$\delta$ at 10°C: 0.075, the glass transition temperature: -3°C, the specific gravity of the resin: 0.9 g/cm$^3$, the fabric weight: 50 g/m$^2$, and the thickness: 320 $\mu$m.
(A-14): A polypropylene non-woven fabric
"Stratec (registered trademark)" RN2070 (manufactured by Idemitsu Unitech Co., Ltd.) : the value of tan$\delta$ at 10°C: 0.075, the glass transition temperature: -3°C, the specific gravity of the resin: 0.9 g/cm$^3$, the fabric weight: 70 g/m$^2$, and the thickness: 420 $\mu$m.
(A-15): A polypropylene non-woven fabric
"Stratec (registered trademark)" RN2250 (manufactured by Idemitsu Unitech Co., Ltd.) : the value of tan$\delta$ at 10°C: 0.075, the glass transition temperature: -3°C, the specific gravity of the resin: 0.9 g/cm$^3$, the fabric weight: 250 g/m$^2$, and the thickness: 900 $\mu$m.
(A-16): A polypropylene non-woven fabric
"Toraymicron (registered trademark)" EM02010 (manufactured by Toray Industries Inc.): the value of tan$\delta$ at 10°C: 0.065, the glass transition temperature: -5°C, the specific gravity of the resin: 0.9 g/cm$^3$, the fabric weight: 20 g/m$^2$, and the thickness: 170 $\mu$m.
(A-17): A maleic-acid-modified polypropylene non-woven fabric
"TVO-150" (manufactured by Japan Vilene Co., Ltd.): the value of tan$\delta$ at 10°C: 0.071, the glass transition temperature: -15°C, the specific gravity of the resin: 0.9 g/cm$^3$, the fabric weight: 20 g/m$^2$, and the thickness: 180 $\mu$m.
(A-18): A polypropylene film
"Stratec (registered trademark)" RN2015 (manufactured by Idemitsu Unitech Co., Ltd.) was arranged on a stainless plate and then subjected to press molding at a temperature of 200°C and a pressure of 50 kg/cm$^2$ for 5 minutes. The film thickness: 100 $\mu$m, and the fabric weight: 15 g/m$^2$.
(A-19): A polyethylene non-woven fabric
"Miperon (registered trademark)" (manufactured by Mitsui Chemicals, Inc.) was transformed into a non-woven fabric: the value of tan$\delta$ at 10°C: 0.050, the fabric weight: 15 g/m$^2$, and the thickness: 170 $\mu$m.
(A-20): A polypropylene non-woven fabric
"Daicel PP (registered trademark)" PT2N1 (manufactured by Daicel Polymers, Ltd.) was transformed into a non-woven fabric: the value of tan$\delta$ at 10°C: 0.076, the fabric weight: 16 g/m$^2$, the specific gravity of the resin: 0.97, and the thickness: 155 $\mu$m.

The components (B), (D), the third epoxy resin and the fourth epoxy resin, are as follows.

<Epoxy resins>

(B-1): A bisphenol-A-type epoxy resin ("jER (registered trademark)" 1001, manufactured by Mitsubishi Chemical Corporation, epoxy equivalent: 475)
(B-2): A bisphenol-A-type epoxy resin ("jER (registered trademark)" 828, manufactured by Mitsubishi Chemical Corporation, epoxy equivalent: 189)
(B-3): A bisphenol-F-type epoxy resin ("Epotohto (registered trademark) " YDF2001, manufactured by Nippon Steel Chemical Co., Ltd., epoxy equivalent: 475)
(B-4): A bisphenol-F-type epoxy resin ("jER (registered trademark)" 807, manufactured by Mitsubishi Chemical Corporation, epoxy equivalent: 170)
(B-5): A phenol-novolac-type epoxy resin ("jER (registered trademark)" 154, manufactured by Mitsubishi Chemical Corporation, epoxy equivalent: 178)
(B-6): A dicyclopentadiene-type epoxy resin ("Epiclon (registered trademark)" HP7200H, manufactured by DIC Corporation, epoxy equivalent: 283)
(B-7): A polyfunctional-amine-type epoxy resin ("Sumiepoxy (registered trademark)" ELM434, manufactured by Sumitomo Chemical Co., Ltd., epoxy equivalent: 120)

(B-8): An epoxy resin having a biphenyl skeleton ("jER (registered trademark)" YX4000, manufactured by Mitsubishi Chemical Corporation, epoxy equivalent: 186)

(B-9): An isocyanate-modified epoxy resin (AER4152, manufactured by Asahi Kasei Epoxy Co., Ltd., epoxy equivalent: 340)

(B-10): A bisphenol-A-type epoxy resin ("jER (registered trademark)" 1004FS, manufactured by Mitsubishi Chemical Corporation, epoxy equivalent: 810)

(B-11): bisphenol-A-type epoxy resin ("jER (registered trademark)" 1007, manufactured by Mitsubishi Chemical Corporation, epoxy equivalent: 1930)

(B-12): A bisphenol-A-type epoxy resin ("jER (registered trademark)" 1010, manufactured by Mitsubishi Chemical Corporation, epoxy equivalent: 4000)

(B-13): A bisphenol-F-type epoxy resin ("jER (registered trademark)" 4004P, manufactured by Mitsubishi Chemical Corporation, epoxy equivalent: 800)

(B-14): A bisphenol-F-type epoxy resin ("jER (registered trademark)" 4007, manufactured by Mitsubishi Chemical Corporation, epoxy equivalent: 2270)

(B-15): A bisphenol-F-type epoxy resin ("jER (registered trademark)" 4010, manufactured by Mitsubishi Chemical Corporation, epoxy equivalent: 4400)

<Curing agents>

(B-16): Dicyandiamide (DICY7, manufactured by Mitsubishi Chemical Corporation, active hydrogen equivalent: 12)

(B-17): 4,4'-Diaminodiphenylsulfone ("Seikacure (registered trademark)" S, manufactured by Wakayama Seika Kogyo Co., Ltd.), active hydrogen equivalent: 62)

(B-18): A mixture of methylhexahydrophthalic acid anhydride/hexahydrophthalic acid anhydride (= 70/30 (by mass)) ("Rikacid (registered trademark)" MH700, manufactured by New Japan Chemical Co., Ltd., active hydrogen equivalent: 163)

<Curing catalysts>

(B-19): A urea compound DCMU99, (manufactured by Hodogaya Chemical Co., Ltd.)

(B-20): Triphenyl phosphine (TPP, manufactured by Hokko Chemical Industry Co., Ltd.)

The components (C) and (G) are as follows.

<Reinforcing fibers>

(C-1) : A carbon fiber ("Torayca (registered trademark)" T700S, manufactured by Toray Industries Inc., tensile modulus: 230 GPa, tensile strength: 4900 MPa)

(C-2): A carbon fiber fabric ("Torayca cloth (registered trademark)" BT70-30, manufactured by Toray Industries Inc., a carbon fiber: "Torayca (registered trademark)" T700, a woven texture: plane woven, the fabric weight: 300 $g/m^2$)

(C-3) : A carbon fiber ("Torayca (registered trademark)" T800S, manufactured by Toray Industries Inc., tensile modulus: 294 GPa, tensile strength: 5880 MPa)

(C-4) : A carbon fiber ("Torayca (registered trademark)" M40J, manufactured by Toray Industries Inc., tensile modulus: 377 GPa, tensile strength: 4400 MPa)

(C-5) : A carbon fiber ("Torayca (registered trademark)" M46J, manufactured by Toray Industries Inc., tensile modulus: 436 GPa, tensile strength: 4200 MPa)

(C-6) : A carbon fiber ("Torayca (registered trademark)" M50J, manufactured by Toray Industries Inc., tensile modulus: 475 GPa, tensile strength: 4120 MPa)

Raw materials other than the above-mentioned components are as follows.

- Polyvinyl formal ("Vinylec (registered trademark)" E, manufactured by JNC Corporation)
- S-B-M copolymer ("Nanostrength (registered trademark)" E40F, manufactured by Arkema, S is styrene, B is 1,4-butadiene, and M is methyl methacrylate)

- polyether sulfone ("Sumikaexcel (registered trademark)" PES5003P, manufactured by Sumitomo Chemical Co., Ltd.)

(1) Production of non-woven fabric

A fiber of a thermoplastic resin which was ejected through a spinneret equipped with one orifice was stretched using an aspirator having an impact plate at the tip thereof and compressed air, dispersed on a metallic mesh, and then collected, thereby producing a fiber sheet. The fiber sheet collected on the metallic mesh was thermally adhered using a heating press machine. In this manner, a non-woven fabric was produced.

(2) Method for producing particles by freeze-pulverization

Resin pellets or a non-woven fabric was freeze-pulverized using a pulverization machine (PULVERIZER, manufactured by Hosokawa Micron Ltd.) while cooling the resin pellet or the non-woven fabric to a temperature equal to or lower than the glass transition temperature thereof with dry ice.

(3) Method for producing plate-like molding comprising component (A)

The component (A) was introduced into a 2 mm-thick mold made of stainless steel and then press-molded at a pressure of 50 kg/cm$^2$ over 5 minutes. The molding temperature employed for resins are shown below.
"UBESTA XPA (registered trademark)" 9048X1: 220°C, "Hytrel (registered trademark)" 5557: 220°C, "Kuraflex (registered trademark) " SIS0100: 220°C, " Kuraflex (registered trademark)" UC0050: 220°C, Nylon 12: 220°C, "Stratec (registered trademark)" RN2015, RN2050, RN2070 and RN2250: 200°C, TVO-150: 200°C, "Toraymicron (registered trademark)" EM02010: 200°C, "Daicel PP (registered trademark)" PT2N1: 200°C.

(4) Method for producing cured product of component (B)

The component (B) was defoamed in vacuo, then injected into a mold that had been so set as to form a molded product having a thickness of 2 mm by means of a 2 mm-thick spacer made of "Teflon (registered trademark)" arranged therein, and then cured completely under the conditions mentioned in each of reference examples.

(5) Method for producing cured product of resin composition comprising components (A) and (B)

The component (A) which was granulated by freeze-pulverization and the component (B) were kneaded together to produce a resin composition, the resultant resin composition was defoamed in vacuo, and then injected into a mold that had been so set as to form a molded product having a thickness of 2 mm by means of a 2 mm-thick spacer made of "Teflon (registered trademark)" arranged therein, and the complete curing of the component (C) was carried out under the same conditions as in item (4).

(6) Method for measuring glass transition temperature and value of tanδ at 10°C of cured resin material or plate-like molding

A cured resin material or a plate-like molding was cut out using a diamond cutter into a size of 13 mm wide and 35 mm long. The temperature of the resultant sample was risen to -70 to 250°C at a temperature rise rate of 5°C/min. using a dynamic viscoelasticity measurement device (DMAQ800: manufactured by T. A. Instruments Inc.) and then measured on the storage modulus and the value of tanδ in a flexural mode at a frequency of 1.0 Hz. The onset temperature of the storage modulus was determined as the glass transition temperature.

(7) Method for confirming cured state of cured resin

A sample (about 10 mg) was cut out from an arbitrary part in a cured resin material, and the temperature of the sample was risen from room temperature to 250°C at a temperature rise rate of 10°C/min. using a differential scanning calorimetric measurement device (DSC2910: manufactured by T. A. Instruments Inc.). The sample was determined as being cured completely when no exothermic peak was observed.

(8) Method for measuring loss coefficient of fiber-reinforced composite material

A sample having a size of 10 mm wide and 200 mm long was cut out from a fiber-reinforced composite material using a diamond cutter. When the fiber-reinforced composite material was a uni-directional material, the sample was cut out in such a manner that the lengthwise direction of the sample became parallel to the fibers. When the fiber-reinforced composite material was a woven fabric material, the sample was cut out in such a manner that either one of fibers becomes parallel to the lengthwise direction of the sample. A portion of the sample which extended inwardly from the edge by 35 mm was held with a clamp, a part of the sample which located 195 mm away from the edge was warped downwardly by 3 cm, and the vibrations generated upon the release of the warpage was measured using a strain gauge that was attached at a location 50 mm away from the edge. The loss coefficient was determined from the wave profile of the results.

(9) Measurement of flexural modulus and flexural strength of fiber-reinforced composite material

As a measure of the flexural strength of a fiber-reinforced composite material, a four-point flexural modulus and strength in the direction of fibers (i.e., 0°) of the fiber-reinforced composite material were measured when the fiber-reinforced composite material was a uni-directional material, and a four-point flexural strength in a direction parallel to either one of the directions of fibers of the fiber-reinforced composite material was measured when the fiber-reinforced composite material was a woven fabric. The 0° flexural modulus and the flexural strength of the uni-directional material and the flexural modulus of the woven fabric were determined in the flowing manner. The fiber-reinforced composite material was cut out into a specimen having a size of 2 mm thick, 15 mm wide and 100 mm long. The specimen was subjected to a four-point bending measurement using an Instron universal testing machine (manufactured by Instron) at a cross head speed of 5.0 mm/min., a fulcrum span of 81 mm, an indenter span of 27 mm, a fulcrum diameter of 4 mm and an indenter diameter of 10 mm. The flexural modulus was calculated from the date on flexural strength and 5N to 50N. The fiber volume content (Vf) of the specimen was determined in accordance with a combustion method described in JIS K7075 (1991), and each of the flexural modulus and the flexural strength obtained was converted to a value in terms of Vf60% in accordance with the following formula (2).

$$\text{(Value calculated in terms of Vf60\%)} = 0.6 \times \text{(unconverted measurement value)} / \text{(Vf)} \qquad (2)$$

(10) Method for measuring glass transition temperature of fiber-reinforced composite material

The glass transition temperature was measured using a fiber-reinforced composite material by the same method as that employed in item (6) above.

(11) Method for measuring fabric weight of non-woven fabric

The fabric weight of a non-woven fabric was determined in accordance with JIS-L-1906. That is, three pieces of specimens each having a size of 20 cm long and 25 cm wide were cut out from different parts of the non-woven fabric, the mass of each of the specimens was measured, and an average of the measurement values for the three pieces of specimens was converted to a mass per unit area.

(12) Method for measuring volume average particle diameter

The volume average particle diameter was measured in accordance with JIS K5600-9-3 (2006) using LMS-24 (manufactured by Seishin Enterprise Co., Ltd.) by a laser diffraction/scattering method.

(13) Method for measuring the state of dispersion of particles in fiber-reinforced composite material

A fiber-reinforced composite material was cut in a direction perpendicular to the surface thereof using a diamond cutter. When the cut surface of the cured product was not smooth, the cut surface was polished. The view of the cross section was enlarged 200 times or more on an optical microscope, and a photograph of the enlarged cross section was taken in such a manner that at least one surface of the fiber-reinforced composite material could be included within the viewing field.

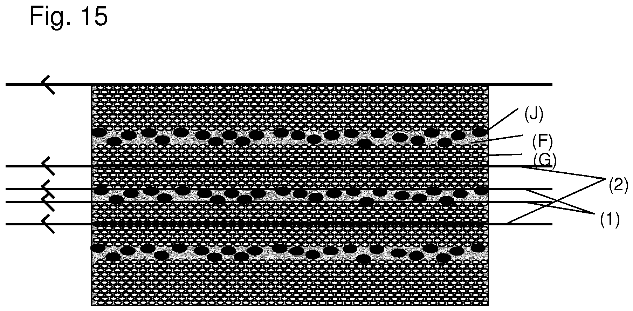

Using the cross sectional photograph, average boundary lines (1) each between a layer that comprised the components (F) and (G) and a layer that did not contain the component (G) were set, as illustrated in Fig. 15. The way of setting the average boundary line is as follows. First, five or more points are selected on one of the boundary lines each between the layer that comprises the components (F) and (G) and the layer that does not contain the component (G) on the photograph.

Next, the distance from either one surface of the fiber-reinforced composite material (i.e., a base line) to each of the selected five or more points is measured, and the results are averaged. A line parallel to the base line was set at a position apart by the calculated average distance from the base line. This line is termed "an average boundary line".

Subsequently, an average center thickness line (2) in the layer comprising the components (F) and (G) is set. The term "average center thickness line" as used herein refers to a line that is located just at the center of two average boundary lines (1) which are set for both surfaces of a single layer comprising the components (F) and (G) in the same manner as mentioned above. A line is set in such a manner that the line is at the same distance from the two average boundary lines and is in parallel to the average boundary lines. The resultant line was termed "an average center thickness line".

A region in a layer that does not contain the component (G) which is sandwiched by the average boundary lines located at both ends of the layer is termed "an interlayer region". The sum total of the cross-sectional areas of particles that are present in the interlayer area is determined. Subsequently, an area lying between a thus-determined average center thickness line (2), which is set for a layer that comprises the components (F) and (G) and is located adjacent to a layer that does not contain the component (G), and a thus-determined average center thickness line (2), which is set for a layer that comprises the components (F) and (G) and is located on the opposed side of the above-mentioned layer with the layer that does not contain the component (G) intercalated therebetween, is defined as "the entire region" in the measurement of the sectional areas of the particles. The sum total of all of the sectional areas of particles present in the entire region is determined.

The proportion of particles present in the interlayer area, i.e., the interlayer localization ratio, can be calculated by determining the ratio of the sum total of the sectional areas of the particles present in the interlayer region thus obtained relative to the sum total of the sectional areas of particles present in the entire area.

A region corresponding to particles present in a predetermined area is hollowed out from a cross sectional photograph, and the ratio of the sum total of the sectional areas of the particles present in the interlayer region relative to the sum total of the sectional areas of particles present in the entire area (i.e., an interlayer localization ratio) was determined from the mass of the hollowed region. When it was difficult to distinguish the dispersed particles after taking the photograph, a means for staining the particles was employed. When the interlayer localization ratio was 90% or more, it was determined that the particles did not penetrate into the inside of the reinforcing fiber bundles.

(14) Method for measuring weight of fiber-reinforced composite material

The steps (a) to (e) mentioned below were carried out in this order, thereby producing a tubular fiber-reinforced composite material having a laminated structure represented by $[0_3/\pm45_3]$ (i.e., a structure in which three layers of a prepreg in the fiber direction of +45° relative to the inside of the cylinder and three layers of the prepreg in the fiber direction of -45° relative to the inside of the cylinder were laminated alternately and three layers of the prepreg in the fiber direction of 0° relative to the inside of the cylinder were laminated on the outside of the resultant laminate) relative to the cylindrical axis direction and also having an inner diameter of 10 mm and a length of 1000 mm. The weight of the tubular fiber-reinforced composite material was measured.

(a) Two pieces of rectangular prepregs each having a size of 1000 mm long × 105 mm wide were cut out from a uni-directional prepreg in such a manner that the direction of fibers became 45° relative to the vertical direction. In this manner, uni-directional prepregs that served as bias materials were produced. The two pieces of prepregs were attached to each other in such a manner that the fiber directions of the prepregs bisected each other and the prepregs were misaligned each other by 16 mm in the lateral direction (corresponding to the semiperimeter of a core metal).

(b) The prepregs which were attached to each other in step (a) were wound in the total layer number of three around a core metal (a mandrel) which was mold-release-treated and had an outer diameter of 10 mm and a length of 1400 mm in such a manner that the vertical directions of the prepregs and the main axis of the mandrel agree with each other.

(c) A uni-directional prepreg, which served as a straight material, was cut into a rectangular piece having a size of 1000 mm long × 116 mm wide in such a manner that the fiber direction became vertical, and was wound around the laminate produced in the above step in such a manner that the vertical directions of the prepregs and the axis direction of the mandrel agree with each other to thereby form three layers on the laminate.

(d) A wrapping tape (a heat-resistant film tape) was wound around the resultant laminate, and then molded under heating at 130°C for 2 hours in a curing furnace.

(e) Subsequent to the molding, the mandrel was pulled out from the molded product and the wrapping tape was removed therefrom, thereby producing a tubular fiber composite material.

(15) Method for measuring specific gravities of both resin constituting component (A) and cured product of component (B)

Each of the plate-like molding of the component (A) produced in item (3) mentioned above and the cured product of the component (B) produced in item (4) mentioned above was cut into a sample having a size of 10 mm wide and 60 mm long using a diamond cutter, and the specific gravity of the resultant sample was measured in accordance with a water displacement method described in JIS K7112 (2005).

(Reference Examples 1 to 11, 19 to 24 and 30 to 37)

Each of epoxy resins shown in Reference Examples 1 to 11, 19 to 24 and 30 to 37 in Tables 1 to 5 was melt-kneaded under heating and then cooled to 60°C, and a curing agent and a curing catalyst were added to the cooled product. In this manner, epoxy resin compositions (components (B)) were prepared. Each of the resin compositions was defoamed in vacuo, then injected into a mold which was set so to produce a molded product having a thickness of 2 mm with a 2 mm-thick spacer made of Teflon (registered trademark), and then cured under the conditions shown in each of reference examples. In this manner, cured resin materials each having a thickness of 2 mm were produced. The glass transition temperatures of the cured resin materials are shown in Tables 1 to 5. The cured resin materials of Reference Examples 1 to 11, 20 to 24 and 31 to 37 had glass transition temperatures of 100°C or higher and therefore were good. However, the cured resin materials of Reference Examples 19 and 30 had glass transition temperatures of lower than 100°C. As the results of the measurement by DSC, no exothermic peak was observed in all of the cured materials of these reference examples and it was found that the cured materials were cured completely.

(Reference Examples 12 and 25)

Each of epoxy resins shown in Reference Example 12 in Table 2 and Reference Example 25 in Table 3 was melt-kneaded and then cooled to 80°C, and a curing agent was added to the cooled product. In this manner, epoxy resin compositions (components (B)) were prepared. Cured resin materials were produced using the resin compositions by the same method as mentioned in Reference Example 1 except that the curing condition was 180°C × 2 hours. The cured products were good with respect to glass transition temperatures and exothermic peaks.

(Reference Examples 13 and 26)

A curing catalyst was added to each of curing agents shown in Reference Example 13 in Table 2 and Reference Example 26 in Table 3, the resultant mixture was dissolved at 50°C and then cooled to room temperature, and an epoxy resin was then added to the cooled product. In this manner, epoxy resin compositions (components (B)) were prepared. Cured resin materials were produced using the resin compositions by the method mentioned in Reference Example 1. The cured products were good with respect to glass transition temperatures and exothermic peaks.

(Reference Examples 14, 15, 17, 18, 27 and 28)

Each of epoxy resins shown in Reference Examples 14, 15, 17 and 18 in Table 2 and Reference Examples 27 and 28 in Table 4 was melt-kneaded, polyvinyl formal or an S-B-M copolymer was added to the resultant product, and the resultant mixture was dissolved at 170°C over 1 hour. Subsequently, the resultant product was cooled to 60°C, and a curing agent and a curing catalyst were added to the cooled product. In this manner, epoxy resin compositions (components (B)) were prepared. Cured resin materials were produced using the resin compositions by the method mentioned in Reference Example 1. The cured products were good with respect to glass transition temperatures and exothermic peaks.

(Reference Examples 16 and 29)

Each of epoxy resins shown in Reference Example 16 in Table 2 and Reference Example 29 in Table 4 was melt-kneaded, and polyether sulfone was added to the resultant product and then dissolved at 170°C over 1 hour. Subsequently, the resultant mixture was cooled to 80°C, and then a curing agent was added to the cooled product. In this manner, epoxy resin compositions (components (B)) were prepared. Cured resin materials were produced using the resin compositions by the same method as mentioned in Reference Example 1 except that the curing condition was 180°C × 2 hours. The cured products were good with respect to glass transition temperatures and exothermic peaks.

(Reference Examples 38 to 51, 59 to 77 and 83 to 90)

Each of epoxy resins shown in Reference Examples 38 to 51, 59 to 77 and 83 to 90 in Tables 6 to 10 was melt-kneaded under heating and then cooled to 60°C, a freeze-pulverized component (A) or (E) was added to the cooled product, the resultant mixture was kneaded, and a curing agent and a curing catalyst were added to the kneaded product at the same temperature. In this manner, epoxy resin compositions were prepared. Cured resin materials were produced using the epoxy resin compositions by the same method as mentioned in Reference Example 1. In Reference Example 42, since the epoxy resin composition and (A-8) were compatible with each other, the glass transition temperature of (A-8) disappeared and the high-temperature-side glass transition temperature of the epoxy resin composition was decreased to 95°C. In Reference Examples 38 to 41, 43 to 51, 59 to 77 and 83 to 90, the dissolution between the component (A) or (E) and the epoxy resin composition was not confirmed.

(Reference Examples 52 and 78)

Each of epoxy resins shown in Reference Example 52 in Table 7 and Reference Example 78 in Table 9 was melt-kneaded and then cooled to 80°C, a freeze-pulverized component (A) or (E) was added to the cooled product, the resultant mixture was kneaded, and a curing agent was then added to the resultant mixture. In this manner, epoxy resin compositions were prepared. Cured resin materials were produced using the resin compositions by the method mentioned in Reference Example 12. The cured resin materials were good with respect to both glass transition temperatures and exothermic peaks.

(Reference Examples 53 and 79)

A curing catalyst was added to each of curing agents shown in Reference Example 53 in Table 7 and Reference Example 79 in Table 10 and then dissolved at 50°C, and the resultant mixture was cooled to room temperature. On the other hand, a freeze-pulverized component (A) or (E) was kneaded into an epoxy resin at room temperature. The resultant product was kneaded at room temperature. In this manner, epoxy resin compositions were prepared. Cured resin materials were produced using the resin compositions by the method mentioned in Reference Example 13. The cured resin materials were good with respect to both glass transition temperatures and exothermic peaks.

(Reference Examples 54, 55, 57, 58, 80 and 81)

Each of epoxy resins shown in Reference Examples 54, 55, 57 and 58 in Table 8 and Reference Examples 80 and 81 in Table 10 was melt-kneaded, then added with polyvinyl formal or the S-B-M copolymer, and then dissolved at 170°C over 1 hour. Subsequently, the resultant product was cooled to 60°C and then added with a freeze-pulverized component (A) or (E), the resultant mixture was kneaded, and then a curing agent and a curing catalyst were added to the kneaded product. In this manner, epoxy resin compositions were prepared. Cured resin materials were produced using the resin compositions by the method mentioned in Reference Example 14. The cured resin materials were good with respect to glass transition temperatures and exothermic peaks.

(Reference Examples 56 and 82)

Each of epoxy resins shown in Reference Example 56 in Table 8 and Reference Example 82 in Table 10 was melt-kneaded, added with polyether sulfone, and then dissolved at 170°C over 1 hour. Subsequently, the resultant product was cooled to 80°C, added with a freeze-pulverized component (A) or (E), the resultant mixture was kneaded, and then a curing agent was added to the kneaded product. In this manner, epoxy resin compositions were prepared. Cured resin materials were produced using the resin compositions by the same method as mentioned in Reference Example 16. The cured materials were good with respect to glass transition temperatures and exothermic peaks.

(Comparative Example 1)

The epoxy resin composition (component (B)) produced in Reference Example 1 was applied onto a release paper using a reverse roll coater, thereby producing a resin film. Subsequently, two pieces of the resin films were superposed respectively on both surfaces of the carbon fiber (C-1) in which fibers were aligned in one direction in a sheet-like form, and the resultant product was pressurized using a heat press roll to cause the impregnation of (C-1) with the epoxy resin composition. In this manner, a uni-directional prepreg precursor was produced which had a fiber mass of 125 g/m$^2$ per unit area and a fiber mass content of 66%. Subsequently, 20 plies of the uni-directional prepreg precursors were laminated together in such a manner that the fibers were aligned in one direction, and the resultant product was pressurized under heating in an autoclave at the temperature and time period mentioned in Reference Example 1 and at a pressure of 0.3 MPa to cure the laminate, thereby producing a fiber-reinforced composite material. The results of the measurements are shown in Table 21. The loss coefficient was small, which was not desirable.

(Example 1)

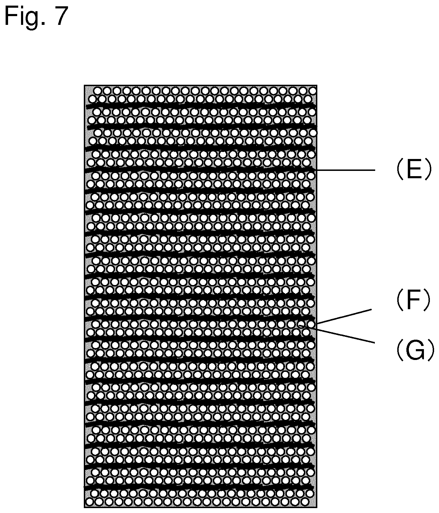

The polyamide polyether elastomer non-woven fabric (A-1) was attached as the component (A) onto one surface of the uni-directional prepreg precursor produced in Comparative Example 1, and the resultant product was sandwiched between release papers and then allowed to pass through a heat press roll, thereby producing a uni-directional prepreg. Subsequently, 19 plies of the uni-directional prepregs were laminated together in such a manner that fibers were aligned in one direction and the surface having the component (A) adhered thereon turned up, and one ply of the uni-directional prepreg precursor produced in Comparative Example 1 was laminated on the resultant laminate, thereby producing a laminate having the constitution illustrated in Fig. 7. A fiber-reinforced composite material was produced using the resultant laminate by the same method as mentioned in Comparative Example 1. The results of the measurements are shown in Table 11. The loss coefficient, the 0° flexural modulus and the strength were 160%, 99% and 99%, respectively, relative to those in Comparative Example 1, which were good results, and the glass transition temperature was also good.

(Comparative Example 2)

A uni-directional prepreg precursor and a fiber-reinforced composite material were produced in the same manner as in Comparative Example 1, except that the fiber mass content was altered to 61%. The results of the measurements are shown in Table 21. The loss coefficient was small, which was not desirable.

(Example 2)

A uni-directional prepreg was produced in the same manner as in Example 1, except that the polyamide polyether elastomer non-woven fabric (A-1) was attached as the component (A) on both surfaces of the uni-directional prepreg precursor produced in Comparative Example 2. Then, 18 plies of the uni-directional prepregs were laminated together in such a manner that the fibers were aligned in one direction, and the uni-directional prepreg precursor produced in Comparative Example 2 was laminated on each of both surfaces of the resultant laminate, thereby producing a laminate having the constitution illustrated in Fig. 7. A fiber-reinforced composite material was produced using the resultant laminate by the same method as mentioned in Comparative Example 1. The results of the measurements are shown in Table 11. The loss coefficient, the 0° flexural modulus and the strength were 209%, 100% and 98%, respectively, relative to those in Comparative Example 2, which were good results, and the glass transition temperature was also good. Further, since the content of the component (A) in the fiber-reinforced composite material was increased compared with that in Example 1, the loss coefficient was improved compared with that in Example 1.

(Comparative Example 3)

A uni-directional prepreg precursor and a fiber-reinforced composite material were produced in the same manner as in Comparative Example 1, except that the fiber mass content was altered to 56%. The results of the measurements are shown in Table 21. The loss coefficient was small, which was not desirable.

(Example 3)

A uni-directional prepreg and a fiber-reinforced composite material were produced in the same manner as in Example 1 using the uni-directional prepreg precursor produced in Comparative Example 3 and the polyamide polyether elastomer non-woven fabric (A-2) as the component (A). The results of the measurements are shown in Table 11. The loss coefficient, the 0° flexural modulus and the strength were 239%, 101% and 96%, respectively, compared with those in Comparative Example 3, which were good results, and the glass transition temperature was also good. Further, the content of the component (A) in the fiber-reinforced composite material was increased compared with that in Example 1, and therefore the loss coefficient was improved compared with that in Example 1.

(Example 4)

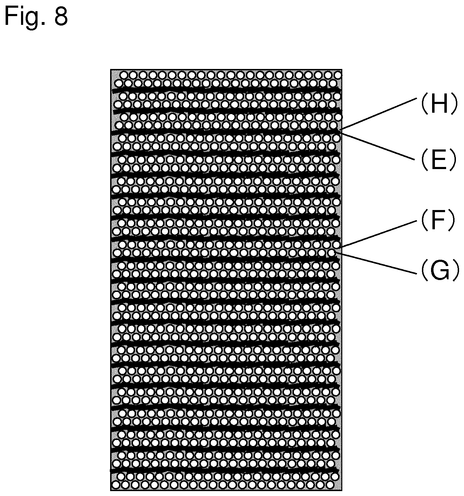

A resin film was produced using the epoxy resin composition of Reference Example 1 as the component (D) by the method mentioned in Comparative Example 1. Two pieces of the resin films were superposed respectively on both surfaces of the polyamide polyether elastomer non-woven fabric (A-2), and (A-2) was allowed to be impregnated with the epoxy resin composition using a heat press roll, thereby producing a non-woven fabric sheet. Subsequently, a uni-directional prepreg precursor having a fiber mass of 125 g/m$^2$ per unit area and a fiber mass content of 76% was produced using the epoxy resin composition of Reference Example 1 by the same method as in Comparative Example 1. The non-woven fabric sheet was adhered on one surface of the uni-directional prepreg precursor by applying a pressure using a heat press roll, thereby producing a uni-directional prepreg. The uni-directional prepregs were used and laminated together by the method mentioned in Example 1, thereby producing a laminate having the constitution illustrated in Fig. 8. A fiber-reinforced composite material was produced using the resultant laminate in the same manner as in Comparative Example 1. The results of the measurements are shown in Table 11. The loss coefficient, the 0° flexural modulus and the strength were 241%, 102% and 98%, respectively, compared with those in Comparative Example 3, which were good results, and the glass transition temperature was also good. Furthermore, since the component (D) was used, the void content in the fiber-reinforced composite material was decreased compared with that in Example 3 and the ratio of the mass of the component (D) to be impregnated per unit area of the component (A) to the value d that is defined by the above-mentioned formula (1) (hereinafter, abbreviated as "X") was 99%, which was a good result, and therefore the 0° flexural strength was improved compared with that in Example 3.

(Example 5)

A uni-directional prepreg and a fiber-reinforced composite material were produced in the same manner as in Example 4, except that the amounts of the components (A) to (D) added were altered to 14 mass%, 16 mass%, 49 mass% and 21 mass%, respectively. The results of the measurements are shown in Table 11. The loss coefficient, the 0° flexural modulus and the strength were 243%, 100% and 97%, respectively, compared with those in Comparative Example 3, which were good results, and the glass transition temperature was also good. Further, since the component (D) was used, the void content in the fiber-reinforced composite material was decreased compared with that in Example 3 and the 0° flexural strength was improved compared with that in Example 3. On the other hand, X was 88% and therefore the 0° flexural strength was decreased compared with that in Example 4.

(Example 6)

A uni-directional prepreg and a fiber-reinforced composite material were produced in the same manner as in Example 4, except that the amounts of the components (A) to (D) added were altered to 12 mass%, 14 mass%, 44 mass% and 30 mass%, respectively. The results of the measurements are shown in Table 11. The loss coefficient, the 0° flexural modulus and the strength were 221%, 102% and 98%, respectively, relative to those in Comparative Example 3, which were good results, and the glass transition temperature was also good. Further, since the component (D) was used, the void content in the fiber-reinforced composite material was decreased compared with that in Example 3, resulting in the improvement in 0° flexural strength compared with that in Example 3. On the other hand, since X was 140%, the loss coefficient was decreased compared with that in Example 4.

(Example 7)

A uni-directional prepreg and a fiber-reinforced composite material were produced in the same manner as in Example 4, except that the epoxy resin composition of Reference Example 15 was used as the component (D). The results of the measurements are shown in Table 11. The loss coefficient, the 0° flexural modulus and the strength were 241%, 101% and 98%, respectively, compared with those in Comparative Example 3, which were good results, and the glass transition temperature was also good. Since the component in Reference Example 15, which had a lower glass transition temperature than that of the component in Reference Example 1, was used as the component (D), the glass transition temperature was decreased compared with that in Example 4.

(Comparative Example 4)

A uni-directional prepreg precursor and a fiber-reinforced composite material were produced in the same manner as in Comparative Example 1, except that the fiber mass content was altered to 73%. The results of the measurements are shown in Table 21. The loss coefficient was small, which was not desirable.

(Example 8)

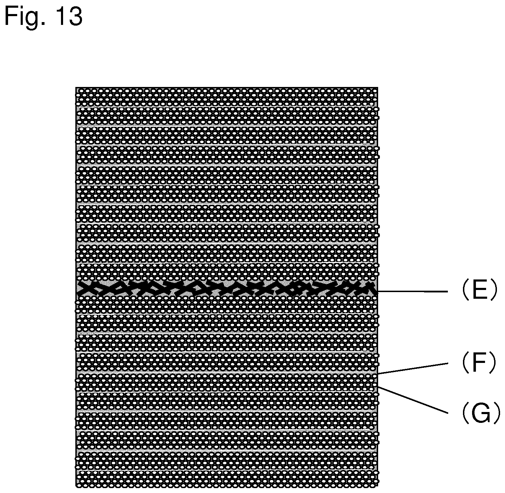

Ten plies of the uni-directional prepreg precursors produced in Comparative Example 4 were laminated together in such a manner that the fibers were aligned in one direction, the polyamide polyether elastomer non-woven fabric (A-3) was attached as the component (A) onto the resultant laminate, and 10 plies of the uni-directional prepreg precursors produced in Comparative Example 4 were laminated on the resultant laminate, thereby producing a laminate having the constitution illustrated in Fig. 13. A fiber-reinforced composite material was produced using the resultant laminate in the same manner as in Comparative Example 1. The results of the measurements are shown in Table 11. The loss coefficient, the 0° flexural modulus and the strength were 142%, 99% and 92%, respectively, relative to those in Comparative Example 4, which were good results, and the glass transition temperature was also good. Further, since the fabric weight of the component (A) was larger than that in Example 1, the flexural strength was decreased compared with that in Example 1.

(Comparative Example 5)

A uni-directional prepreg precursor and a fiber-reinforced composite material were produced in the same manner as in Comparative Example 1, except that the fiber mass content was altered to 51%. The results of the measurements are shown in Table 21. The loss coefficient was small, which was not desirable.

(Example 9)

A uni-directional prepreg and a fiber-reinforced composite material were produced in the same manner as in Example 1 using the uni-directional prepreg precursor produced in Comparative Example 5 and the polyamide polyether elastomer non-woven fabric (A-3) as the component (A). The results of the measurements are shown in Table 11. The loss coefficient was 289% and 92%, respectively, relative to that in Comparative Example 5, which were good results, and the glass transition temperature was also good. Further, the 0° flexural strength was 85% relative to that in Comparative Example 5. Since the content of the component (A) in the fiber-reinforced composite material was increased compared with that in Example 8, the loss coefficient was improved but the flexural strength was decreased compared with those in Example 6.

(Example 10)

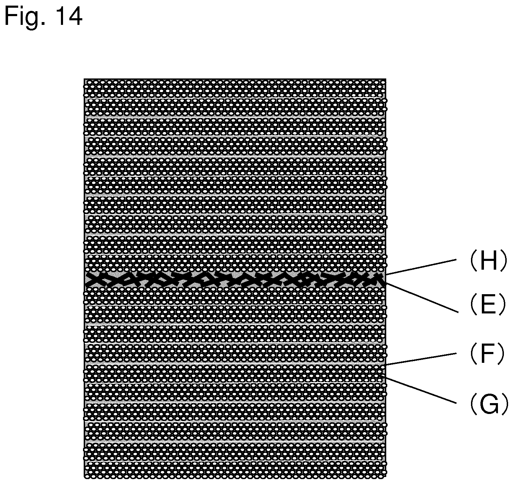

A resin film was produced by the method mentioned in Comparative Example 1 using the epoxy resin composition of Reference Example 1 as the component (D). Two pieces of the resin films were superposed respectively on both surfaces of the polyamide polyether elastomer non-woven fabric (A-4), and (A-4) was allowed to be impregnated with the epoxy resin composition using a heat press roll, thereby producing a non-woven fabric sheet. Subsequently, a uni-directional prepreg precursor having a fiber mass of 125 g/m$^2$ per unit area and a fiber mass content of 76% was produced using the resin film produced from the epoxy resin composition of Reference Example 1 by the method mentioned in Comparative Example 1. Subsequently, 10 plies of the uni-directional prepreg precursors were laminated together in such a manner that the fibers were aligned in one direction, the non-woven fabric sheet was attached onto the resultant laminate, and 10 plies of the uni-directional prepreg precursors were further laminated on the resultant laminate, thereby producing a laminate having the constitution illustrated in Fig. 14. The resultant laminate was used and cured in the same manner as in Comparative Example 1, thereby producing a fiber-reinforced composite material. The results of the measurements are shown in Table 11. The loss coefficient and 0° flexural modulus were 158% and 100%, respectively, relative to those in Comparative Example 4, which were good results. Further, the glass transition temperature was also good. The flexural strength was 88% relative to that in Comparative Example 4. Since the fabric weight of the component (A) was larger than that in Example 8, the flexural strength was decreased compared with that in Example 6.

(Example 11)

A uni-directional prepreg and a fiber-reinforced composite material were produced in the same manner as in Example 1 using the uni-directional prepreg precursor produced in Comparative Example 2 and the polyester polyether elastomer non-woven fabric (A-5) as the component (A). The results of the measurements are shown in Table 11. The loss coefficient, the 0° flexural modulus and the strength were 191%, 98% and 98%, respectively, relative to those in Comparative Example 2, which were good results, and the glass transition temperature was also good. Further, since the value of tanδ of the component (A) was decreased compared with that in Example 2, the loss coefficient was decreased compared with that in Example 2.

(Example 12)

Ten plies of the uni-directional prepreg precursors produced in Comparative Example 4 were laminated together in such a manner that the fibers were aligned in one direction, the polyester polyether elastomer non-woven fabric (A-6) was attached onto the resultant laminate as the component (A), and 10 plies of the uni-directional prepreg precursors produced in Comparative Example 4 were laminated on the resultant laminate, thereby producing a laminate having the constitution illustrated in Fig. 13. A fiber-reinforced composite material was produced using the resultant laminate in the same manner as in Comparative Example 1. The results of the measurements are shown in Table 11. The loss coefficient, the 0° flexural modulus and the strength were 138%, 98% and 92%, respectively, relative to those in Comparative Example 4, which were good results, and the glass transition temperature was also good. Further, since the fabric weight of the component (A) was larger than that in Example 11, the flexural strength was decreased compared with that in Example 11.

(Example 13)

A resin film was produced using the epoxy resin composition of Reference Example 1 as the component (D) by the method mentioned in Comparative Example 1. Two pieces of the resin films were superposed respectively on both surfaces of the polyester polyether elastomer non-woven fabric (A-6), and (A-6) was allowed to be impregnated with Reference Example 1 using a heat press roll, thereby producing a non-woven fabric sheet. Subsequently, a uni-directional prepreg precursor having a fiber mass of 125 g/m$^2$ per unit area and a fiber mass content of 76% was produced using the resin film produced from the epoxy resin composition of Reference Example 1 by the same method as mentioned in Comparative Example 1. Subsequently, 10 plies of the uni-directional prepreg precursors were laminated together in such a manner that the fibers were aligned in one direction, the non-woven fabric sheet was attached onto the resultant laminate, and 10 plies of the uni-directional prepreg precursors were laminated on the resultant laminate, thereby producing a laminate having the constitution illustrated in Fig. 14. A fiber-reinforced composite material was produced using the resultant laminate in the same manner as in Comparative Example 1. The results of the measurements are shown in Table 11. The loss coefficient, the 0° flexural modulus and the strength were 140%, 100% and 95%, respectively, relative to those in Comparative Example 4, which were good results, and the glass transition temperature was also good. Further, since the component (D) was used, the void content in the fiber-reinforced composite material was decreased compared with that in Example 12 and the flexural strength was improved compared with that in Example 12.

(Example 14)

A non-woven fabric sheet, a uni-directional prepreg precursor and a fiber-reinforced composite material were produced by the same method as in Example 13, except that the styrene-based block copolymer non-woven fabric (A-7) was used as the component (A). The results of the measurements are shown in Table 11. The loss coefficient, the 0° flexural modulus and the strength were 152%, 98% and 91%, respectively, relative to those in Comparative Example 4, which were good results, and the glass transition temperature was also good. Since both the amount of the component (A) and the value of tanδ at 10°C were increased compared with those in Example 13, the loss coefficient was improved compared with that in Example 13.

(Comparative Example 6)

A uni-directional prepreg precursor and a fiber-reinforced composite material were produced by the same method as mentioned in Comparative Example 1, except that the epoxy resin composition of Reference Example 3 was used as the component (B). The results of the measurements are shown in Table 21. The loss coefficient was small, which was not desirable.

(Example 15)

The polyamide polyether elastomer non-woven fabric (A-1) was attached as the component (A) onto one surface of the uni-directional prepreg precursor produced in Comparative Example 6, and a uni-directional prepreg and a fiber-reinforced composite material were produced in the same manner as in Example 1. The results of the measurements are shown in Table 12. The loss coefficient, the 0° flexural modulus and the strength were 158%, 100% and 99%, respectively, relative to those in Comparative Example 6, which were good results, and the glass transition temperature was also good. Since the amount of the curing agent used was 1.2 equivalents, the flexural strength was decreased slightly compared with that in Example 1.

(Comparative Example 7)

A uni-directional prepreg precursor and a fiber-reinforced composite material were produced by the same method as mentioned in Comparative Example 1, except that the epoxy resin composition of Reference Example 4 was used as the component (B). The results of the measurements are shown in Table 21. The loss coefficient was small, which was not desirable.

(Example 16)

The polyamide polyether elastomer non-woven fabric (A-1) was adhered as the component (A) onto one surface of the uni-directional prepreg precursor produced in Comparative Example 7, and a uni-directional prepreg and a fiber-reinforced composite material were produced in the same manner as in Example 1. The results of the measurements are shown in Table 12. The loss coefficient, the 0° flexural modulus and the strength were 153%, 100% and 99%, respectively, relative to those in Comparative Example 7, which were good results, and the glass transition temperature was also good. Since the amount of the curing catalyst used was 4 parts by weight, the flexural strength was decreased slightly compared with that in Example 1.

(Comparative Example 8)

A uni-directional prepreg precursor and a fiber-reinforced composite material were produced by the same method as mentioned in Comparative Example 1, except that the epoxy resin composition of Reference Example 5 was used as the component (B). The results of the measurements are shown in Table 21. The loss coefficient was small, which was not desirable.

(Example 17)

The polyamide polyether elastomer non-woven fabric (A-1) was attached as the component (A) onto one surface of the uni-directional prepreg precursor produced in Comparative Example 8, and a uni-directional prepreg and a fiber-reinforced composite material were produced in the same manner as in Example 1. The results of the measurements are shown in Table 12. The loss coefficient, the 0° flexural modulus and the strength were 157%, 100% and 100%, respectively, relative to those in Comparative Example 8, which were good results. The glass transition temperature was also good. Since the amount of the curing agent used was 0.8 equivalent, the flexural strength was improved slightly compared with that in Example 1.

(Comparative Example 9)

A uni-directional prepreg precursor and a fiber-reinforced composite material were produced in the same manner as in Comparative Example 1, except that the epoxy resin composition of Reference Example 7 was used as the component (B). The results of the measurements are shown in Table 21. The loss coefficient was small, which was not desirable.

(Example 18)

The polyamide polyether elastomer non-woven fabric (A-1) was attached as the component (A) onto one surface of the uni-directional prepreg precursor produced in Comparative Example 9, and a uni-directional prepreg and a fiber-reinforced composite material were produced in the same manner as in Example 1. The results of the measurements are shown in Table 12. The loss coefficient, the 0° flexural modulus and the strength were 154%, 98% and 99%, respectively, relative to those in Comparative Example 9, and the glass transition temperature was also good. Since a phenol-novolac-type epoxy resin was used as a portion of the epoxy resin in the component (B), the flexural strength and the glass transition temperature were improved compared with those in Example 1.

(Comparative Example 10)

A uni-directional prepreg precursor and a fiber-reinforced composite material were produced in the same manner as in Comparative Example 1, except that the epoxy resin composition of Reference Example 19 was used as the component (B). The results of the measurements are shown in Table 22. The loss coefficient and the glass transition temperature were low, which was not desirable.

(Example 19)

The polyamide polyether elastomer non-woven fabric (A-1) was attached as the component (A) onto one surface of the uni-directional prepreg precursor produced in Comparative Example 10, and a uni-directional prepreg and a fiber-reinforced composite material were produced in the same manner as in Example 1. The results of the measurements are shown in Table 12. The loss coefficient, the 0° flexural modulus and the strength were 166%, 98% and 98%, respectively, relative to those in Comparative Example 10, which were good results. However, since a bisphenol-F-type epoxy resin was used as the epoxy resin in the component (B), the glass transition temperature was decreased compared with that in Example 1.

(Comparative Example 11)

A uni-directional prepreg precursor and a fiber-reinforced composite material were produced in the same manner as in Comparative Example 1, except that the epoxy resin composition of Reference Example 8 was used as the component (B). The results of the measurements are shown in Table 22. The loss coefficient was small, which was not desirable.

(Example 20)

The polyamide polyether elastomer non-woven fabric (A-1) was attached as the component (A) onto one surface of the uni-directional prepreg precursor produced in Comparative Example 11, and a uni-directional prepreg and a fiber-reinforced composite material were produced in the same manner as in Example 1. The results of the measurements are shown in Table 12. The loss coefficient, the 0° flexural modulus and the strength were 155%, 98% and 98%, respectively, relative to those in Comparative Example 11, which were good results. Since a dicyclopentadiene-type epoxy resin was used as the epoxy resin in the component (B), the glass transition temperature was greatly improved compared with that in Example 1.

(Comparative Example 12)

A uni-directional prepreg precursor and a fiber-reinforced composite material were produced in the same manner as in Comparative Example 1, except that the epoxy resin composition of Reference Example 9 was used as the component (B). The results of the measurements are shown in Table 22. The loss coefficient was small, which was not desirable.

(Example 21)

The polyamide polyether elastomer non-woven fabric (A-1) was attached as the component (A) onto one surface of the uni-directional prepreg precursor produced in Comparative Example 12, and a uni-directional prepreg and a fiber-reinforced composite material were produced in the same manner as in Example 1. The results of the measurements are shown in Table 12. The loss coefficient, the 0° flexural modulus and the strength were 152%, 97% and 99%, respectively, relative to those in Comparative Example 12, which were good results. Since a polyfunctional amine-type epoxy resin was used as the epoxy resin in the component (B), the flexural strength and the glass transition temperature were greatly improved compared with those in Example 1.

(Comparative Example 13)

A uni-directional prepreg precursor and a fiber-reinforced composite material were produced in the same manner as in Comparative Example 1, except that the epoxy resin composition of Reference Example 10 was used as the component (B). The results of the measurements are shown in Table 22. The loss coefficient was small, which was not desirable.

(Example 22)

The polyamide polyether elastomer non-woven fabric (A-1) was attached as the component (A) onto one surface of the uni-directional prepreg precursor produced in Comparative Example 13, and a uni-directional prepreg and a fiber-reinforced composite material were produced in the same manner as in Example 1. The results of the measurements are shown in Table 12. The loss coefficient, the 0° flexural modulus and the strength were 154%, 100% and 98%, respectively, relative to those in Comparative Example 13, which were good results. Since an epoxy resin having a biphenyl skeleton was used as the epoxy resin in the component (B), the flexural strength and the glass transition temperature were greatly improved compared with those in Example 1.

(Comparative Example 14)

A uni-directional prepreg precursor and a fiber-reinforced composite material were produced in the same manner as in Comparative Example 1, except that the epoxy resin composition of Reference Example 11 was used as the component (B). The results of the measurements are shown in Table 22. The loss coefficient was small, which was not desirable.

(Example 23)

The polyamide polyether elastomer non-woven fabric (A-1) was attached as the component (A) onto one surface of the uni-directional prepreg precursor produced in Comparative Example 14, and a uni-directional prepreg and a fiber-reinforced composite material were produced in the same manner as in Example 1. The results of the measurements are shown in Table 12. The loss coefficient, the 0° flexural modulus and the strength were 163%, 101% and 99%, respectively, relative to those in Comparative Example 14, which were good results. Since an isocyanate-modified epoxy resin was used as the epoxy resin in the component (B), the glass transition temperature was improved compared with that in Example 1.

(Comparative Example 15)

A uni-directional prepreg precursor was produced in the same manner as in Comparative Example 1, except that the epoxy resin composition of Reference Example 12 was used as the component (B). The uni-directional prepreg precursor was laminated by the same method as mentioned in Comparative Example 1, and the resultant laminate was cured by pressurizing under heating in an autoclave at the temperature and the time period both mentioned in Reference Example 12 and at a pressure of 0.3 MPa, thereby producing a fiber-reinforced composite material. The results of the measurements are shown in Table 22. The loss coefficient was small, which was not desirable.

(Example 24)

The polyamide polyether elastomer non-woven fabric (A-1) was attached as the component (A) onto one surface of the uni-directional prepreg precursor produced in Comparative Example 15, and a uni-directional prepreg was produced in the same manner as in Example 1. The uni-directional prepreg was laminated by the same method as in Example 1, and a fiber-reinforced composite material was produced in an autoclave in the same manner as in Comparative Example 15. The results of the measurements are shown in Table 13. The loss coefficient, the 0° flexural modulus and the strength were 153%, 103% and 100%, respectively, relative to those in Comparative Example 15, which were good results. Since 4,4'-diaminodiphenyl sulfone was used as the curing agent in the component (B), the glass transition temperature was improved compared with that in Example 21.

(Comparative Example 16)

A uni-directional prepreg precursor and a fiber-reinforced composite material were produced in the same manner as in Comparative Example 1, except that the epoxy resin composition of Reference Example 14 as used as the component (B). The results of the measurements are shown in Table 22. The loss coefficient was small, which was not desirable.

(Example 25)

The polyamide polyether elastomer non-woven fabric (A-1) was attached as the component (A) onto one surface of the uni-directional prepreg precursor produced in Comparative Example 16, and a uni-directional prepreg and a fiber-reinforced composite material were produced in the same manner as in Example 1. The results of the measurements are shown in Table 13. The loss coefficient, the 0° flexural modulus and the strength were 155%, 98% and 99%, respectively, relative to those in Comparative Example 16, which were good results, and the glass transition temperature was also good.

(Comparative Example 17)

A uni-directional prepreg precursor and a fiber-reinforced composite material were produced in the same manner as in Comparative Example 1, except that the epoxy resin composition of Reference Example 15 was used as the component (B). The results of the measurements are shown in Table 22. The loss coefficient was small, which was not desirable.

(Example 26)

The polyamide polyether elastomer non-woven fabric (A-1) was attached as the component (A) onto one surface of the uni-directional prepreg precursor produced in Comparative Example 17, and a uni-directional prepreg and a fiber-reinforced composite material were produced in the same manner as in Example 1. The results of the measurements are shown in Table 13. The loss coefficient, the 0° flexural modulus and the strength were 157%, 99%, 100%, respectively, relative to those in Comparative Example 17, which were good results, and the glass transition temperature was also good.

(Comparative Example 18)

A uni-directional prepreg precursor and a fiber-reinforced composite material were produced in the same manner as in Comparative Example 15, except that the epoxy resin composition of Reference Example 16 was used as the component (B). The results of the measurements are shown in Table 22. The loss coefficient was small, which was not desirable.

(Example 27)

The polyamide polyether elastomer non-woven fabric (A-1) was attached as the component (A) onto one surface of the uni-directional prepreg precursor produced in Comparative Example 18, and a uni-directional prepreg and a fiber-reinforced composite material were produced in the same manner as in Example 24. The results of the measurements are shown in Table 13. The loss coefficient, the 0° flexural modulus and the strength were 156%, 100% and 98%, respectively, relative to those in Comparative Example 18, which were good results, and the glass transition temperature was also good.

(Comparative Example 19)

A uni-directional prepreg precursor and a fiber-reinforced composite material were produced in the same manner as in Comparative Example 1, except that the epoxy resin composition of Reference Example 17 was used as the component (B). The results of the measurements are shown in Table 23. The loss coefficient was small, which was not desirable.

(Example 28)

The polyamide polyether elastomer non-woven fabric (A-1) was attached as the component (A) onto one surface of the uni-directional prepreg precursor produced in Comparative Example 19, and a uni-directional prepreg and a fiber-reinforced composite material were produced in the same manner as in Example 1. The results of the measurements are shown in Table 13. The loss coefficient, the 0° flexural modulus and the strength were 160%, 100% and 97%, respectively, relative to those in Comparative Example 19, which were good results, and the glass transition temperature was also good.

(Comparative Example 20)

A uni-directional prepreg precursor and a fiber-reinforced composite material were produced in the same manner as in Comparative Example 1, except that the epoxy resin composition of Reference Example 18 was used as the component (B). The results of the measurements are shown in Table 23. The loss coefficient was small, which was not desirable.

(Example 29)

The polyamide polyether elastomer non-woven fabric (A-1) was attached as the component (A) onto one surface of the uni-directional prepreg precursor produced in Comparative Example 20, and a uni-directional prepreg and a fiber-reinforced composite material were produced in the same manner as in Example 1. The results of the measurements are shown in Table 13. The loss coefficient, the 0° flexural modulus and the strength were 163%, 99% and 98%, respectively, relative to those in Comparative Example 20, which were good results, and the glass transition temperature was also good.

(Comparative Example 21)

A uni-directional prepreg and a fiber-reinforced composite material were produced in the same manner as in Example 1 using the uni-directional prepreg precursor produced in Comparative Example 5 and the polyurethane non-woven fabric (A-8) as the component (A). The results of the measurements are shown in Table 23. Since the component (A) and the component (B) were compatible with each other, the glass transition temperature derived from the component (A) was increased and the glass transition temperature derived from the component (B) was decreased. Further, the loss coefficient, the 0° flexural modulus and the strength were 113%, 88% and 86%, respectively, relative to those in Comparative Example 5, which were low and not desirable. Since the component (A) and the matrix resin were compatible with each other, the loss coefficient and the flexural strength were decreased compared with those in Example 3.

(Comparative Example 22)

A uni-directional prepreg precursor and a fiber-reinforced composite material were produced in the same manner as in Example 11, except that the Nylon 12 non-woven fabric (A-9) was used as the component (A). The results of the measurements are shown in Table 23. The 0° flexural modulus and the strength were 98% and 99%, respectively, relative to those in Comparative Example 2, which were good results, and the glass transition temperature was also good. However, the loss coefficient was 110% relative to that in Comparative Example 2, which was small and was not desirable. Since the value of $\tan\delta$ at 10°C of the component (A) was smaller than that in Example 11, the loss coefficient was decreased compared with that in Example 11.

(Comparative Example 23)

Ten plies of the uni-directional prepreg precursors produced in Comparative Example 1 were laminated in such a manner that the fibers were aligned in one direction, the polyamide polyether elastomer film (A-10) was adhered onto the resultant laminate, 10 plies of the uni-directional prepreg precursors were laminated on the resultant laminate, and a fiber-reinforced composite material having the constitution illustrated in Fig. 13 was produced under the same conditions as in Comparative Example 1. The results of the measurements are shown in Table 23. The loss coefficient was 251% relative to that in Comparative Example 1, which was a good result, and the glass transition temperature was also good. However, the 0° flexural modulus and the strength were 80% and 76%, respectively, relative to those in Comparative Example 1, which were low and not desirable. Since the component (A) had a film-like form, the strength was significantly decreased compared with that in Example 8.

(Comparative Example 24)

The component (B) mentioned in Reference Example 1 and the polyamide polyether elastomer particles (A-11) were kneaded together by the same method as in Reference Example 38, thereby producing a resin composition. A resin film was produced using the epoxy resin composition by the method mentioned in Comparative Example 1. Subsequently, two pieces of the resin films were superposed respectively on both surfaces of the carbon fiber (C-1) in which the fibers were aligned in one direction in the sheet-like form, and the resultant product was pressurized using a heat press roll to allow (C-1) to be impregnated with the epoxy resin composition, thereby producing a uni-directional prepreg having a fiber mass of 125 g/m$^2$ per unit area and a fiber mass content of 63%. A fiber-reinforced composite material was produced using the uni-directional prepreg by the method mentioned in Example 2. The results of the measurements are shown in Table 23. The loss coefficient was 139% relative to that in Comparative Example 1, which was a good result, and the glass transition temperature was also good. However, the 0° flexural modulus and the strength were 88% and 87%, respectively, relative to those in Comparative Example 1, which were low and not desirable. Since particles of the component (A) entered into the inside of the reinforcing fiber bundle and the interlayer localization rate was 88%, the loss coefficient and the flexural strength were decreased compared with those in Example 2.

(Comparative Example 25)

A uni-directional prepreg precursor and a fiber-reinforced composite material were produced in the same manner as in Comparative Example 1, except that the resin composition of Reference Example 2 was used as the component (B). The results of the measurements are shown in Table 23. The loss coefficient was small, which was not desirable.

(Example 30)

A uni-directional prepreg and a fiber-reinforced composite material were produced in the same manner as in Example 1, except that the uni-directional prepreg precursor produced in Comparative Example 25 was used. The results of the measurements are shown in Table 13. The loss coefficient, the 0° flexural modulus and the strength were 161%, 100% and 97%, respectively, relative to those in Comparative Example 25, which were good results. The glass transition temperature was also good.

(Comparative Example 26)

A uni-directional prepreg precursor and a fiber-reinforced composite material were produced in the same manner as in Comparative Example 1, except that the resin composition of Reference Example 31 was used as the component (B). The results of the measurements are shown in Table 23. The loss coefficient was small, which was not desirable.

(Example 31)

A uni-directional prepreg and a fiber-reinforced composite material were produced in the same manner as in Example 1, except that the uni-directional prepreg precursor produced in Comparative Example 26 was used. The results of the measurements are shown in Table 13. The loss coefficient, the 0° flexural modulus and the strength were 174%, 102% and 97%, respectively, relative to those in Comparative Example 26, which were good results. The glass transition temperature was also good. Since a bisphenol-A-type epoxy resin having an epoxy equivalent of 810 was added to the epoxy resin in the component (B), the loss coefficient was improved compared with that in Example 30.

(Comparative Example 27)

A uni-directional prepreg precursor and a fiber-reinforced composite material were produced in the same manner as in Comparative Example 1, except that the resin composition of Reference Example 32 was used as the component (B). The results of the measurements are shown in Table 23. The loss coefficient was small, which was not desirable.

(Example 32)

A uni-directional prepreg and a fiber-reinforced composite material were produced in the same manner as in Example 1, except that the uni-directional prepreg precursor produced in Comparative Example 27 was used. The results of the measurements are shown in Table 14. The loss coefficient, the 0° flexural modulus and the strength were 170%, 97% and 96%, respectively, relative to those in Comparative Example 27, which were good results. The glass transition temperature was also good. Since a bisphenol-A-type epoxy resin having an epoxy equivalent of 1930 was added to the epoxy resin in the component (B), the loss coefficient was improved compared with that in Example 30.

(Comparative Example 28)

A uni-directional prepreg precursor and a fiber-reinforced composite material were produced in the same manner as in Comparative Example 1, except that the resin composition of Reference Example 33 was used as the component (B). The results of the measurements are shown in Table 24. The loss coefficient was small, which was not desirable.

(Example 33)

A uni-directional prepreg and a fiber-reinforced composite material were produced in the same manner as in Example 1, except that the uni-directional prepreg precursor produced in Comparative Example 28 was used. The results of the measurements are shown in Table 14. The loss coefficient, the 0° flexural modulus and the strength were 165%, 99% and 97%, respectively, relative to those in Comparative Example 28, which were good results. The glass transition temperature was also good. Since a bisphenol-A-type epoxy resin having an epoxy equivalent of 4000 was added to the epoxy resin in the component (B), the loss coefficient was improved compared with that in Example 30.

(Comparative Example 29)

A uni-directional prepreg precursor and a fiber-reinforced composite material were produced in the same manner as in Comparative Example 1, except that the resin composition of Reference Example 34 was used as the component (B). The results of the measurements are shown in Table 24. The loss coefficient was small, which was not desirable.

(Example 34)

A uni-directional prepreg and a fiber-reinforced composite material were produced in the same manner as in Example 1, except that the uni-directional prepreg precursor produced in Comparative Example 29 was used. The results of the measurements are shown in Table 14. The loss coefficient, the 0° flexural modulus and the strength were 162%, 101% and 98%, respectively, relative to those in Comparative Example 29, which were good results. The glass transition temperature was also good. Since a bisphenol-F-type epoxy resin was added to the epoxy resin in the component (B), the strength was improved compared with that in Example 30.

(Comparative Example 30)

A uni-directional prepreg precursor and a fiber-reinforced composite material were produced in the same manner as in Comparative Example 1, except that the resin composition of Reference Example 35 was used as the component (B). The results of the measurements are shown in Table 24. The loss coefficient was small, which was not desirable.

(Example 35)

A uni-directional prepreg and a fiber-reinforced composite material were produced in the same manner as in Example 1, except that the uni-directional prepreg precursor produced in Comparative Example 30 was used. The results of the measurements are shown in Table 14. The loss coefficient, the 0° flexural modulus and the strength were 176%, 98% and 99%, respectively, relative to those in Comparative Example 30, which were good results. The glass transition temperature was also good. Since a bisphenol-F-type epoxy resin having an epoxy equivalent of 800 was added to the epoxy resin in the component (B), the loss coefficient was improved compared with that in Example 34.

(Comparative Example 31)

A uni-directional prepreg precursor and a fiber-reinforced composite material were produced in the same manner as in Comparative Example 1, except that the resin composition of Reference Example 36 was used as the component (B). The results of the measurements are shown in Table 24. The loss coefficient was small, which was not desirable.

(Example 36)

A uni-directional prepreg and a fiber-reinforced composite material were produced in the same manner as in Example 1, except that the uni-directional prepreg precursor produced in Comparative Example 31 was used. The results of the measurements are shown in Table 14. The loss coefficient, the 0° flexural modulus and the strength were 180%, 98% and 100%, respectively, relative to those in Comparative Example 31, which were good results. The glass transition temperature was also good. Since a bisphenol-F-type epoxy resin having an epoxy equivalent of 2270 was added to the epoxy resin in the component (B), the loss coefficient was improved compared with that in Example 34.

(Comparative Example 32)

A uni-directional prepreg precursor and a fiber-reinforced composite material were produced in the same manner as in Comparative Example 1, except that the resin composition of Reference Example 37 was used as the component (B). The results of the measurements are shown in Table 24. The loss coefficient was small, which was not desirable.

(Example 37)

A uni-directional prepreg and a fiber-reinforced composite material were produced in the same manner as in Example 1, except that the uni-directional prepreg precursor produced in Comparative Example 32 was used. The results of the measurements are shown in Table 14. The loss coefficient, the 0° flexural modulus and the strength were 163%, 100% and 98%, respectively, relative to those in Comparative Example 32, which were good results. The glass transition temperature was also good. Since a bisphenol-F-type epoxy resin having an epoxy equivalent of 4400 was added to the epoxy resin in the component (B), the loss coefficient was improved compared with that in Example 34.

(Comparative Example 33)

A uni-directional prepreg precursor and a fiber-reinforced composite material were produced in the same manner as in Comparative Example 25, except that the carbon fiber (C-3) was used as the component (C). The results of the measurements are shown in Table 24. The loss coefficient was small, which was not desirable.

(Example 38)

A uni-directional prepreg and a fiber-reinforced composite material were produced in the same manner as in Example 1, except that the uni-directional prepreg precursor produced in Comparative Example 33 was used. The results of the measurements are shown in Table 14. The loss coefficient, the 0° flexural modulus and the strength were 159%, 99% and 97%, respectively, relative to those in Comparative Example 33, which were good results. The glass transition temperature was also good. Since (C-3) was used as the component (C), the balance among the loss coefficient, the modulus and the strength was good, as in the case of Example 30.

(Comparative Example 34)

A uni-directional prepreg precursor and a fiber-reinforced composite material were produced in the same manner as in Comparative Example 25, except that the carbon fiber (C-4) was used as the component (C). The results of the measurements are shown in Table 24. The loss coefficient was small, which was not desirable.

(Example 39)

A uni-directional prepreg and a fiber-reinforced composite material were produced in the same manner as in Example 1, except that the uni-directional prepreg precursor produced in Comparative Example 34 was used. The results of the measurements are shown in Table 14. The loss coefficient, the 0° flexural modulus and the strength were 158%, 100% and 98%, respectively, relative to those in Comparative Example 34, which were good results. The glass transition temperature was also good.

(Comparative Example 35)

A uni-directional prepreg precursor and a fiber-reinforced composite material were produced in the same manner as in Comparative Example 25, except that the carbon fiber (C-5) was used as the component (C). The results of the measurements are shown in Table 24. The loss coefficient was small, which was not desirable.

(Example 40)

A uni-directional prepreg and a fiber-reinforced composite material were produced in the same manner as in Example 1, except that the uni-directional prepreg precursor produced in Comparative Example 35 was used. The results of the measurements are shown in Table 14. The loss coefficient, the 0° flexural modulus and the strength were 161%, 99% and 99%, respectively, relative to those in Comparative Example 35, which were good results. The glass transition temperature was also good.

(Comparative Example 36)

A uni-directional prepreg precursor and a fiber-reinforced composite material were produced in the same manner as in Comparative Example 25, except that the carbon fiber (C-6) was used as the component (C). The results of the measurements are shown in Table 24. The loss coefficient was small, which was not desirable.

(Example 41)

A uni-directional prepreg and a fiber-reinforced composite material were produced in the same manner as in Example 1, except that the uni-directional prepreg precursor produced in Comparative Example 36 was used. The results of the measurements are shown in Table 14. The loss coefficient, the 0° flexural modulus and the strength were 161%, 99% and 98%, respectively, relative to those in Comparative Example 36, which were good results. The glass transition temperature was also good.

(Comparative Example 37)

A uni-directional prepreg precursor and a fiber-reinforced composite material were produced in the same manner as in Comparative Example 32, except that the fiber mass content was altered to 62%. The results of the measurements are shown in Table 25. The loss coefficient was small, which was not desirable.

(Example 42)

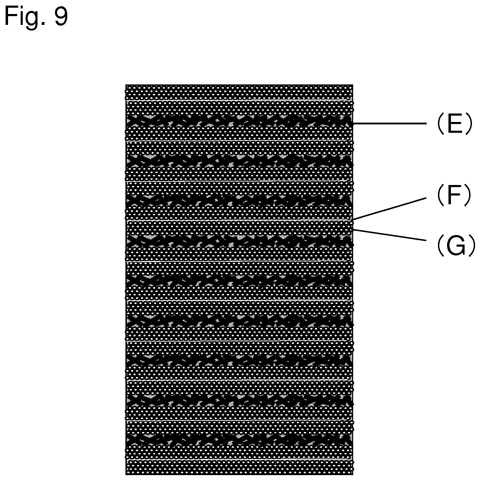

Two plies of the uni-directional prepreg precursors produced in Comparative Example 37 were laminated together in such a manner that the fibers were aligned in one direction, and the polypropylene non-woven fabric (A-12) was attached as the component (A) onto the resultant laminate, thereby producing a uni-directional prepreg. Nine plies of the resultant uni-directional prepregs were laminated together in such a manner that the fibers were aligned in one direction. Two plies of the uni-directional prepreg precursor produced in Comparative Example 37 were laminated on the resultant laminate in such a manner that the fibers were aligned in one direction, thereby producing a laminate having the constitution illustrated in Fig. 9. A fiber-reinforced composite material was produced using the laminate by the same method as mentioned in Comparative Example 1. The results of the measurements are shown in Table 15. The loss coefficient, the 0° flexural modulus and the strength were 138%, 99% and 97%, respectively, relative to those in Comparative Example 37, which were good results, and the glass transition temperature was also good.

(Example 43)

The polypropylene non-woven fabric (A-12) was attached as the component (A) onto one surface of the uni-directional prepreg precursor produced in Comparative Example 37, and the resultant product was sandwiched between release papers and then allowed to pass through a heat press roll, thereby producing a uni-directional prepreg. Subsequently, 19 plies of the uni-directional prepregs were laminated together in such a manner that fibers were aligned in one direction and the surface having the component (A) adhered thereon turned up, and one ply of the uni-directional prepreg precursor produced in Comparative Example 37 was laminated on the resultant laminate, thereby producing a laminate having the constitution illustrated in Fig. 7. A fiber-reinforced composite material was produced using the resultant laminate by the same method as mentioned in Comparative Example 37. The results of the measurements are shown in Table 15. The loss coefficient, the 0° flexural modulus and the strength were 173%, 100% and 97%, respectively, relative to those in Comparative Example 37, which were good results, and the glass transition temperature was also good. Since the amount of the component (A) was increased compared with that in Example 42, the loss coefficient was improved compared with that in Example 42. In addition, a tube-like fiber-reinforced composite material was prepared using the uni-directional prepreg by the above-mentioned method. The resultant tube-like fiber-reinforced composite material was weighed and it was found that the tube-like fiber-reinforced composite material had a weight of 78.7 g as shown in Table 26.

(Example 44)

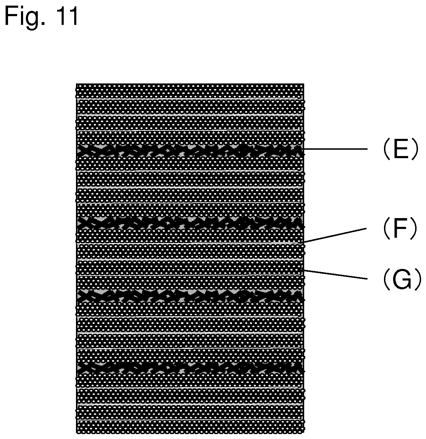

Four plies of the uni-directional prepreg precursors produced in Comparative Example 37 were laminated together in such a manner that the fibers were aligned in one direction, and the polypropylene non-woven fabric (A-13) was attached as the component (A) onto the resultant laminate, thereby producing a uni-directional prepreg. Four plies of the resultant uni-directional prepregs were laminated in such a manner that the fibers were aligned in one direction. Four plies of the uni-directional prepreg precursors produced in Comparative Example 37 were laminated on the resultant laminate in such a manner that the fibers were aligned in one direction, thereby producing a laminate having the constitution illustrated in Fig. 11. A fiber-reinforced composite material was produced using the laminate by the same method as in Comparative Example 37. The results of the measurements are shown in Table 15. The loss coefficient, the 0° flexural modulus and the strength were 156%, 98% and 97%, respectively, relative to those in Comparative Example 37, which were good results, and the glass transition temperature was also good. Since the amount of the component (A) was increased compared with that in Example 42, the loss coefficient was improved compared with that in Example 42.

(Example 45)

A fiber-reinforced composite material was produced in the same manner as in Example 44, except that the polypropylene non-woven fabric (A-14) was used as the component (A). The results of the measurements are shown in Table 15. The loss coefficient, the 0° flexural modulus and the strength were 167%, 96% and 96%, respectively, relative to those in Comparative Example 37, which were good results, and the glass transition temperature was also good. Since the fabric weight of the component (A) was increased compared with that in Example 44, the 0° flexural modulus and the strength were slightly decreased compared with those in Example 44.

(Example 46)

Ten plies of the uni-directional prepreg precursors produced in Comparative Example 37 were laminated together in such a manner that the fibers were aligned in one direction, the polypropylene non-woven fabric (A-15) was attached as the component (A) onto the resultant laminate, and 10 plies of the uni-directional prepreg precursors produced in Comparative Example 37 were further laminated on the resultant laminate, thereby producing a laminate having the constitution illustrated in Fig. 13. A fiber-reinforced composite material was produced using the laminate by the same method as in Comparative Example 37. The results of the measurements are shown in Table 15. The loss coefficient, the 0° flexural modulus and the strength were 164%, 94% and 95%, respectively, relative to those in Comparative Example 37, which were good results, and the glass transition temperature was also good. Since the fabric weight of the component (A) was increased compared with that in Example 45, the 0° flexural modulus and the strength were slightly decreased compared with those in Example 45.

(Example 47)

A fiber-reinforced composite material was produced in the same manner as in Example 42, except that the polypropylene non-woven fabric (A-14) was used as the component (A). The results of the measurements are shown in Table 15. The loss coefficient, the 0° flexural modulus and the strength were 251%, 97% and 96%, respectively, relative to those in Comparative Example 37, which were good results, and the glass transition temperature was also good. Since the fabric weight of the component (A) was increased compared with that in Example 44, the 0° flexural modulus and the strength were slightly decreased compared with those in Example 44.

(Example 48)

A fiber-reinforced composite material was produced in the same manner as in Example 43, except that the polypropylene non-woven fabric (A-14) was used as the component (A). The results of the measurements are shown in Table 15. The loss coefficient, the 0° flexural modulus and the strength were 314%, 96% and 96%, respectively, relative to those in Comparative Example 37, which were good results, and the glass transition temperature was also good. Since the fabric weight of the component (A) was increased and the non-woven fabric mass content was also increased compared with those in Example 44, the 0° flexural modulus and the strength were slightly decreased compared with those in Example 44.

(Example 49)

A fiber-reinforced composite material was produced in the same manner as in Example 42, except that the polypropylene non-woven fabric (A-16) was used as the component (A). The results of the measurements are shown in Table 15. The loss coefficient, the 0° flexural modulus and the strength were 140%, 99% and 100%, respectively, relative to those in Comparative Example 37, which were good results, and the glass transition temperature was also good. Since the non-woven fabric mass content was increased but the value of tan$\delta$ of the component (A) was decreased compared with those in Example 42, the loss coefficient was at a similar level to that in Example 42.

(Comparative Example 38)

A fiber-reinforced composite material was produced in the same manner as in Example 42, except that the polyethylene non-woven fabric (A-19) was used as the component (A). The results of the measurements are shown in Table 25. The 0° flexural modulus and the strength were 100% and 97%, respectively, relative to those in Comparative Example 37, which were good results, and the glass transition temperature was also good. However, since the value of tan$\delta$ of the non-woven fabric was small, the loss coefficient was 114% relative to that in Comparative Example 37 and the improvement effect was poor, which was not desirable.

(Comparative Example 39)

A fiber-reinforced composite material was produced in the same manner as in Example 43, except that the polypropylene film (A-18) was used as the component (A). The results of the measurements are shown in Table 25. In the resultant fiber-reinforced composite material, the component (A) was not adhered to a layer composed of a cured product of the component (B) and the component (C), which was not desirable.

(Comparative Example 40)

A uni-directional prepreg precursor and a fiber-reinforced composite material were produced in the same manner as in Comparative Example 37, except that the resin composition of Reference Example 31 was used as the component (B). The results of the measurements are shown in Table 25. The loss coefficient was small, which was not desirable.

(Example 50)

A uni-directional prepreg and a fiber-reinforced composite material were produced in the same manner as in Example 42, except that the uni-directional prepreg precursor produced in Comparative Example 40 was used. The results of the measurements are shown in Table 15. The loss coefficient, the 0° flexural modulus and the strength were 145%, 100% and 96%, respectively, relative to those in Comparative Example 40, which were good results. The glass transition temperature was also good. Since a bisphenol-A-type epoxy resin having an epoxy equivalent of 810 was added to the epoxy resin in the component (B), the loss coefficient was improved compared with that in Example 42.

(Comparative Example 41)

A uni-directional prepreg precursor and a fiber-reinforced composite material were produced in the same manner as in Comparative Example 37, except that the resin composition of Reference Example 32 was used as the component (B). The results of the measurements are shown in Table 25. The loss coefficient was small, which was not desirable.

(Example 51)

A uni-directional prepreg and a fiber-reinforced composite material were produced in the same manner as in Example 42, except that the uni-directional prepreg precursor produced in Comparative Example 41 was used. The results of the measurements are shown in Table 16. The loss coefficient, the 0° flexural modulus and the strength were 141%, 101% and 97%, respectively, relative to those in Comparative Example 41, which were good results. The glass transition temperature was also good. Since a bisphenol-A-type epoxy resin having an epoxy equivalent of 1930 was added to the epoxy resin in the component (B), the loss coefficient was improved compared with that in Example 42.

(Comparative Example 42)

A uni-directional prepreg precursor and a fiber-reinforced composite material were produced in the same manner as in Comparative Example 37, except that the resin composition of Reference Example 33 was used as the component (B). The results of the measurements are shown in Table 25. The loss coefficient was small, which was not desirable.

(Example 52)

A uni-directional prepreg and a fiber-reinforced composite material were produced in the same manner as in Example 42, except that the uni-directional prepreg precursor produced in Comparative Example 42 was used. The results of the measurements are shown in Table 16. The loss coefficient, the 0° flexural modulus and the strength were 133%, 97% and 97%, respectively, relative to those in Comparative Example 42, which were good results. The glass transition temperature was also good. Since a bisphenol-A-type epoxy resin having an epoxy equivalent of 4000 was added to the epoxy resin in the component (B), the loss coefficient was improved compared with that in Example 42.

(Comparative Example 43)

A uni-directional prepreg precursor and a fiber-reinforced composite material were produced in the same manner as in Comparative Example 37, except that the resin composition of Reference Example 34 was used as the component (B). The results of the measurements are shown in Table 25. The loss coefficient was small, which was not desirable.

(Example 53)

A uni-directional prepreg and a fiber-reinforced composite material were produced in the same manner as in Example 42, except that the uni-directional prepreg precursor produced in Comparative Example 43 was used. The results of the measurements are shown in Table 16. The loss coefficient, the 0° flexural modulus and the strength were 130%, 98% and 103%, respectively, relative to those in Comparative Example 43, which were good results. The glass transition temperature was also good. Since a bisphenol-F-type epoxy resin was added to the epoxy resin in the component (B), the strength was improved compared with that in Example 42.

(Comparative Example 44)

A uni-directional prepreg precursor and a fiber-reinforced composite material were produced in the same manner as in Comparative Example 37, except that the resin composition of Reference Example 35 was used as the component (B). The results of the measurements are shown in Table 25. The loss coefficient was small, which was not desirable.

(Example 54)

A uni-directional prepreg and a fiber-reinforced composite material were produced in the same manner as in Example 42, except that the uni-directional prepreg precursor produced in Comparative Example 44 was used. The results of the measurements are shown in Table 16. The loss coefficient, the 0° flexural modulus and the strength were 144%, 103% and 99%, respectively, relative to those in Comparative Example 44, which were good results. The glass transition temperature was also good. Since a bisphenol-F-type epoxy resin having an epoxy equivalent of 800 was added to the epoxy resin in the component (B), the loss coefficient was improved compared with that in Example 53.

(Comparative Example 45)

A uni-directional prepreg precursor and a fiber-reinforced composite material were produced in the same manner as in Comparative Example 37, except that the resin composition of Reference Example 36 was used as the component (B). The results of the measurements are shown in Table 25. The loss coefficient was small, which was not desirable.

(Example 55)

A uni-directional prepreg and a fiber-reinforced composite material were produced in the same manner as in Example 42, except that the uni-directional prepreg precursor produced in Comparative Example 45 was used. The results of the measurements are shown in Table 16. The loss coefficient, the 0° flexural modulus and the strength were 145%, 98% and 100%, respectively, relative to those in Comparative Example 45, which were good results. The glass transition temperature was also good. Since a bisphenol-F-type epoxy resin having an epoxy equivalent of 2270 was added to the epoxy resin in the component (B), the loss coefficient was improved compared with that in Example 53.

(Comparative Example 46)

A uni-directional prepreg precursor and a fiber-reinforced composite material were produced in the same manner as in Comparative Example 1, except that the resin composition of Reference Example 37 was used as the component (B). The results of the measurements are shown in Table 26. The loss coefficient was small, which was not desirable.

(Example 56)

A uni-directional prepreg and a fiber-reinforced composite material were produced in the same manner as in Example 42, except that the uni-directional prepreg precursor produced in Comparative Example 46 was used. The results of the measurements are shown in Table 16. The loss coefficient, the 0° flexural modulus and the strength were 136%, 101% and 98%, respectively, relative to those in Comparative Example 46, which were good results. The glass transition temperature was also good. Since a bisphenol-F-type epoxy resin having an epoxy equivalent of 4400 was added to the epoxy resin in the component (B), the loss coefficient was improved compared with that in Example 53.

(Comparative Example 47)

A uni-directional prepreg precursor and a fiber-reinforced composite material were produced in the same manner as in Comparative Example 37, except that the resin composition of Reference Example 1 was used as the component (B). The results of the measurements are shown in Table 26. The loss coefficient was small, which was not desirable.

(Example 57)

A uni-directional prepreg and a fiber-reinforced composite material were produced in the same manner as in Example 42, except that the uni-directional prepreg precursor produced in Comparative Example 47 was used. The results of the measurements are shown in Table 16. The loss coefficient, the 0° flexural modulus and the strength were 131%, 99% and 96%, respectively, relative to those in Comparative Example 47, which were good results. The glass transition temperature was also good. Since the amount of the curing catalyst in the component (B) was 3 parts by mass, the flexural strength was improved slightly compared with that in Example 42.

(Comparative Example 48)

A uni-directional prepreg precursor and a fiber-reinforced composite material were produced in the same manner as in Comparative Example 37, except that the resin composition of Reference Example 4 was used as the component (B). The results of the measurements are shown in Table 26. The loss coefficient was small, which was not desirable.

(Example 58)

A uni-directional prepreg and a fiber-reinforced composite material were produced in the same manner as in Example 42, except that the uni-directional prepreg precursor produced in Comparative Example 48 was used. The results of the measurements are shown in Table 16. The loss coefficient, the 0° flexural modulus and the strength were 131%, 99% and 98%, respectively, relative to those in Comparative Example 48, which were good results. The glass transition temperature was also good. Since the amount of the curing agent was 1.0 equivalent, the flexural strength was improved slightly compared with that in Example 42.

(Comparative Example 49)

A uni-directional prepreg precursor and a fiber-reinforced composite material were produced in the same manner as in Comparative Example 37, except that the resin composition of Reference Example 6 was used as the component (B). The results of the measurements are shown in Table 26. The loss coefficient was small, which was not desirable.

(Example 59)

A uni-directional prepreg and a fiber-reinforced composite material were produced in the same manner as in Example 42, except that the uni-directional prepreg precursor produced in Comparative Example 49 was used. The results of the measurements are shown in Table 16. The loss coefficient, the 0° flexural modulus and the strength were 131%, 98% and 97%, respectively, relative to those in Comparative Example 49, which were good results. The glass transition temperature was also good. Since the amount of the curing agent was 0.8 equivalent, the flexural strength was improved slightly compared with that in Example 42.

(Comparative Example 50)

A uni-directional prepreg precursor and a fiber-reinforced composite material were produced in the same manner as in Comparative Example 37, except that the carbon fiber (C-3) was used as the component (C). The results of the measurements are shown in Table 26. The loss coefficient was small, which was not desirable.

(Example 60)

A uni-directional prepreg and a fiber-reinforced composite material were produced in the same manner as in Example 42, except that the uni-directional prepreg precursor produced in Comparative Example 50 was used. The results of the measurements are shown in Table 17. The loss coefficient, the 0° flexural modulus and the strength were 130%, 99% and 97%, respectively, relative to those in Comparative Example 50, which were good results. The glass transition temperature was also good. Since (C-3) was used as the component (C), the balance among the loss coefficient, the modulus and the strength was good, as in the case of Example 42.

(Comparative Example 51)

A uni-directional prepreg precursor and a fiber-reinforced composite material were produced in the same manner as in Comparative Example 37, except that the carbon fiber (C-4) was used as the component (C). The results of the measurements are shown in Table 26. The loss coefficient was small, which was not desirable.

(Example 61)

A uni-directional prepreg and a fiber-reinforced composite material were produced in the same manner as in Example 42, except that the uni-directional prepreg precursor produced in Comparative Example 51 was used. The results of the measurements are shown in Table 17. The loss coefficient, the 0° flexural modulus and the strength were 124%, 99% and 98%, respectively, relative to those in Comparative Example 51, which were good results. The glass transition temperature was also good.

(Comparative Example 52)

A uni-directional prepreg precursor and a fiber-reinforced composite material were produced in the same manner as in Comparative Example 37, except that the carbon fiber (C-5) was used as the component (C). The results of the measurements are shown in Table 26. The loss coefficient was small, which was not desirable.

(Example 62)

A uni-directional prepreg and a fiber-reinforced composite material were produced in the same manner as in Example 42, except that the uni-directional prepreg precursor produced in Comparative Example 52 was used. The results of the measurements are shown in Table 17. The loss coefficient, the 0° flexural modulus and the strength were 120%, 100% and 97%, respectively, relative to those in Comparative Example 52, which were good results. The glass transition temperature was also good.

(Comparative Example 53)

A uni-directional prepreg precursor and a fiber-reinforced composite material were produced in the same manner as in Comparative Example 37, except that the carbon fiber (C-6) was used as the component (C). The results of the measurements are shown in Table 26. The loss coefficient was small, which was not desirable.

(Example 63)

A uni-directional prepreg and a fiber-reinforced composite material were produced in the same manner as in Example 42, except that the uni-directional prepreg precursor produced in Comparative Example 53 was used. The results of the measurements are shown in Table 17. The loss coefficient, the 0° flexural modulus and the strength were 120%, 99% and 98%, respectively, relative to those in Comparative Example 53, which were good results. The glass transition temperature was also good.

(Comparative Example 54)

A uni-directional prepreg precursor and a fiber-reinforced composite material were produced in the same manner as in Comparative Example 37, except that the fiber mass content was altered to 68%. The results of the measurements are shown in Table 27. The loss coefficient was small, which was not desirable.

(Example 64)

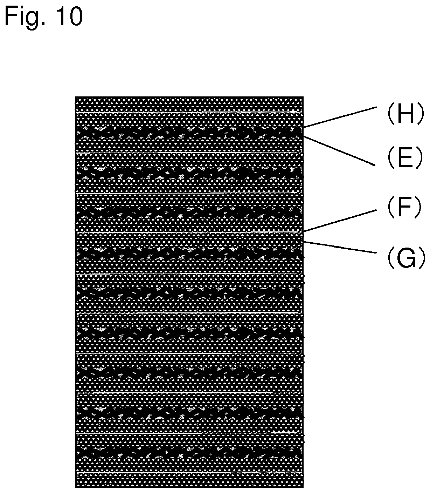

A resin film having a resin weight of 21 g/cm$^2$ was produced using the resin composition of Reference Example 2 as the component (D) by the same method as in Comparative Example 54. The resin film was attached onto the polypropylene non-woven fabric (A-12), and the resultant product was pressurized using a heat press roll to allow (A-12) to be impregnated with the component (D), thereby producing a non-woven fabric prepreg having a non-woven fabric mass content of 26%. Subsequently, the above-produced non-woven fabric prepreg was attached onto one surface of the uni-directional prepreg precursor produced in Comparative Example 54, and the resultant product was allowed to pass through a heat press roll, thereby producing a uni-directional prepreg. Subsequently, the uni-directional prepreg and the uni-directional prepreg precursor produced in Comparative Example 54 were laminated together in the constitution illustrated in Fig. 10 in such a manner that directions of all of the fibers in the prepreg became same as one another, and the resultant laminate was subjected to the same procedure as in Comparative Example 54, thereby producing a fiber-reinforced composite material. The results of the measurements are shown in Table 17. The loss coefficient, the 0° flexural modulus and the strength were 132%, 99% and 98%, respectively, relative to those in Comparative Example 54, which were good results. The glass transition temperature was also good. In addition, a tube-like fiber-reinforced composite material was produced using the uni-directional prepreg by the above-mentioned method. The resultant tube-like fiber-reinforced composite material was weighed, and it was found that the weight of the tube-like fiber-reinforced composite material was 79.0 g as shown in Table 27.

(Example 65)

A fiber-reinforced composite material was produced in the same manner as in Example 64, except that the polypropylene non-woven fabric (A-13) was used as the component (A) and the non-woven fabric mass content of the non-woven fabric prepreg was altered to 45%. The results of the measurements are shown in Table 17. The loss coefficient, the 0° flexural modulus and the strength were 195%, 98% and 95%, respectively, relative to those in Comparative Example 54, which were good results. The glass transition temperature was also good.

(Example 66)

A fiber-reinforced composite material was produced in the same manner as in Example 64, except that the polypropylene non-woven fabric (A-14) was used as the component (A) and the non-woven fabric mass content of the non-woven fabric prepreg was altered to 48%. The results of the measurements are shown in Table 17. The loss coefficient, the 0° flexural modulus and the strength were 200%, 101% and 91%, respectively, relative to those in Comparative Example 54, which were good results. The glass transition temperature was also good.

(Example 67)

A resin film having a resin weight of 54 $g/cm^2$ was produced using the resin composition of Reference Example 2 as the component (D) by the same method as in Comparative Example 54. The resin film was attached onto the polypropylene non-woven fabric (A-15), and the resultant product was pressurized using a heat press roll to allow (A-15) to be impregnated with the component (D), thereby producing a non-woven fabric prepreg having a non-woven fabric mass content of 70%. Subsequently, the above-produced non-woven fabric prepreg was attached onto one surface of the uni-directional prepreg precursor produced in Comparative Example 54, and the resultant product was allowed to pass through a heat press roll, thereby producing a uni-directional prepreg. Subsequently, the uni-directional prepreg and the uni-directional prepreg precursor produced in Comparative Example 54 were laminated together in the constitution illustrated in Fig. 14 in such a manner that directions of all of the fibers in the prepreg became same as one another, and the resultant laminate was subjected to the same procedure as in Comparative Example 54, thereby producing a fiber-reinforced composite material. The results of the measurements are shown in Table 17. The loss coefficient and the 0° flexural modulus were 250% and 99%, respectively, relative to those in Comparative Example 54, which were good results. The glass transition temperature was also good. Since the fabric weight of the non-woven fabric was larger than that in Example 64, the flexural strength was slightly decreased compared with that in Example 64.

(Example 68)

A fiber-reinforced composite material was produced in the same manner as in Example 64, except that the polypropylene non-woven fabric (A-16) was used as the component (A) and the non-woven fabric mass content of the non-woven fabric prepreg was altered to 32%. The results of the measurements are shown in Table 17. The loss coefficient, the 0° flexural modulus and the strength were 142%, 100% and 98%, respectively, relative to those in Comparative Example 54, which were good results. The glass transition temperature was also good.

(Example 69)

A fiber-reinforced composite material was produced in the same manner as in Example 64, except that the maleic-acid-modified polypropylene non-woven fabric (A-17) was used as the component (A). The results of the measurements are shown in Table 17. The loss coefficient, the 0° flexural modulus and the strength were 130%, 98% and 98%, respectively, relative to those in Comparative Example 54, which were good results. The glass transition temperature was also good.

(Example 70)

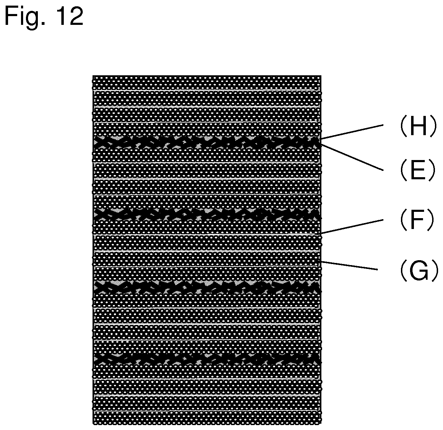

A non-woven fabric prepreg having a non-woven fabric mass content of 45% was produced in the same manner as in Example 64, except that the polypropylene non-woven fabric (A-13) was used as the component (A). Subsequently, the above-produced non-woven fabric prepreg was attached onto one surface of the uni-directional prepreg precursor produced in Comparative Example 54, and the resultant product was allowed to pass through a heat press roll, thereby producing a uni-directional prepreg. Subsequently, the uni-directional prepreg and the uni-directional prepreg precursor produced in Comparative Example 54 were laminated together in the constitution illustrated in Fig. 12 in such a manner that directions of all of the fibers in the prepreg became same as one another, and the resultant laminate was subjected to the same procedure as in Comparative Example 54, thereby producing a fiber-reinforced composite material. The results of the measurements are shown in Table 18. The loss coefficient, the 0° flexural modulus and the strength were 148%, 101% and 98%, respectively, relative to those in Comparative Example 54, which were good results. The glass transition temperature was also good.

(Example 71)

A resin film having a resin weight of 21 g/cm$^2$ was produced using the resin composition of Reference Example 2 as the component (D) by the same method as in Comparative Example 54. The resin film was attached onto the polypropylene non-woven fabric (A-12), and the resultant product was pressurized using a heat press roll to allow (A-12) to be impregnated with the component (D), thereby producing a non-woven fabric prepreg having a non-woven fabric mass content of 26%. Subsequently, the above-produced non-woven fabric prepreg was attached onto one surface of the uni-directional prepreg precursor produced in Comparative Example 54, and the resultant product was allowed to pass through a heat press roll, thereby producing a uni-directional prepreg. Subsequently, the uni-directional prepreg and the uni-directional prepreg precursor produced in Comparative Example 54 were laminated together in the constitution illustrated in Fig. 14 in such a manner that directions of all of the fibers in the prepreg became same as one another, and the resultant laminate was subjected to the same procedure as in Comparative Example 54, thereby producing a fiber-reinforced composite material. The results of the measurements are shown in Table 18. The 0° flexural modulus and the strength were 99% and 98%, respectively, relative to those in Comparative Example 54, which were good results. The glass transition temperature was also good. Since the non-woven fabric mass content was smaller than that in Example 64, the loss coefficient was decreased compared with that in Example 64.

(Example 72)

A fiber-reinforced composite material was produced in the same manner as in Example 64, except that the fabric weight of the resin film was altered to 4 g/cm$^2$ and the non-woven fabric mass content of the non-woven fabric prepreg was altered to 60%. The results of the measurements are shown in Table 18. The loss coefficient, the 0° flexural modulus and the strength were 148%, 98% and 98%, respectively, relative to those in Comparative Example 54, which were good results. The glass transition temperature was also good. Since X was 22%, the strength was decreased compared with that in Example 64.

(Example 73)

A fiber-reinforced composite material was produced in the same manner as in Example 64, except that the fabric weight of the resin film was altered to 67 g/cm$^2$ and the non-woven fabric mass content of the non-woven fabric prepreg was altered to 10%. The results of the measurements are shown in Table 18. The 0° flexural modulus and the strength were 100% and 96%, respectively, relative to those in Comparative Example 54, which were good results. The glass transition temperature was also good. Since X was 302%, the loss coefficient was decreased compared with that in Example 64.

(Example 74)

The non-woven fabric prepreg produced in Example 64 was attached onto both surfaces of the uni-directional prepreg precursor produced in Comparative Example 54, and the resultant product was allowed to pass through a heat press roll, thereby producing a uni-directional prepreg. Subsequently, the uni-directional prepreg and the uni-directional prepreg precursor produced in Comparative Example 54 were laminated alternately in the construction illustrated in Fig. 8 in such a manner that the directions of the fibers became same as one another, and the resultant laminate was subjected to the same procedure as in Comparative Example 54, thereby producing a fiber-reinforced composite material. The results of the measurements are shown in Table 18. The loss coefficient, the 0° flexural modulus and the strength were 172%, 98% and 90%, respectively, relative to those in Comparative Example 54, which were good results, and the glass transition temperature was also good.

(Comparative Example 55)

A uni-directional prepreg precursor and a fiber-reinforced composite material were produced in the same manner as in Comparative Example 54, except that the epoxy resin composition of Reference Example 1 was used as the component (B). The results of the measurements are shown in Table 27. The loss coefficient was small, which was not desirable.

(Example 75)

A fiber-reinforced composite material was produced in the same manner as in Example 64, except that the uni-directional prepreg precursor produced in Comparative Example 55 was used to produce a uni-directional prepreg. The results of the measurements are shown in Table 18. The loss coefficient, the 0° flexural modulus and the strength were 132%, 98% and 98%, respectively, relative to those in Comparative Example 55, which were good results, and the glass transition temperature was also good. Since the amount of the curing catalyst in the component (B) was 3 parts by mass, the flexural strength was improved slightly compared with that in Example 64.

(Comparative Example 56)

A uni-directional prepreg precursor and a fiber-reinforced composite material were produced in the same manner as in Comparative Example 54, except that the epoxy resin composition of Reference Example 4 was used as the component (B). The results of the measurements are shown in Table 27. The loss coefficient was small, which was not desirable.

(Example 76)

A fiber-reinforced composite material was produced in the same manner as in Example 64, except that the uni-directional prepreg precursor produced in Comparative Example 56 was used to produce a uni-directional prepreg. The results of the measurements are shown in Table 18. The loss coefficient, the 0° flexural modulus and the strength were 132%, 102% and 99%, respectively, relative to those in Comparative Example 56, which were good results, and the glass transition temperature was also good. Since the amount of the curing agent in the component (B) was 1.0 equivalent, the flexural strength was improved slightly compared with that in Example 64.

(Comparative Example 57)

A uni-directional prepreg precursor and a fiber-reinforced composite material were produced in the same manner as in Comparative Example 54, except that the epoxy resin composition of Reference Example 6 was used as the component (B). The results of the measurements are shown in Table 27. The loss coefficient was small, which was not desirable.

(Example 77)

A fiber-reinforced composite material was produced in the same manner as in Example 64, except that the uni-directional prepreg precursor produced in Comparative Example 57 was used to produce a uni-directional prepreg. The results of the measurements are shown in Table 18. The loss coefficient, the 0° flexural modulus and the strength were 132%, 101% and 98%, respectively, relative to those in Comparative Example 57, which were good results, and the glass transition temperature was also good. Since the amount of the curing agent in the component (B) was 0.8 equivalent, the flexural strength was improved slightly compared with that in Example 64.

(Comparative Example 58)

A uni-directional prepreg precursor and a fiber-reinforced composite material were produced in the same manner as in Comparative Example 54, except that the epoxy resin composition of Reference Example 20 was used as the component (B). The results of the measurements are shown in Table 27. The loss coefficient was small, which was not desirable.

(Example 78)

A fiber-reinforced composite material was produced in the same manner as in Example 64, except that the uni-directional prepreg precursor produced in Comparative Example 58 was used to produce a uni-directional prepreg. The results of the measurements are shown in Table 18. The loss coefficient, the 0° flexural modulus and the strength were 131%, 100% and 99%, respectively, relative to those in Comparative Example 58, which were good results, and the glass transition temperature was also good. Since a phenol-novolac-type epoxy resin was used as a portion of the epoxy resin in the component (B), the flexural strength and the glass transition temperature were improved compared with those in Example 64.

(Comparative Example 59)

A uni-directional prepreg precursor and a fiber-reinforced composite material were produced in the same manner as in Comparative Example 54, except that the epoxy resin composition of Reference Example 30 was used as the component (B). The results of the measurements are shown in Table 27. The loss coefficient was small, which was not desirable.

(Example 79)

A fiber-reinforced composite material was produced in the same manner as in Example 64, except that the uni-directional prepreg precursor produced in Comparative Example 59 was used to produce a uni-directional prepreg. The results of the measurements are shown in Table 18. The loss coefficient, the 0° flexural modulus and the strength were 133%, 102% and 98%, respectively, relative to those in Comparative Example 59, which were good results. Since a bisphenol F epoxy resin was used as the epoxy resin in the component (B), the 0° flexural strength was improved but the glass transition temperature was decreased compared with those in Example 64.

(Comparative Example 60)

A uni-directional prepreg precursor and a fiber-reinforced composite material were produced in the same manner as in Comparative Example 54, except that the epoxy resin composition of Reference Example 21 was used as the component (B). The results of the measurements are shown in Table 27. The loss coefficient was small, which was not desirable.

(Example 80)

A fiber-reinforced composite material was produced in the same manner as in Example 64, except that the uni-directional prepreg precursor produced in Comparative Example 60 was used to produce a uni-directional prepreg. The results of the measurements are shown in Table 19. The loss coefficient, the 0° flexural modulus and the strength were 132%, 101% and 99%, respectively, relative to those in Comparative Example 60, which were good results, and the glass transition temperature was also good. Since a cyclopentadiene-type epoxy resin was used as the epoxy resin in the component (B), the glass transition temperature was greatly improved compared with that in Example 64.

(Comparative Example 61)

A uni-directional prepreg precursor and a fiber-reinforced composite material were produced in the same manner as in Comparative Example 54, except that the epoxy resin composition of Reference Example 22 was used as the component (B). The results of the measurements are shown in Table 27. The loss coefficient was small, which was not desirable.

(Example 81)

A fiber-reinforced composite material was produced in the same manner as in Example 64, except that the uni-directional prepreg precursor produced in Comparative Example 61 was used to produce a uni-directional prepreg. The results of the measurements are shown in Table 19. The loss coefficient, the 0° flexural modulus and the strength were 133%, 97% and 98%, respectively, relative to those in Comparative Example 61, which were good results, and the glass transition temperature was also good. Since a polyfunctional amine-type epoxy resin was used as the epoxy resin in the component (B), the flexural strength and the glass transition temperature were greatly improved compared with those in Example 64.

(Comparative Example 62)

A uni-directional prepreg precursor and a fiber-reinforced composite material were produced in the same manner as in Comparative Example 54, except that the epoxy resin composition of Reference Example 23 was used as the component (B). The results of the measurements are shown in Table 27. The loss coefficient was small, which was not desirable.

(Example 82)

A fiber-reinforced composite material was produced in the same manner as in Example 64, except that the uni-directional prepreg precursor produced in Comparative Example 62 was used to produce a uni-directional prepreg. The results of the measurements are shown in Table 19. The loss coefficient, the 0° flexural modulus and the strength were 133%, 101% and 98%, respectively, relative to those in Comparative Example 62, which were good results, and the glass transition temperature was also good. Since an epoxy resin having a biphenyl skeleton was used as the epoxy resin in the component (B), the flexural strength and the glass transition temperature were greatly improved compared with those in Example 64.

(Comparative Example 63)

A uni-directional prepreg precursor and a fiber-reinforced composite material were produced in the same manner as in Comparative Example 54, except that the epoxy resin composition of Reference Example 24 was used as the component (B). The results of the measurements are shown in Table 27. The loss coefficient was small, which was not desirable.

(Example 83)

A fiber-reinforced composite material was produced in the same manner as in Example 64, except that the uni-directional prepreg precursor produced in Comparative Example 63 was used to produce a uni-directional prepreg. The results of the measurements are shown in Table 19. The loss coefficient, the 0° flexural modulus and the strength were 131%, 102% and 98%, respectively, relative to those in Comparative Example 63, which were good results, and the glass transition temperature was also good. Since an isocyanate-modified epoxy resin was used as the epoxy resin in the component (B), the flexural strength was slightly decreased compared with that in Example 64 but the glass transition temperature was improved compared with that in Example 64.

(Comparative Example 64)

A uni-directional prepreg precursor and a fiber-reinforced composite material were produced in the same manner as in Comparative Example 54, except that the epoxy resin composition of Reference Example 25 was used as the component (B). The results of the measurements are shown in Table 28. The loss coefficient was small, which was not desirable.

(Example 84)

A fiber-reinforced composite material was produced in the same manner as in Example 64, except that the uni-directional prepreg precursor produced in Comparative Example 64 was used to produce a uni-directional prepreg. The results of the measurements are shown in Table 19. The loss coefficient, the 0° flexural modulus and the strength were 133%, 98% and 98%, respectively, relative to those in Comparative Example 64, which were good results, and the glass transition temperature was also good. Since 4,4'-diaminodiphenyl sulfone was used as the curing agent in the component (B), the glass transition temperature was improved compared with that in Example 1.

(Comparative Example 65)

A uni-directional prepreg precursor and a fiber-reinforced composite material were produced in the same manner as in Comparative Example 54, except that the epoxy resin composition of Reference Example 27 was used as the component (B). The results of the measurements are shown in Table 28. The loss coefficient was small, which was not desirable.

(Example 85)

A fiber-reinforced composite material was produced in the same manner as in Example 64, except that the uni-directional prepreg precursor produced in Comparative Example 65 was used to produce a uni-directional prepreg. The results of the measurements are shown in Table 19. The loss coefficient, the 0° flexural modulus and the strength were 130%, 99% and 98%, respectively, relative to those in Comparative Example 65, which were good results, and the glass transition temperature was also good.

(Comparative Example 66)

A uni-directional prepreg precursor and a fiber-reinforced composite material were produced in the same manner as in Comparative Example 54, except that the epoxy resin composition of Reference Example 28 was used as the component (B). The results of the measurements are shown in Table 28. The loss coefficient was small, which was not desirable.

(Example 86)

A fiber-reinforced composite material was produced in the same manner as in Example 64, except that the uni-directional prepreg precursor produced in Comparative Example 66 was used to produce a uni-directional prepreg. The results of the measurements are shown in Table 19. The loss coefficient, the 0° flexural modulus and the strength were 130%, 99% and 99%, respectively, relative to those in Comparative Example 66, which were good results, and the glass transition temperature was also good.

(Comparative Example 67)

A uni-directional prepreg precursor and a fiber-reinforced composite material were produced in the same manner as in Comparative Example 54, except that the epoxy resin composition of Reference Example 29 was used as the component (B). The results of the measurements are shown in Table 28. The loss coefficient was small, which was not desirable.

(Example 87)

A fiber-reinforced composite material was produced in the same manner as in Example 64, except that the uni-directional prepreg precursor produced in Comparative Example 67 was used to produce a uni-directional prepreg. The results of the measurements are shown in Table 19. The loss coefficient, the 0° flexural modulus and the strength were 130%, 102% and 97%, respectively, relative to those in Comparative Example 67, which were good results, and the glass transition temperature was also good.

(Comparative Example 68)

A uni-directional prepreg precursor and a fiber-reinforced composite material were produced in the same manner as in Comparative Example 54, except that the epoxy resin composition of Reference Example 31 was used as the component (B). The results of the measurements are shown in Table 28. The loss coefficient was small, which was not desirable.

(Example 88)

A fiber-reinforced composite material was produced in the same manner as in Example 64, except that the uni-directional prepreg precursor produced in Comparative Example 68 was used to produce a uni-directional prepreg. The results of the measurements are shown in Table 19. The loss coefficient, the 0° flexural modulus and the strength were 139%, 101% and 104%, respectively, relative to those in Comparative Example 68, which were good results, and the glass transition temperature was also good. Since a bisphenol-A-type epoxy resin having an epoxy equivalent of 810 was added to the epoxy resin in the component (B), the loss coefficient was improved compared with that in Example 64.

(Comparative Example 69)

A uni-directional prepreg precursor and a fiber-reinforced composite material were produced in the same manner as in Comparative Example 54, except that the epoxy resin composition of Reference Example 32 was used as the component (B). The results of the measurements are shown in Table 28. The loss coefficient was small, which was not desirable.

(Example 89)

A fiber-reinforced composite material was produced in the same manner as in Example 64, except that the uni-directional prepreg precursor produced in Comparative Example 69 was used to produce a uni-directional prepreg. The results of the measurements are shown in Table 20. The loss coefficient, the 0° flexural modulus and the strength were 133%, 98% and 104%, respectively, relative to those in Comparative Example 69, which were good results, and the glass transition temperature was also good. Since a bisphenol-A-type epoxy resin having an epoxy equivalent of 1930 was added to the epoxy resin in the component (B), the loss coefficient was improved compared with that in Example 64.

(Comparative Example 70)

A uni-directional prepreg precursor and a fiber-reinforced composite material were produced in the same manner as in Comparative Example 54, except that the epoxy resin composition of Reference Example 33 was used as the component (B). The results of the measurements are shown in Table 28. The loss coefficient was small, which was not desirable.

(Example 90)

A fiber-reinforced composite material was produced in the same manner as in Example 64, except that the uni-directional prepreg precursor produced in Comparative Example 70 was used to produce a uni-directional prepreg. The results of the measurements are shown in Table 20. The loss coefficient, the 0° flexural modulus and the strength were 138%, 100% and 103%, respectively, relative to those in Comparative Example 70, which were good results, and the glass transition temperature was also good. Since a bisphenol-A-type epoxy resin having an epoxy equivalent of 4000 was added to the epoxy resin in the component (B), the loss coefficient was improved compared with that in Example 64.

(Comparative Example 71)

A uni-directional prepreg precursor and a fiber-reinforced composite material were produced in the same manner as in Comparative Example 54, except that the epoxy resin composition of Reference Example 34 was used as the component (B). The results of the measurements are shown in Table 28. The loss coefficient was small, which was not desirable.

(Example 91)

A fiber-reinforced composite material was produced in the same manner as in Example 64, except that the uni-directional prepreg precursor produced in Comparative Example 71 was used to produce a uni-directional prepreg. The results of the measurements are shown in Table 20. The loss coefficient, the 0° flexural modulus and the strength were 129%, 100% and 103%, respectively, relative to those in Comparative Example 71, which were good results, and the glass transition temperature was also good. Since a bisphenol-F-type epoxy resin was added to the epoxy resin in the component (B), the strength was improved compared with that in Example 64.

(Comparative Example 72)

A uni-directional prepreg precursor and a fiber-reinforced composite material were produced in the same manner as in Comparative Example 54, except that the epoxy resin composition of Reference Example 35 was used as the component (B). The results of the measurements are shown in Table 28. The loss coefficient was small, which was not desirable.

(Example 92)

A fiber-reinforced composite material was produced in the same manner as in Example 64, except that the uni-directional prepreg precursor produced in Comparative Example 72 was used to produce a uni-directional prepreg. The results of the measurements are shown in Table 20. The loss coefficient, the 0° flexural modulus and the strength were 146%, 102% and 103%, respectively, relative to those in Comparative Example 72, which were good results, and the glass transition temperature was also good. Since a bisphenol-F-type epoxy resin having an epoxy equivalent of 800 was added to the epoxy resin in the component (B), the loss coefficient was improved compared with that in Example 91.

(Comparative Example 73)

A uni-directional prepreg precursor and a fiber-reinforced composite material were produced in the same manner as in Comparative Example 54, except that the epoxy resin composition of Reference Example 36 was used as the component (B). The results of the measurements are shown in Table 29. The loss coefficient was small, which was not desirable.

(Example 93)

A fiber-reinforced composite material was produced in the same manner as in Example 64, except that the uni-directional prepreg precursor produced in Comparative Example 73 was used to produce a uni-directional prepreg. The results of the measurements are shown in Table 20. The loss coefficient, the 0° flexural modulus and the strength were 137%, 98% and 102%, respectively, relative to those in Comparative Example 73, which were good results, and the glass transition temperature was also good. Since a bisphenol-F-type epoxy resin having an epoxy equivalent of 2270 was added to the epoxy resin in the component (B), the loss coefficient was improved compared with that in Example 91.

(Comparative Example 74)

A uni-directional prepreg precursor and a fiber-reinforced composite material were produced in the same manner as in Comparative Example 54, except that the epoxy resin composition of Reference Example 37 was used as the component (B). The results of the measurements are shown in Table 29. The loss coefficient was small, which was not desirable.

(Example 94)

A fiber-reinforced composite material was produced in the same manner as in Example 64, except that the uni-directional prepreg precursor produced in Comparative Example 74 was used to produce a uni-directional prepreg. The results of the measurements are shown in Table 20. The loss coefficient, the 0° flexural modulus and the strength were 145%, 100% and 103%, respectively, relative to those in Comparative Example 74, which were good results, and the glass transition temperature was also good. Since a bisphenol-F-type epoxy resin having an epoxy equivalent of 4400 was added to the epoxy resin in the component (B), the loss coefficient was improved compared with that in Example 53.

(Comparative Example 75)

A uni-directional prepreg precursor and a fiber-reinforced composite material were produced in the same manner as in Comparative Example 54, except that the carbon fiber (C-3) was used as the component (C). The results of the measurements are shown in Table 29. The loss coefficient was small, which was not desirable.

(Example 95)

A fiber-reinforced composite material was produced in the same manner as in Example 64, except that the uni-directional prepreg precursor produced in Comparative Example 75 was used. The results of the measurements are shown in Table 20. The loss coefficient, the 0° flexural modulus and the strength were 125%, 99% and 99%, respectively, relative to those in Comparative Example 75, which were good results, and the glass transition temperature was also good. Since (C-3) was used as the component (C), the balance among the loss coefficient, the modulus and the strength was good, as in the case of Example 42.

(Comparative Example 76)

A uni-directional prepreg precursor and a fiber-reinforced composite material were produced in the same manner as in Comparative Example 54, except that the carbon fiber (C-4) was used as the component (C). The results of the measurements are shown in Table 29. The loss coefficient was small, which was not desirable.

(Example 96)

A fiber-reinforced composite material was produced in the same manner as in Example 64, except that the uni-directional prepreg precursor produced in Comparative Example 76 was used. The results of the measurements are shown in Table 20. The loss coefficient, the 0° flexural modulus and the strength were 122%, 100% and 101%, respectively, relative to those in Comparative Example 76, which were good results, and the glass transition temperature was also good.

(Comparative Example 77)

A uni-directional prepreg precursor and a fiber-reinforced composite material were produced in the same manner as in Comparative Example 54, except that the carbon fiber (C-5) was used as the component (C). The results of the measurements are shown in Table 29. The loss coefficient was small, which was not desirable.

(Example 97)

A fiber-reinforced composite material was produced in the same manner as in Example 64, except that the uni-directional prepreg precursor produced in Comparative Example 77 was used. The results of the measurements are shown in Table 20. The loss coefficient, the 0° flexural modulus and the strength were 119%, 101% and 100%, respectively, relative to those in Comparative Example 77, which were good results, and the glass transition temperature was also good.

(Comparative Example 78)

A uni-directional prepreg precursor and a fiber-reinforced composite material were produced in the same manner as in Comparative Example 54, except that the carbon fiber (C-6) was used as the component (C). The results of the measurements are shown in Table 29. The loss coefficient was small, which was not desirable.

(Example 98)

A fiber-reinforced composite material was produced in the same manner as in Example 64, except that the uni-directional prepreg precursor produced in Comparative Example 78 was used. The results of the measurements are shown in Table 20. The loss coefficient, the 0° flexural modulus and the strength were 117%, 98% and 100%, respectively, relative to those in Comparative Example 78, which were good results, and the glass transition temperature was also good.

(Comparative Example 79)

A fiber-reinforced composite material was produced in the same manner as in Example 64, except that the polyethylene non-woven fabric (A-19) was used as the component (A). The results of the measurements are shown in Table 29. The 0° flexural modulus and the strength were 99% and 98%, respectively, relative to those in Comparative Example 54, which were good results, and the glass transition temperature was also good. However, since the value of tanδ of the non-woven fabric was small, the loss coefficient was 110% relative to that in Comparative Example 54 and the improvement effect was poor, which was not desirable.

(Comparative Example 80)

A fiber-reinforced composite material was produced in the same manner as in Example 64, except that the polyurethane non-woven fabric (A-8) was used as the component (A) and the non-woven fabric mass content of the non-woven fabric prepreg was altered to 45%. The results of the measurements are shown in Table 29. Since (A-8) and the component (B) were compatible with each other, the loss coefficient, the 0° flexural modulus and the strength were 112%, 87% and 95%, respectively, relative to those in Comparative Example 54, which was not desirable. Further, the glass transition temperature was 91°C, which was not desirable.

(Comparative Example 81)

Six plies of the carbon fiber fabrics (C-2) were laminated together in a plate-like cavity having a size of 300 mm long × 300 mm wide × 2 mm thick of a mold, and the resultant laminate was then mold-clamped using a pressing device. Subsequently, the pressure in the inside of the mold that was held at 100°C was reduced to a pressure lower than the atmospheric pressure by 0.1 MPa using a vacuum pump. The epoxy resin of Reference Example 13, which had been warmed to 50°C in advance, was mixed with a mixed liquid of a curing agent and a curing catalyst using a resin injection device, and the resultant mixture was injected into the cavity at a pressure of 0.2 MPa. After the initiation of the injection of the epoxy resin composition, the epoxy resin composition was cured at 100°C for 30 minutes, and then the mold was opened, thereby removing the resultant fiber-reinforced composite material precursor from the mold. The resultant fiber-reinforced composite material precursor was post-cured in an oven, which had been pre-heated to 130°C, for 1 hour, thereby producing a fiber-reinforced composite material. The results of the measurements are shown in Table 30. The loss coefficient of the fiber-reinforced composite material was insufficient.

(Example 100)

Six plies of the carbon fiber fabrics (C-2) and 5 plies of the polyamide polyether elastomer non-woven fabrics (A-3) were laminated together in a plate-like cavity having a size of 300 mm long × 300 mm wide × 2 mm thick of a mold in such a manner that one ply of (A-3) was intercalated between every two plies of (C-2), and the resultant laminate was then mold-clamped using a pressing device. Subsequently, the pressure in the inside of the mold that was held at 100°C was reduced to a pressure lower than the atmospheric pressure by 0.1 MPa using a vacuum pump. The epoxy resin of Reference Example 13, which had been warmed to 50°C in advance, was mixed with a mixed liquid of a curing agent and a curing catalyst using a resin injection device, and the resultant mixture was injected into the cavity at a pressure of 0.2 MPa. After the initiation of the injection of the epoxy resin composition, the epoxy resin composition was cured at 100°C for 30 minutes, and then the mold was opened, thereby removing the resultant fiber-reinforced composite material precursor from the mold. The resultant fiber-reinforced composite material precursor was post-cured in an oven, which had been pre-heated to 130°C, for 1 hour, thereby producing a fiber-reinforced composite material. The results of the measurements are shown in Table 30. The loss coefficient and the 0° flexural strength were 196% and 98%, respectively, relative to those in Comparative Example 81, which were good results. Further, the glass transition temperature was also good.

(Example 101)

A fiber-reinforced composite material was produced in the same manner as in Example 42, except that the polypropylene non-woven fabric (A-20) was used as the component (A). The results of the measurements are shown in Table 31. The loss coefficient, the 0° flexural modulus and the strength were 175%, 99% and 97%, respectively, relative to those in Comparative Example 37, which were good results, and the glass transition temperature was also good. In addition, a tube-like fiber-reinforced composite material was produced using the uni-directional prepreg by the above-mentioned method. The resultant tube-like fiber-reinforced composite material was weighed, and it was found that the weight of the tube-like fiber-reinforced composite material was 79.0 g as shown in Table 31.

(Example 102)

A fiber-reinforced composite material was produced in the same manner as in Example 64, except that the polypropylene non-woven fabric (A-20) was used as the component (A). The results of the measurements are shown in Table 32. The loss coefficient, the 0° flexural modulus and the strength were 130%, 99% and 98%, respectively, relative to those in Comparative Example 54, which were good results, and the glass transition temperature was also good. In addition, a tube-like fiber-reinforced composite material was produced using the uni-directional prepreg by the above-mentioned method. The resultant tube-like fiber-reinforced composite material was weighed, and it was found that the weight of the tube-like fiber-reinforced composite material was 79.3 g as shown in Table 32.

(Comparative Example 82)

Six plies of the carbon fiber fabrics (C-2) were laminated together in a plate-like cavity having a size of 300 mm long × 300 mm wide × 2 mm thick of a mold, and the resultant laminate was then mold-clamped using a pressing device. Subsequently, the pressure in the inside of the mold that was held at 100°C was reduced to a pressure lower than the atmospheric pressure by 0.1 MPa using a vacuum pump. The epoxy resin of Reference Example 26, which had been warmed to 50°C in advance, was mixed with a mixed liquid of a curing agent and a curing catalyst using a resin injection device, and the resultant mixture was injected into the cavity at a pressure of 0.2 MPa. After the initiation of the injection of the epoxy resin composition, the epoxy resin composition was cured at 100°C for 30 minutes, and then the mold was opened, thereby removing the resultant fiber-reinforced composite material precursor from the mold. The resultant fiber-reinforced composite material precursor was post-cured in an oven, which had been pre-heated to 130°C, for 1 hour, thereby producing a fiber-reinforced composite material. The results of the measurements are shown in Table 33. The loss coefficient of the fiber-reinforced composite material was insufficient.

(Example 103)

Six plies of the carbon fiber fabrics (C-2) and 2 plies of the polypropylene non-woven fabrics (A-12) were laminated together in a plate-like cavity having a size of 300 mm long × 300 mm wide × 2 mm thick of a mold in such a manner that one ply of (A-12) was intercalated between every two plies of (C-2), and the resultant laminate was then mold-clamped using a pressing device. Subsequently, the pressure in the inside of the mold that was held at 100°C was reduced to a pressure lower than the atmospheric pressure by 0.1 MPa using a vacuum pump. The epoxy resin of Reference Example 26, which had been warmed to 50°C in advance, was mixed with a mixed liquid of a curing agent and a curing catalyst using a resin injection device, and the resultant mixture was injected into the cavity at a pressure of 0.2 MPa. After the initiation of the injection of the epoxy resin composition, the epoxy resin composition was cured at 100°C for 30 minutes, and then the mold was opened, thereby removing the resultant fiber-reinforced composite material precursor from the mold. The resultant fiber-reinforced composite material precursor was post-cured in an oven, which had been pre-heated to 130°C, for 1 hour, thereby producing a fiber-reinforced composite material. The results of the measurements are shown in Table 33. The loss coefficient and the 0° flexural strength were 132% and 95%, respectively, relative to those in Comparative Example 82, which were good results. The Tg was also good.

[Table 1]

| | | | Unit | Reference Examples | | | | | | | | |
| --- | --- | --- | --- | --- | --- | --- | --- | --- | --- | --- | --- | --- |
| | | | | 1 | 2 | 3 | 4 | 5 | 6 | 7 | 8 | 9 |
| components (B) and (D) | Epoxy resin | B-1 | Part by mass | 50 | 50 | 50 | 50 | 50 | 50 | 20 | – | 50 |
| | | B-2 | | 50 | 50 | 50 | 50 | 50 | 50 | 30 | 50 | – |
| | | B-3 | | – | – | – | – | – | – | – | – | – |
| | | B-4 | | – | – | – | – | – | – | – | – | – |
| | | B-5 | | – | – | – | – | – | – | 50 | – | – |
| | | B-6 | | – | – | – | – | – | – | – | 50 | – |
| | | B-7 | | – | – | – | – | – | – | – | – | 50 |
| | | B-8 | | – | – | – | – | – | – | – | – | – |
| | | B-9 | | – | – | – | – | – | – | – | – | – |
| | Curing agent | B-16 | Equivalent | 1.0 | 1.2 | 1.2 | 1.0 | 0.8 | 0.8 | 1.0 | 1.0 | 1.0 |
| | | B-17 | | – | – | – | – | – | – | – | – | – |
| | | B-18 | | – | – | – | – | – | – | – | – | – |
| | Curing catalyst | B-19 | Part by mass | 3 | 4 | 3 | 4 | 3 | 4 | 3 | 3 | 3 |
| | | B-20 | | – | – | – | – | – | – | – | – | – |
| | Others | Polyvinyl formal | Part by mass | – | – | – | – | – | – | – | – | – |
| | | S-B-M Copolymer | | – | – | – | – | – | – | – | – | – |
| | | Polyether sulfone | | – | – | – | – | – | – | – | – | – |
| Curing conditions for components (B)(D) | | | – | 130°C x 90 min. | 130°C x 90 min. | 130°C x 90 min. | 130°C x 90 min. | 130°C x 90 min. | 130°C x 90 min. | 130°C x 90 min. | 130°C x 90 min. | 130°C x 90 min. |
| Glass transition temperature of cured products of components (B) and (D) or components (F) and (H) | | | °C | 118 | 118 | 120 | 118 | 115 | 112 | 134 | 138 | 170 |
| Exothermic peak of cured products of components (B) and (D) or components (F) and (H) | | | – | None | None | None | None | None | None | None | None | None |

Table 2

| | | | Unit | Reference Examples | | | | | | | | |
|---|---|---|---|---|---|---|---|---|---|---|---|---|
| | | | | 10 | 11 | 12 | 13 | 14 | 15 | 16 | 17 | 18 |
| components (B) and (D) | Epoxy resin | B-1 | Part by mass | – | – | 50 | – | 40 | 40 | 50 | 30 | 30 |
| | | B-2 | | 50 | 50 | – | 100 | 60 | 30 | – | 70 | 70 |
| | | B-3 | | – | – | – | – | – | – | – | – | – |
| | | B-4 | | – | – | – | – | – | 30 | – | – | – |
| | | B-5 | | – | – | – | – | – | – | – | – | – |
| | | B-6 | | – | – | – | – | – | – | – | – | – |
| | | B-7 | | – | – | 50 | – | – | – | 50 | – | – |
| | | B-8 | | 50 | – | – | – | – | – | – | – | – |
| | | B-9 | | – | 50 | – | – | – | – | – | – | – |
| | Curing agent | B-16 | Equivalent | 1.0 | 1.0 | – | – | 1.0 | 1.0 | – | 1.0 | 1.0 |
| | | B-17 | | – | – | 1.0 | – | – | – | 1.0 | – | – |
| | | B-18 | | – | – | – | 1.0 | – | – | – | – | – |
| | Curing catalyst | B-19 | Part by mass | 3 | 3 | – | – | 3 | 3 | – | 3 | 3 |
| | | B-20 | | – | – | – | 3 | – | – | – | – | – |
| | Others | Polyvinyl formal | Part by mass | – | – | – | – | 3 | – | – | 2 | 5 |
| | | S-B-M Copolymer | | – | – | – | – | – | 3 | – | – | – |
| | | Polyether sulfone | | – | – | – | – | – | – | 3 | – | – |
| Curing conditions for components (B) and (D) | | | – | 130°C x 90 min. | 130°C x 90 min. | 180°C x 120 min. | 130°C x 90 min. | 130°C x 90 min. | 130°C x 90 min. | 180°C x 120 min. | 130°C x 90 min. | 130°C x 90 min. |
| Glass transition temperature of cured products of components (B) and (D) or components (F) and (H) | | | °C | 143 | 133 | 196 | 145 | 120 | 105 | 197 | 123 | 122 |
| Exothermic peak of cured products of components (B) and (D) or components (F) and (H) | | | – | None | None | None | None | None | None | None | None | None |

Table 3

| | | | Unit | Reference Examples | | | | | | | |
|---|---|---|---|---|---|---|---|---|---|---|---|
| | | | | 19 | 20 | 21 | 22 | 23 | 24 | 25 | 26 |
| Components (B) and (D) | Epoxy resin | B-1 | Part by mass | – | 20 | – | 50 | – | – | 50 | – |
| | | B-2 | | – | 30 | 50 | – | 50 | 50 | – | 100 |
| | | B-3 | | 65 | – | – | – | – | – | – | – |
| | | B-4 | | 35 | – | – | – | – | – | – | – |
| | | B-5 | | – | 50 | – | – | – | – | – | – |
| | | B-6 | | – | – | 50 | – | – | – | – | – |
| | | B-7 | | – | – | – | 50 | – | – | 50 | – |
| | | B-8 | | – | – | – | – | 50 | – | – | – |
| | | B-9 | | – | – | – | – | – | 50 | – | – |
| | Curing agent | B-16 | Equivalent | 1.0 | 1.2 | 1.2 | 1.2 | 1.2 | 1.2 | – | – |
| | | B-17 | | – | – | – | – | – | – | 1.2 | – |
| | | B-18 | | – | – | – | – | – | – | – | 1.2 |
| | Curing catalyst | B-19 | Part by mass | 3 | 4 | 4 | 4 | 4 | 4 | – | – |
| | | B-20 | | – | – | – | – | – | – | – | 3 |
| | Others | Polyvinyl formal | Part by mass | – | – | – | – | – | – | – | – |
| | | S-B-M Copolymer | | – | – | – | – | – | – | – | – |
| | | Polyether sulfone | | – | – | – | – | – | – | – | – |
| Curing conditions for components (B) and (D) | | | – | 130°C x 90 min. | 130°C x 90 min. | 130°C x 90 min. | 130°C x 90 min. | 130°C x 90 min. | 130°C x 90 min. | 180°C x 120 min. | 130°C x 90 min. |
| Glass transition temperature of cured products of components (B) and (D) or components (F) and (H) | | | °C | 93 | 134 | 138 | 170 | 143 | 133 | 196 | 145 |
| Exothermic peak of cured products of components (B) and (D) or components (F) and (H) | | | – | None | None | None | None | None | None | None | None |

Table 4

| | | | Unit | Reference Examples | | | | | |
|---|---|---|---|---|---|---|---|---|---|
| | | | | 27 | 28 | 29 | 30 | 31 | 32 |
| components (B) and (D) | Epoxy resin | B-1 | Part by mass | 40 | 40 | 50 | – | – | – |
| | | B-2 | | 60 | 30 | – | – | 55 | 60 |
| | | B-3 | | – | – | – | 65 | – | – |
| | | B-4 | | – | 30 | – | 35 | – | – |
| | | B-5 | | – | – | – | – | – | – |
| | | B-6 | | – | – | – | – | – | – |
| | | B-7 | | – | – | 50 | – | – | – |
| | | B-8 | | – | – | – | – | – | – |
| | | B-9 | | – | – | – | – | – | – |
| | | B-10 | | – | – | – | – | 45 | – |
| | | B-11 | | – | – | – | – | – | 40 |
| | | B-12 | | – | – | – | – | – | – |
| | | B-13 | | – | – | – | – | – | – |
| | | B-14 | | – | – | – | – | – | – |
| | | B-15 | | – | – | – | – | – | – |
| | Curing agent | B-16 | Equivalent | 1.0 | 1.0 | – | 1.2 | 1.2 | 1.2 |
| | | B-17 | | – | – | 1.2 | – | – | – |
| | | B-18 | | – | – | – | – | – | – |
| | Curing catalyst | B-19 | Part by mass | 4 | 4 | – | 4 | 4 | 4 |
| | | B-20 | | – | – | – | – | – | – |
| | Others | Polyvinyl formal | Part by mass | 3 | – | – | – | – | – |
| | | S-B-M Copolymer | | – | 3 | – | – | – | – |
| | | Polyether sulfone | | – | – | 3 | – | – | – |
| Curing conditions for components (B) and (D) | | | – | 130°C x 90 min. | 130°C x 90 min. | 180°C x 120 min. | 130°C x 90 min. | 130°C x 90 min. | 130°C x 90 min. |

EP 2 596 947 B1

54

| | | | | | | | |
|---|---|---|---|---|---|---|---|
| Glass transition temperature of cured products of components (B) and (D) or components (F) and (H) | °C | 115 | 105 | 197 | 93 | 116 | 115 |
| Exothermic peak of cured products of components (B) and (D) or components (F) and (H) | – | None | None | None | None | None | None |

Table 5

| | | | Unit | Reference Examples | | | | |
|---|---|---|---|---|---|---|---|---|
| | | | | 33 | 34 | 35 | 36 | 37 |
| components (B) and (D) | Epoxy resin | B-1 | Part by mass | – | 50 | 45 | 40 | 35 |
| | | B-2 | | 65 | 20 | 25 | 30 | 35 |
| | | B-3 | | – | 30 | – | – | – |
| | | B-4 | | – | – | – | – | – |
| | | B-5 | | – | – | – | – | – |
| | | B-6 | | – | – | – | – | – |
| | | B-7 | | – | – | – | – | – |
| | | B-8 | | – | – | – | – | – |
| | | B-9 | | – | – | – | – | – |
| | | B-10 | | – | – | – | – | – |
| | | B-11 | | – | – | – | – | – |
| | | B-12 | | 35 | – | – | – | – |
| | | B-13 | | – | – | 30 | – | – |
| | | B-14 | | – | – | – | 30 | – |
| | | B-15 | | – | – | – | – | 30 |
| | Curing agent | B-16 | Equivalent | 1.2 | 1.2 | 1.2 | 1.2 | 1.2 |
| | | B-17 | | – | – | – | – | – |
| | | B-18 | | – | – | – | – | – |
| | Curing catalyst | B-19 | Part by mass | 4 | 4 | 4 | 4 | 4 |
| | | B-20 | | – | – | – | – | – |
| | Others | Polyvinyl formal | Part by mass | – | – | – | – | – |
| | | S-B-M Copolymer | | – | – | – | – | – |
| | | Polyether sulfone | | – | – | – | – | – |
| Curing conditions for components (B) and (D) | | | – | 130°C x 90 min. | 130°C x 90 min. | 130°C x 90 min. | 130°C x 90 min. | 130°C x 90 min. |

| | | | | | | |
|---|---|---|---|---|---|---|
| Glass transition temperature of cured products of components (B) and (D) or components (F) and (H) | °C | 115 | 104 | 103 | 103 | 102 |
| Exothermic peak of cured products of components (B) and (D) or components (F) and (H) | – | None | None | None | None | None |

Table 6

| | | | | Reference Examples | | | | | | | |
|---|---|---|---|---|---|---|---|---|---|---|---|
| | | | | 38 | 39 | 40 | 41 | 42 | 43 | 44 | 45 |
| Resin composition | components (A) and (E) | A-1 | Mass% | 15 | 15 | – | – | – | – | 15 | 15 |
| | | A-2 | | – | – | – | – | – | – | – | – |
| | | A-3 | | – | – | – | – | – | – | – | – |
| | | A-4 | | – | – | – | – | – | – | – | – |
| | | A-5 | | – | – | 15 | – | – | – | – | – |
| | | A-6 | | – | – | – | – | – | – | – | – |
| | | A-7 | | – | – | – | 15 | – | – | – | – |
| | | A-8 | | – | – | – | – | 15 | – | – | – |
| | | A-9 | | – | – | – | – | – | 15 | – | – |
| | | A-10 | | – | – | – | – | – | – | – | – |
| | | A-11 | | – | – | – | – | – | – | – | – |
| | components (B) and (D) | Reference Example 1 | | 85 | – | 85 | 85 | 85 | 85 | – | – |
| | | Reference Example 2 | | – | 85 | – | – | – | – | – | – |
| | | Reference Example 3 | | – | – | – | – | – | – | – | – |
| | | Reference Example 4 | | – | – | – | – | – | – | 85 | – |
| | | Reference Example 5 | | – | – | – | – | – | – | – | 85 |
| | | Reference Example 7 | | – | – | – | – | – | – | – | – |
| | | Reference Example 8 | | – | – | – | – | – | – | – | – |
| | | Reference Example 9 | | – | – | – | – | – | – | – | – |
| | | Reference Example 10 | | – | – | – | – | – | – | – | – |
| | | Reference Example 11 | | – | – | – | – | – | – | – | – |
| | | Reference Example 12 | | – | – | – | – | – | – | – | – |
| | | Reference Example 13 | | – | – | – | – | – | – | – | – |
| Glass transition temperature of cured product | | | °C | -37, 116 | -36, 117 | -45, 116 | -60, 116 | 95 | 40, 116 | -38, 116 | -38, 112 |

Table 7

| | | | | Reference Examples | | | | | | | |
|---|---|---|---|---|---|---|---|---|---|---|---|
| | | | | 46 | 47 | 48 | 49 | 50 | 51 | 52 | 53 |
| Resin composition | components (A) and (E) | A-1 | Mass% | 15 | 15 | 15 | 15 | 15 | 15 | 15 | 15 |
| | | A-2 | | – | – | – | – | – | – | – | – |
| | | A-3 | | – | – | – | – | – | – | – | – |
| | | A-4 | | – | – | – | – | – | – | – | – |
| | | A-5 | | – | – | – | – | – | – | – | – |
| | | A-6 | | – | – | – | – | – | – | – | – |
| | | A-7 | | – | – | – | – | – | – | – | – |
| | | A-8 | | – | – | – | – | – | – | – | – |
| | | A-9 | | – | – | – | – | – | – | – | – |
| | | A-10 | | – | – | – | – | – | – | – | – |
| | | A-11 | | – | – | – | – | – | – | – | – |
| | components (B) and (D) | Reference Example 1 | | – | – | – | – | – | – | – | – |
| | | Reference Example 2 | | – | – | – | – | – | – | – | — |
| | | Reference Example 3 | | 85 | – | – | – | – | – | – | – |
| | | Reference Example 4 | | – | – | – | – | – | – | – | – |
| | | Reference Example 5 | | – | – | – | – | – | – | – | – |
| | | Reference Example 7 | | – | 85 | – | – | – | – | – | – |
| | | Reference Example 8 | | – | – | 85 | – | – | – | – | – |
| | | Reference Example 9 | | – | – | – | 85 | – | – | – | – |
| | | Reference Example 10 | | – | – | – | – | 85 | – | – | – |
| | | Reference Example 11 | | – | – | – | – | – | 85 | – | – |
| | | Reference Example 12 | | – | – | – | – | – | – | 85 | – |
| | | Reference Example 13 | | – | – | – | – | – | – | – | 85 |
| Glass transition temperature of cured product | | | °C | -39, 115 | -37, 133 | -38, 136 | -39, 170 | -38, 140 | -38, 132 | -37, 195 | -37, 146 |

Table 8

| | | | | Reference Examples | | | | | | | | | | | |
|---|---|---|---|---|---|---|---|---|---|---|---|---|---|---|---|
| | | | | 54 | 55 | 56 | 57 | 58 | 59 | 60 | 61 | 62 | 63 | 64 | 65 | 66 |
| Resin composition | components (A) and (E) | A-1 | Mass% | 15 | 15 | 15 | 15 | 15 | 15 | 15 | 15 | 15 | 15 | 15 | 15 | 15 |
| | | A-2 | | – | – | – | – | – | – | – | – | – | – | – | – | – |
| | | A-3 | | – | – | – | – | – | – | – | – | – | – | – | – | – |
| | | A-4 | | – | – | – | – | – | – | – | – | – | – | – | – | – |
| | | A-5 | | – | – | – | – | – | – | – | – | – | – | – | – | – |
| | | A-6 | | – | – | – | – | – | – | – | – | – | – | – | – | – |
| | | A-7 | | – | – | – | – | – | – | – | – | – | – | – | – | – |
| | | A-8 | | – | – | – | – | – | – | – | – | – | – | – | – | – |
| | | A-9 | | – | – | – | – | – | – | – | – | – | – | – | – | – |
| | | A-10 | | – | – | – | – | – | – | – | – | – | – | – | – | – |
| | | A-11 | | – | – | – | – | – | – | – | – | – | – | – | – | – |
| | components (B) and (D) | Reference Example 14 | | 85 | – | – | – | – | – | – | – | – | – | – | – | – |
| | | Reference Example 15 | | – | 85 | – | – | – | – | – | – | – | – | – | – | – |
| | | Reference Example 16 | | – | – | 85 | – | – | – | – | – | – | – | – | – | – |
| | | Reference Example 17 | | – | – | – | 85 | – | – | – | – | – | – | – | – | – |
| | | Reference Example 18 | | – | – | – | – | 85 | – | – | – | – | – | – | – | – |
| | | Reference Example 19 | | – | – | – | – | – | 85 | – | – | – | – | – | – | – |
| | | Reference Example 31 | | – | – | – | – | – | – | 85 | – | – | – | – | – | – |
| | | Reference Example 32 | | – | – | – | – | – | – | – | 85 | – | – | – | – | – |
| | | Reference Example 33 | | – | – | – | – | – | – | – | – | 85 | – | – | – | – |
| | | Reference Example 34 | | – | – | – | – | – | – | – | – | – | 85 | – | – | – |

| | °C | | | | | | | | | | | | |
|---|---|---|---|---|---|---|---|---|---|---|---|---|---|
| Reference Example 35 | – | – | 85 | – | – | – | – | – | – | – | – | – | – |
| Reference Example 36 | – | 85 | – | – | – | – | – | – | – | – | – | – | – |
| Reference Example 37 | 85 | – | – | – | – | – | – | – | – | – | – | – | |
| Glass transition temperature of cured product | -37, 101 | -36, 104 | -36, 103 | -37, 105 | -38, 114 | -37, 114 | -38, 116 | -38, 94 | -38, 115 | -38, 118 | -39, 195 | -38, 105 | -39, 115 |

Table 9

| | | | | Reference Examples | | | | | | | | | | | |
|---|---|---|---|---|---|---|---|---|---|---|---|---|---|---|---|
| | | | | 67 | 68 | 69 | 70 | 71 | 72 | 73 | 74 | 75 | 76 | 77 | 78 |
| Resin composition | components (A) and (E) | A-12 | Mass% | 15 | – | – | 15 | 15 | 15 | 15 | 15 | 15 | 15 | 15 | 15 |
| | | A-13 | | – | – | – | – | – | – | – | – | – | – | – | – |
| | | A-14 | | – | – | – | – | – | – | – | – | – | – | – | – |
| | | A-15 | | – | 15 | – | – | – | – | – | – | – | – | – | – |
| | | A-16 | | – | – | 15 | – | – | – | – | – | – | – | – | – |
| | | A-17 | | – | – | – | – | – | – | – | – | – | – | – | – |
| | | A-18 | | – | – | – | – | – | – | – | – | – | – | – | – |
| | | A-19 | | – | – | – | – | – | – | – | – | – | – | – | – |
| | components (B) and (D) | Reference Example 2 | | 85 | 85 | 85 | – | – | – | – | – | – | – | – | – |
| | | Reference Example 1 | | – | – | – | 85 | – | – | – | – | – | – | – | – |
| | | Reference Example 4 | | – | – | – | – | 85 | – | – | – | – | – | – | – |
| | | Reference Example 6 | | – | – | – | – | – | 85 | – | – | – | – | – | – |
| | | Reference Example 20 | | – | – | – | – | – | – | 85 | – | – | – | – | – |
| | | Reference Example 21 | | – | – | – | – | – | – | – | 85 | – | – | – | – |
| | | Reference Example 22 | | – | – | – | – | – | – | – | – | 85 | – | – | – |
| | | Reference Example 23 | | – | – | – | – | – | – | – | – | – | 85 | – | – |
| | | Reference Example 24 | | – | – | – | – | – | – | – | – | – | – | 85 | – |
| | | Reference Example 25 | | – | – | – | – | – | – | – | – | – | – | – | 85 |
| Glass transition temperature of cured product | | | °C | -4, 116 | -5, 116 | -15, 116 | -3, 115 | -3, 116 | -4, 112 | -3, 136 | -3, 136 | -4, 170 | -3, 140 | -3, 132 | -4, 195 |

Table 10

| | | | Reference Examples | | | | | | | | | | | |
|---|---|---|---|---|---|---|---|---|---|---|---|---|---|---|
| | | | 79 | 80 | 81 | 82 | 83 | 84 | 85 | 86 | 87 | 88 | 89 | 90 |
| Resin composition | components (A) and (E) | A-12 | 15 | 15 | 15 | 15 | 15 | 15 | 15 | 15 | 15 | 15 | 15 | 15 |
| | | A-13 | – | – | – | – | – | – | – | – | – | – | – | – |
| | | A-14 | – | – | – | – | – | – | – | – | – | – | – | – |
| | | A-15 | – | – | – | – | – | – | – | – | – | – | – | – |
| | | A-16 | – | – | – | – | – | – | – | – | – | – | – | – |
| | | A-17 | – | – | – | – | – | – | – | – | – | – | – | – |
| | | A-18 | – | – | – | – | – | – | – | – | – | – | – | – |
| | | A-19 | – | – | – | – | – | – | – | – | – | – | – | – |
| | | A-20 | – | – | – | – | – | – | – | – | – | – | – | – |
| | components (B) and (D) | Reference Example 26 | 85 | – | – | – | – | – | – | – | – | – | – | – |
| | | Reference Example 27 | – | 85 | – | – | – | – | – | – | – | – | – | – |
| | | Reference Example 28 | – | – | 85 | – | – | – | – | – | – | – | – | – |
| | | Reference Example 29 | – | – | – | 85 | – | – | – | – | – | – | – | – |
| | | Reference Example 30 | – | – | – | – | 85 | – | – | – | – | – | – | – |
| | | Reference Example 31 | – | – | – | – | – | 85 | – | – | – | – | – | – |
| | | Reference Example 32 | – | – | – | – | – | – | 85 | – | – | – | – | – |
| | | Reference Example 33 | – | – | – | – | – | – | – | 85 | – | – | – | – |
| | | Reference Example 34 | – | – | – | – | – | – | – | – | 85 | – | – | – |
| | | Reference Example 35 | – | – | – | – | – | – | – | – | – | 85 | – | – |
| | | Reference Example 36 | – | – | – | – | – | – | – | – | – | – | 85 | – |
| | | Reference Example 37 | – | – | – | – | – | – | – | – | – | – | – | 85 |
| Glass transition temperature of cured product | °C | | -4, 146 | -3, 115 | -3, 105 | -4, 195 | -4, 94 | -4, 146 | -3, 115 | -3, 105 | -4, 195 | -4, 94 | -4, 195 | -4, 94 |

Mass%

Table 11

| | | | Examples | | | | | | |
|---|---|---|---|---|---|---|---|---|---|
| | | | 1 | 2 | 3 | 4 | 5 | 6 | 7 |
| Prepreg | Component(A) | Names of raw materials, mass% | A-1<br>5 | A-1<br>9 | A-2<br>13 | A-2<br>13 | A-2<br>14 | A-2<br>12 | A-2<br>13 |
| | Component (B) | | Reference Example 1<br>32 | Reference Example 1<br>35 | Reference Example 1<br>37 | Reference Example 1<br>15 | Reference Example 1<br>16 | Reference Example 1<br>14 | Reference Example 1<br>15 |
| | Component (C) | | C-1<br>63 | C-1<br>56 | C-1<br>50 | C-1<br>50 | C-1<br>49 | C-1<br>44 | C-1<br>50 |
| | Component (D) | | – | – | – | Reference Example 1<br>22 | Reference Example 1<br>21 | Reference Example 1<br>30 | Reference Example 15<br>22 |
| | Surface(s) having (A) thereon | – | One surface | Both surfaces | One surface | One surface | One surface | One surface | One surface |
| | X[1] | % | – | – | – | 99 | 88 | 140 | 99 |
| Fiber-reinforced composite material | Constitution of laminate[2] | | (I) | (I) | (I) | (I) | (I) | (I) | (I) |
| | Loss coefficient | – | 0.0107 | 0.0142 | 0.0167 | 0.0169 | 0.0170 | 0.0155 | 0.0169 |
| | 0-Degree flexural modulus[3] | GPa | -38, 196 | 122 | 119 | 120 | 118 | 120 | 119 |
| | 0-Degree flexural strength[3] | MPa | 1564 | 1551 | 1513 | 1544 | 1533 | 1540 | 1546 |
| | Glass transition temperature | °C | -38, 117 | -38, 118 | -38, 116 | -38, 117 | -37, 118 | -39, 117 | -39, 110 |

Table 11(cont)

| | | | Examples | | | | | | |
|---|---|---|---|---|---|---|---|---|---|
| | | | 8 | 9 | 10 | 11 | 12 | 13 | 14 |
| Prepreg | Component(A) | Names of raw materials, mass% | A-3<br>2 | A-3<br>22 | A-4<br>4 | A-5<br>9 | A-6<br>2 | A-6<br>2 | A-7<br>3 |
| | Component (B) | | Reference Example 1<br>26 | Reference Example 1<br>37 | Reference Example 1<br>22 | Reference Example 1<br>35 | Reference Example 1<br>26 | Reference Example 1<br>23 | Reference Example 1<br>23 |
| | Component (C) | | C-1<br>72 | C-1<br>41 | C-1<br>71 | C-1<br>56 | C-1<br>72 | C-1<br>72 | C-1<br>71 |
| | Component (D) | | – | – | Reference Example 1<br>3 | – | – | Reference Example 1<br>3 | Reference Example 1<br>3 |
| | Surface(s) having (A) thereon | – | One surface | One surface | One surface | One surface | One surface | One surface | One surface |
| | X[1] | % | – | – | 108 | – | – | 106 | 104 |
| Fiber-reinforced composite material | Constitution of laminate[2] | – | (II) | (I) | (II) | (I) | (II) | (II) | (II) |
| | Loss coefficient | – | 0.0092 | 0.0205 | 0.0103 | 0.0130 | 0.0090 | 0.0091 | 0.0099 |
| | 0-Degree flexural modulus[3] | GPa | 121 | 112 | 122 | 120 | 119 | 122 | 120 |
| | 0-Degree flexural strength[3] | MPa | 1454 | 1336 | 1390 | 1551 | 1454 | 1501 | 1438 |
| | Glass transition temperature | °C | -38, 117 | -38, 117 | -38, 117 | -45, 118 | -45, 116 | -46, 117 | -60, 117 |

1) X = (mass of component (D) contained per unit area of component (A))/d 2) Constitution of laminate (I) Component (A) is arranged between every two layers of prepreg precursors

(II) Component (A) is arranged only between center layers

3) Value calculated in terms of Vf60%

Table 12

| Prepreg | | Names of raw materials, mass% | Examples | | | | | | | | |
|---|---|---|---|---|---|---|---|---|---|---|---|
| | | | 15 | 16 | 17 | 18 | 19 | 20 | 21 | 22 | 23 |
| | Component (A) | | A-1 | A-1 | A-1 | A-1 | A-1 | A-1 | A-1 | A-1 | A-1 |
| | | | 5 | 5 | 5 | 5 | 5 | 5 | 5 | 5 | 5 |
| | Component (B) | | Reference Example 3 | Reference Example 4 | Reference Example 5 | Reference Example 7 | Reference Example 19 | Reference Example 8 | Reference Example 9 | Reference Example 10 | Reference Example 11 |
| | | | 32 | 32 | 32 | 32 | 32 | 32 | 32 | 32 | 32 |
| | Component (C) | | C-1 | C-1 | C-1 | C-1 | C-1 | C-1 | C-1 | C-1 | C-1 |
| | | | 63 | 63 | 63 | 63 | 63 | 63 | 63 | 63 | 63 |
| | Component (D) | | − | − | − | − | − | − | − | − | − |
| | Surface(s) having (A) thereon | − | One surface | One surface | One surface | One surface | One surface | One surface | One surface | One surface | One surface |
| Fiber-reinforced composite material | Constitution of laminate[1] | | (I) | (I) | (I) | (I) | (I) | (I) | (I) | (I) | (I) |
| | Loss coefficient | − | 0.0106 | 0.0104 | 0.0105 | 0.0108 | 0.0106 | 0.0104 | 0.0108 | 0.0105 | 0.0104 |
| | 0-Degree flexural modulus[2] | GPa | 121 | 121 | 120 | 118 | 117 | 116 | 115 | 119 | 121 |
| | 0-Degree flexural strength[2] | MPa | 1552 | 1594 | 1603 | 1713 | 1653 | 1550 | 1758 | 1661 | 1515 |
| | Glass transition temperature | °C | −38, 196 | −38, 115 | −37, 114 | −38, 132 | −38, 91 | −38, 136 | −38, 169 | −38, 141 | −39, 133 |

1) Constitution of laminate
   (I) Component (A) is arranged between every two layers of prepreg precursors
   (II) Component (A) is arranged only between center layers
2) Value calculated in terms of Vf60%

Table 13

| | | | Examples | | | | | | | |
|---|---|---|---|---|---|---|---|---|---|---|
| | | | 24 | 25 | 26 | 27 | 28 | 29 | 30 | 31 |
| Prepreg | Component (A) | Names of raw materials, mass% | A-1<br>5 | A-1<br>5 | A-1<br>5 | A-1<br>5 | A-1<br>5 | A-1<br>5 | A-1<br>5 | A-1<br>5 |
| | Component (B) | | Reference Example 12<br>32 | Reference Example 14<br>32 | Reference Example 15<br>32 | Reference Example 16<br>32 | Reference Example 17<br>32 | Reference Example 18<br>32 | Reference Example 2<br>32 | Reference Example 31<br>32 |
| | Component (C) | | C-1<br>63 | C-1<br>63 | C-1<br>63 | C-1<br>63 | C-1<br>63 | C-1<br>63 | C-1<br>63 | C-1<br>63 |
| | Component (D) | | – | – | – | – | – | – | – | – |
| | Surface(s) having (A) thereon | – | One surface | One surface | One surface | One surface | One surface | One surface | One surface | One surface |
| Fiber-reinforced composite material | Constitution of laminate[1] | | (I) | (I) | (I) | (I) | (I) | (I) | (I) | (I) |
| | Loss coefficient | – | 0.0107 | 0.0104 | 0.0105 | 0.0109 | 0.0107 | 0.0106 | 0.0108 | 0.0118 |
| | 0-Degree flexural modulus[2] | GPa | 122 | 119 | 118 | 120 | 119 | 119 | 120 | 122 |
| | 0-Degree flexural strength[2] | MPa | 1726 | 1562 | 1639 | 1720 | 1523 | 1544 | 1523 | 1500 |
| | Glass transition temperature | °C | -37, 195 | -37, 120 | -38, 105 | -38, 196 | -36,120 | -37,118 | -38,115 | -39,119 |

1) Constitution of laminate
   (I) Component (A) is arranged between every two layers of prepreg precursors
   (II) Component (A) is arranged only between center layers
2) Value calculated in terms of Vf60%

Table 14

| | | | Reference examples | | | | | | |
|---|---|---|---|---|---|---|---|---|---|
| | | | 32 | 33 | 34 | 35 | 36 | 37 | 38 |
| Prepreg | Component (A) | Names of raw materials, mass% | A-1<br>5 | A-1<br>5 | A-1<br>5 | A-1<br>5 | A-1<br>5 | A-1<br>5 | A-1<br>5 |
| | Component (B) | | Reference Example 32<br>32 | Reference Example 33<br>32 | Reference Example 34<br>32 | Reference Example 35<br>32 | Reference Example 36<br>32 | Reference Example 37<br>32 | Reference Example 2<br>32 |
| | Component (C) | | C-1<br>63 | C-1<br>63 | C-1<br>63 | C-1<br>63 | C-1<br>63 | C-1<br>63 | C-3<br>63 |
| | Component (D) | | – | – | – | – | – | – | – |
| | Surface(s) having (A) thereon | – | One surface | One surface | One surface | One surface | One surface | One surface | One surface |
| Fiber-reinforced composite material | Constitution of laminate[1] | | (I) | (I) | (I) | (I) | (I) | (I) | (I) |
| | Loss coefficient | – | 0.0117 | 0.0112 | 0.0105 | 0.0116 | 0.0119 | 0.0111 | 0.0150 |
| | 0-Degree flexural modulus[2] | GPa | 118 | 121 | 120 | 118 | 119 | 120 | 150 |
| | 0-Degree flexural strength[2] | MPa | 1491 | 1506 | 1601 | 1607 | 1629 | 1599 | 1511 |
| | Glass transition temperature | °C | -38, 118 | -38, 118 | -38, 108 | -40, 108 | -39, 108 | -38, 106 | -38, 116 |

Table 14
(cont)

| | | | Examples | | |
|---|---|---|---|---|---|
| | | | 39 | 40 | 41 |
| Prepreg | Component (A) | Names of raw materials , mass% | A-1 5 | A-1 5 | A-1 5 |
| | Component (B) | | Reference Example 2 32 | Reference Example 2 32 | Reference Example 2 32 |
| | Component (C) | | C-4 63 | C-5 63 | C-6 63 |
| | Component (D) | | — | — | — |
| | Surface(s) having (A) thereon | — | One surface | One surface | One surface |
| Fiber-reinforced composite material | Constitution of laminate[1] | | (I) | (I) | (I) |
| | Loss coefficient | — | 0.0174 | 0.0201 | 0.0213 |
| | 0-Degree flexural modulus[2] | GPa | 186 | 220 | 235 |
| | 0-Degree flexural strength[2] | MPa | 1393 | 1341 | 1230 |
| | Glass transition temperature | °C | -40, 117 | -39, 118 | -38, 117 |

1) Constitution of laminate (I) Component (A) is arranged between every two layers of prepreg precursors

(II) Component (A) is arranged only between center layers

2) Value calculated in terms of Vf60%

Table 15

| | | | Examples | | | | | | | | |
|---|---|---|---|---|---|---|---|---|---|---|---|
| | | | 42 | 43 | 44 | 45 | 46 | 47 | 48 | 49 | 50 |
| Prepreg | Component (A) | Names of raw materials, mass% | A-12<br>3 | A-12<br>6 | A-13<br>4 | A-14<br>6 | A-15<br>6 | A-14<br>13 | A-14<br>23 | A-16<br>4 | A-12<br>3 |
| | Component (B) | | Reference Example 2<br>37 | Reference Example 2<br>36 | Reference Example 2<br>36 | Reference Example 2<br>36 | Reference Example 2<br>36 | Reference Example 2<br>33 | Reference Example 2<br>29 | Reference Example 2<br>36 | Reference Example 31<br>37 |
| | Component (C) | | C-1<br>60 | C-1<br>58 | C-1<br>60 | C-1<br>58 | C-1<br>58 | C-1<br>54 | C-1<br>48 | C-1<br>60 | C-1<br>60 |
| | Component (D) | | –<br>– | –<br>– | –<br>– | –<br>– | –<br>– | –<br>– | –<br>– | –<br>– | –<br>– |
| | Surface(s) having (A) thereon | – | One surface | One surface | One surface | One surface | One surface | One surface | One surface | One surface | One surface |
| | X[1] | % | – | – | – | – | – | – | – | – | – |
| Fiber-reinforced composite material | Constitution of laminate[2] | | (V) | (I) | (VI) | (VI) | (II) | (V) | (I) | (V) | (V) |
| | Loss coefficient | – | 0.0087 | 0.0109 | 0.0098 | 0.0105 | 0.0103 | 0.0158 | 0.0198 | 0.0088 | 0.0095 |
| | 0-Degree flexural modulus[3] | GPa | –38, 196 | 120 | 118 | 115 | 113 | 116 | 115 | 119 | 121 |
| | 0-Degree flexural strength[3] | MPa | 15<br>15 | 1523 | 1520 | 1500 | 1491 | 1504 | 1493 | 1522 | 1510 |
| | Glass transition temperature | °C | –3, 112 | –3, 113 | –3, 113 | –2, 113 | –3, 111 | –4, 112 | –4, 112 | –2, 112 | –3, 113 |

1) X = (mass of component (D) contained per unit area of component (A))/d
2) Constitution of laminate

(I) One layer of component (A) is arranged between every two layers of prepreg precursors

(II) Component (A) is arranged only between center layers

(V) One layer of component (A) is arranged per two layers of the prepreg precursors

(VI) One layer of component (A) is arranged per four layers of the prepreg precursors 3) Value calculated in terms of Vf60%

Table 16

| | | | Examples | | | | | | | | |
|---|---|---|---|---|---|---|---|---|---|---|---|
| | | | 51 | 52 | 53 | 54 | 55 | 56 | 57 | 58 | 59 |
| Prepreg | Component (A) | Names of raw materials, mass% | A-12 3 | A-12 3 | A-12 3 | A-12 3 | A-12 3 | A-12 3 | A-12 3 | A-12 3 | A-12 3 |
| | Component (B) | | Reference Example 32 37 | Reference Example 33 37 | Reference Example 34 37 | Reference Example 35 37 | Reference Example 36 37 | Reference Example 37 37 | Reference Example 1 37 | Reference Example 4 37 | Reference Example 6 37 |
| | Component (C) | | C-1 60 | C-1 60 | C-1 60 | C-1 60 | C-1 60 | C-1 60 | C-1 60 | C-1 60 | C-1 60 |
| | Component (D) | | – – | – – | – – | – – | – – | – – | – – | – – | – – |
| | Surface(s) having (A) thereon | – | One surface | One surface | One surface | One surface | One surface | One surface | One surface | One surface | One surface |
| | X[1] | % | – | – | – | – | – | – | – | – | – |
| Fiber-reinforced composite material | Constitution of laminate[2] | | (V) | (V) | (V) | (V) | (V) | (V) | (V) | (V) | (V) |
| | Loss coefficient | – | 0.0094 | 0.0090 | 0.0085 | 0.0093 | 0.0096 | 0.0090 | 0.0088 | 0.0088 | 0.0089 |
| | 0-Degree flexural modulus[3] | GPa | 120 | 118 | -38, 196 | 122 | 120 | 121 | 120 | 119 | 120 |
| | 0-Degree flexural strength[3] | MPa | 1502 | 1511 | 1602 | 1610 | 1630 | 1595 | 1528 | 1570 | 1573 |
| | Glass transition temperature | °C | -3, 114 | -2, 112 | -2, 112 | -3, 112 | -2, 113 | -3, 112 | -3, 110 | -3, 114 | -3, 105 |

1) X = (mass of component (D) contained per unit area of component (A))/d 2) Constitution of laminate

(I) One layer of component (A) is arranged between every two layers of prepreg precursors

(II) Component (A) is arranged only between center layers

(V) One layer of component (A) is arranged per two layers of the prepreg precursors

(VI) One layer of component (A) is arranged per four layers of the prepreg precursors 3) Value calculated in terms of Vf60%

Table 17

| | | | Examples | | | | |
|---|---|---|---|---|---|---|---|
| | | | 60 | 61 | 62 | 63 | 64 |
| Prepreg | Component (A) | Names of raw materials, mass% | A-12 3 | A-12 3 | A-12 3 | A-12 3 | A-12 3 |
| | Component (B) | | Reference Example 2 37 | Reference Example 2 37 | Reference Example 2 37 | Reference Example 2 37 | Reference Example 2 28 |
| | Component (C) | | C-3 60 | C-4 60 | C-5 60 | C-6 60 | C-1 60 |
| | Component (D) | | – – | – – | – – | – – | Reference Example 2 9 |
| | Surface(s) having (A) thereon | – | One surface | One surface | One surface | One surface | One surface |
| | $X^{1)}$ | % | – | – | – | – | 95% |
| Fiber-reinforced composite material | Constitution of laminate$^{2)}$ | | (V) | (V) | (V) | (V) | (V) |
| | Loss coefficient | – | 0.0121 | 0.0134 | 0.0148 | 0.0155 | 0.0088 |
| | 0-Degree flexural modulus$^{3)}$ | GPa | 150 | 185 | 222 | 236 | –38, 196 |
| | 0-Degree flexural strength$^{3)}$ | MPa | 1521 | 1379 | 1318 | 1225 | 1534 |
| | Glass transition temperature | °C | –3, 112 | –2, 112 | –3, 113 | –2, 114 | –2, 113 |

Table 17(cont)

| | | | Examples | | | | |
|---|---|---|---|---|---|---|---|
| | | | 65 | 66 | 67 | 68 | 69 |
| Prepreg | Component (A) | Names of raw materials, mass% | A-13<br>10 | A-14<br>13 | A-15<br>6 | A-16<br>4 | A-17<br>3 |
| | Component (B) | | Reference Example 2<br>25 | Reference Example 2<br>23 | Reference Example 2<br>29 | Reference Example 2<br>28 | Reference Example 2<br>28 |
| | Component (C) | | C-1<br>54 | C-1<br>50 | C-1<br>62 | C-1<br>59 | C-1<br>60 |
| | Component (D) | | Reference Example 2<br>12 | Reference Example 2<br>14 | Reference Example 2<br>3 | Reference Example 2<br>9 | Reference Example 2<br>9 |
| | Surface(s) having (A) thereon | − | One surface | One surface | One surface | One surface | One surface |
| | X[1] | % | 98% | 100% | 395% | 101% | 124% |
| Fiber-reinforced composite material | Constitution of laminate[2] | | (V) | (V) | (II) | (V) | (V) |
| | Loss coefficient | − | 0.0130 | 0.0134 | 0.0167 | 0.0095 | 0.0087 |
| | 0-Degree flexural modulus[3] | GPa | 118 | 122 | 120 | 121 | 119 |
| | 0-Degree flexural strength[3] | MPa | 1487 | 1424 | 1330 | 1534 | 1533 |
| | Glass transition temperature | °C | −2, 113 | −3, 113 | −3, 113 | −3, 113 | −13, 113 |

1) X = (mass of component (D) contained per unit area of component (A))/d 2) Constitution of laminate
   (I) One layer of component (A) is arranged between every two layers of prepreg precursors

   (II) Component (A) is arranged only between center layers

   (V) One layer of component (A) is arranged per two layers of the prepreg precursors

   (VI) One layer of component (A) is arranged per four layers of the prepreg precursors 3) Value calculated in terms of Vf60%

Table 18

| | | | Examples | | | | |
|---|---|---|---|---|---|---|---|
| | | | 70 | 71 | 72 | 73 | 74 |
| Prepreg | Component (A) | Names of raw materials, mass% | A-13<br>5 | A-12<br>0.4 | A-12<br>4 | A-12<br>3 | A-12<br>6 |
| | Component (B) | | Reference Example 2<br>28 | Reference Example 2<br>31.6 | Reference Example 2<br>30 | Reference Example 2<br>23 | Reference Example 2<br>25 |
| | Component (C) | | C-1<br>61 | C-1<br>67 | C-1<br>64 | C-1<br>50 | C-1<br>52 |
| | Component (D) | | Reference Example 2<br>6 | Reference Example 2<br>1 | Reference Example 2<br>2 | Reference Example 2<br>24 | Reference Example 2<br>17 |
| | Surface(s) having (A) thereon | − | One surface | One surface | One surface | One surface | Both surfaces |
| | X[1] | % | 98% | 95% | 22% | 302% | 95% |
| Fiber-reinforced composite material | Constitution of laminate[2] | | (VI) | (II) | (V) | (V) | (I) |
| | Loss coefficient | − | 0.0099 | 0.0070 | 0.0099 | 0.0075 | 0.0115 |
| | 0-Degree flexural modulus[3] | GPa | 122 | 120 | 118 | 121 | 119 |
| | 0-Degree flexural strength[3] | MPa | 1533 | 1533 | 1325 | 1502 | 1408 |
| | Glass transition temperature | °C | −2, 111 | −3, 113 | −3, 113 | −4, 112 | −2, 113 |

Table 18(cont]

| | | | Examples | | | | |
|---|---|---|---|---|---|---|---|
| | | | 75 | 76 | 77 | 78 | 79 |
| Prepreg | Component (A) | Names of raw materials, mass% | A-12<br>3 | A-12<br>3 | A-12<br>3 | A-12<br>3 | A-12<br>3 |
| | Component (B) | | Reference Example 1<br>28 | Reference Example 4<br>28 | Reference Example 6<br>28 | Reference Example 20<br>28 | Reference Example 30<br>28 |
| | Component (C) | | C-1<br>60 | C-1<br>60 | C-1<br>60 | C-1<br>60 | C-1<br>60 |
| | Component (D) | | Reference Example 1<br>9 | Reference Example 4<br>9 | Reference Example 6<br>9 | Reference Example 20<br>9 | Reference Example 30<br>9 |
| | Surface(s) having (A) thereon | – | One surface | One surface | One surface | One surface | One surface |
| | X[1] | % | 95% | 95% | 95% | 95% | 95% |
| Fiber-reinforced composite material | Constitution of laminate[2] | | (V) | (V) | (V) | (V) | (V) |
| | Loss coefficient | – | 0.0089 | 0.0088 | 0.0088 | 0.0090 | 0.0085 |
| | 0-Degree flexural modulus[3] | GPa | -38, 196 | 120 | 121 | 119 | 122 |
| | 0-Degree flexural strength[3] | MPa | 1546 | 1587 | 1583 | 1700 | 1646 |
| | Glass transition temperature | °C | -2, 109 | -3, 112 | -3, 106 | -3, 128 | -2, 86 |

1) X = (mass of component (D) contained per unit area of component (A))/d

2) Constitution of laminates

  (I) One layer of component (A) is arranged between every two layers of prepreg precursors
  (II) Component (A) is arranged only between center layers
  (V) One layer of component (A) is arranged per two layers of the prepreg precursors
  (VI) One layer of component (A) is arranged per four layers of the prepreg precursors 3) Value calculated in terms of Vf60%

Table 19

| | | | Examples | | | | | | | | |
|---|---|---|---|---|---|---|---|---|---|---|---|
| | | | 80 | 81 | 82 | 83 | 84 | 85 | 86 | 87 | 88 |
| Prepreg | Component (A) | Names of raw materials, mass% | A-12<br>3 | A-12<br>3 | A-12<br>3 | A-12<br>3 | A-12<br>3 | A-12<br>3 | A-12<br>3 | A-12<br>3 | A-12<br>3 |
| | Component (B) | | Reference Example 21<br>28 | Reference Example 22<br>28 | Reference Example 23<br>28 | Reference Example 24<br>28 | Reference Example 25<br>28 | Reference Example 27<br>28 | Reference Example 28<br>28 | Reference Example 29<br>28 | Reference Example 31<br>28 |
| | Component (C) | | C-1<br>60 | C-1<br>60 | C-1<br>60 | C-1<br>60 | C-1<br>60 | C-1<br>60 | C-1<br>60 | C-1<br>60 | C-1<br>60 |
| | Component (D) | | Reference Example 21<br>9 | Reference Example 22<br>9 | Reference Example 23<br>9 | Reference Example 24<br>9 | Reference Example 25<br>9 | Reference Example 27<br>9 | Reference Example 28<br>9 | Reference Example 29<br>9 | Reference Example 22<br>9 |
| | Surface(s) having (A) thereon | – | One surface | One surface | One surface | One surface | One surface | One surface | One surface | One surface | One surface |
| | $X^{1)}$ | % | 95% | 95% | 95% | 95% | 95% | 95% | 95% | 95% | 95% |
| Fiber-reinforced composite material | Constitution of laminate[2] | – | (V) | (V) | (V) | (V) | (V) | (V) | (V) | (V) | (V) |
| | Loss coefficient | – | 0.0088 | 0.0094 | 0.0090 | 0.0084 | 0.0091 | 0.0087 | 0.0087 | 0.0090 | 0.0096 |
| | 0-Degree flexural modulus[3] | GPa | 120 | 118 | 122 | 122 | 119 | 121 | 118 | 120 | -38, 196 |
| | 0-Degree flexural strength[3] | MPa | 1562 | 1745 | 1658 | 1496 | 1695 | 1546 | 1613 | 1703 | 1613 |
| | Glass transition temperature | °C | -3, 134 | -3, 162 | -3, 138 | -3, 128 | -2, 191 | -3, 108 | -3, 99 | -2, 191 | -3,115 |

1) X = (mass of component (D) contained per unit area of component (A))/d 2) Constitution of laminate
(V) One layer of component (A) is arranged per two layers of the prepreg precursors
(VI) One layer of component (A) is arranged per four layers of the prepreg precursors 3) Value calculated in terms of Vf60%

Table 20

| | | | Examples | | | | | |
|---|---|---|---|---|---|---|---|---|
| | | | 89 | 90 | 91 | 92 | 93 | 94 |
| Prepreg | Component (A) | Names of raw materials, mass% | A-12 / 3 | A-12 / 3 | A-12 / 3 | A-12 / 3 | A-12 / 3 | A-12 / 3 |
| | Component (B) | | Reference Example 32 / 28 | Reference Example 33 / 28 | Reference Example 34 / 28 | Reference Example 35 / 28 | Reference Example 36 / 28 | Reference Example 37 / 28 |
| | Component (C) | | C-1 / 60 | C-1 / 60 | C-1 / 60 | C-1 / 60 | C-1 / 60 | C-1 / 60 |
| | Component (D) | | Reference Example 23 / 9 | Reference Example 24 / 9 | Reference Example 25 / 9 | Reference Example 27 / 9 | Reference Example 28 / 9 | Reference Example 29 / 9 |
| | Surface(s) having (A) thereon | – | One surface | One surface | One surface | One surface | One surface | One surface |
| | $X^{1)}$ | % | 95% | 95% | 95% | 95% | 95% | 95% |
| Fiber-reinforced composite material | Constitution of laminate$^{2)}$ | – | (V) | (V) | (V) | (V) | (V) | (V) |
| | Loss coefficient | – | 0.0093 | 0.0095 | 0.0085 | 0.0098 | 0.0092 | 0.0100 |
| | 0-Degree flexural modulus$^{3)}$ | GPa | 119 | 122 | 120 | 122 | 119 | 120 |
| | 0-Degree flexural strength$^{3)}$ | MPa | 1605 | 1610 | 1679 | 1682 | 1670 | 1677 |
| | Glass transition temperature | °C | –3,114 | –3,113 | –2,105 | –3,105 | –2,102 | –2,100 |

Table 20 (cont)

| | | | Examples | | | |
|---|---|---|---|---|---|---|
| | | | 95 | 96 | 97 | 98 |
| Prepreg | Component (A) | Names of raw materials, mass% | A-12<br>3 | A-12<br>3 | A-12<br>3 | A-12<br>3 |
| | Component (B) | | Reference Example 2<br>28 | Reference Example 2<br>28 | Reference Example 2<br>28 | Reference Example 2<br>28 |
| | Component (C) | | C-3<br>60 | C-4<br>60 | C-5<br>60 | C-6<br>60 |
| | Component (D) | | Reference Example 2<br>9 | Reference Example 2<br>9 | Reference Example 2<br>9 | Reference Example 2<br>9 |
| | Surface(s) having (A) thereon | – | One surface | One surface | One surface | One surface |
| | X[1] | % | 95% | 95% | 95% | 95% |
| Fiber-reinforced composite material | Constitution of laminate[2] | | (V) | (V) | (V) | (V) |
| | Loss coefficient | – | 0.0118 | 0.0134 | 0.0149 | 0.0154 |
| | 0-Degree flexural modulus[3] | GPa | 150 | 187 | 225 | 233 |
| | 0-Degree flexural strength[3] | MPa | 1552 | 1426 | 1360 | 1254 |
| | Glass transition temperature | °C | -3,117 | -3,113 | -2,111 | -2,109 |

1) X = (mass of component (D) contained per unit area of component (A))/d
2) Constitution of laminate
  (V) One layer of component (A) is arranged per two layers of the prepreg precursors
  (VI) One layer of component (A) is arranged per four layers of the prepreg precursors
3) Value calculated in terms of Vf60%

Table 21

| | | | Comparative Examples | | | | | | | | |
|---|---|---|---|---|---|---|---|---|---|---|---|
| | | | 1 | 2 | 3 | 4 | 5 | 6 | 7 | 8 | 9 |
| Prepreg | Component (A) | Names of raw materials, mass% | – | – | – | – | – | – | – | – | – |
| | Component (B) | | Reference Example 1 | Reference Example 1 | Reference Example 1 | Reference Example 1 | Reference Example 1 | Reference Example 3 | Reference Example 4 | Reference Example 5 | Reference Example 7 |
| | | | 34 | 39 | 44 | 27 | 49 | 34 | 34 | 34 | 34 |
| | Component (C) | | C-1 | C-1 | C-1 | C-1 | C-1 | C-1 | C-1 | C-1 | C-1 |
| | | | 66 | 61 | 56 | 73 | 51 | 66 | 66 | 66 | 66 |
| | Component (D) | | – | – | – | – | – | – | – | – | – |
| | Surface(s) having (A) thereon | – | – | – | – | – | – | – | – | – | – |
| Fiber-reinforced composite material | Constitution of laminate[1] | | – | – | – | – | – | – | – | – | – |
| | Loss coefficient | – | 0.0067 | 0.0068 | 0.0070 | 0.0065 | 0.0071 | 0.0067 | 0.0068 | 0.0067 | 0.0070 |
| | 0-Degree flexural modulus[2] | GPa | 122 | 122 | 118 | 122 | 122 | 121 | 121 | 120 | 120 |
| | 0-Degree flexural strength[2] | MPa | 1580 | 1583 | 1576 | 1580 | 1572 | 1568 | 1610 | 1601 | 1725 |
| | Glass transition temperature | °C | -38, 196 | 116 | 117 | 118 | 117 | 120 | 118 | 114 | 132 |

1) Constitution of laminate (I) Component (A) is arranged between every two layers

(II) Component (A) is arranged only between center layers

2) Value calculated in terms of Vf60%

79

Table 22

| | | | Comparative Examples | | | | | | | | |
|---|---|---|---|---|---|---|---|---|---|---|---|
| | | | 10 | 11 | 12 | 13 | 14 | 15 | 16 | 17 | 18 |
| Prepreg | Component (A) | Names of raw materials, mass% | – | – | – | – | – | – | – | – | – |
| | Component (B) | | Reference Example 19 34 | Reference Example 8 34 | Reference Example 9 34 | Reference Example 10 34 | Reference Example 11 34 | Reference Example 12 34 | Reference Example 14 34 | Reference Example 15 34 | Reference Example 16 34 |
| | Component (C) | | C–1 66 | C–1 66 | C–1 66 | C–1 66 | C–1 66 | C–1 66 | C–1 66 | C–1 66 | C–1 66 |
| | Component (D) | | – | – | – | – | – | – | – | – | – |
| | Surface(s) having (A) thereon | – | – | – | – | – | – | – | – | – | – |
| Fiber-reinforced composite material | Constitution of laminate[1] | | – | – | – | – | – | – | – | – | – |
| | Loss coefficient | – | 0.0064 | 0.0067 | 0.0071 | 0.0068 | 0.0064 | 0.0070 | 0.0067 | 0.0067 | 0.0070 |
| | 0-Degree flexural modulus[2] | GPa | 119 | 118 | 118 | 119 | 120 | 118 | 122 | 119 | 120 |
| | 0-Degree flexural strength[2] | MPa | 1690 | 1578 | 1785 | 1702 | 1535 | 1735 | 1584 | 1636 | 1764 |
| | Glass transition temperature | °C | 91 | 136 | 169 | –38, 196 | 133 | 195 | 120 | 105 | 196 |

1) Constitution of laminate (I) Component (A) is arranged between every two layers

  (II) Component (A) is arranged only between center layers

2) Value calculated in terms of Vf60%

Table 23

| | | | Comparative Examples | | | | | | | | |
|---|---|---|---|---|---|---|---|---|---|---|---|
| | | | 19 | 20 | 21 | 22 | 23 | 24 | 25 | 26 | 27 |
| Prepreg | Component (A) | Names of raw materials, mass% | – | – | A–8<br>17 | A–9<br>9 | A–10<br>1 | A–11<br>5 | – | – | – |
| | Component (B) | | Reference Example 17<br>34 | Reference Example 18<br>34 | Reference Example 1<br>40 | Reference Example 1<br>35 | Reference Example 1<br>33 | Reference Example 1<br>32 | Reference Example 2<br>34 | Reference Example 31<br>34 | Reference Example 32<br>34 |
| | Component (C) | | C–1<br>66 | C–1<br>66 | C–1<br>43 | C–1<br>56 | C–1<br>66 | C–1<br>63 | C–1<br>66 | C–1<br>66 | C–1<br>66 |
| | Component (D) | | – | – | – | – | – | – | – | – | – |
| | Surface(s) having (A) thereon | – | – | – | One surface | One surface | One surface | One surface | – | – | – |
| Fiber-reinforced composite material | Constitution of laminate[1] | – | – | – | (I) | (I) | (II) | (I) | – | – | – |
| | Loss coefficient | – | 0.0067 | 0.0065 | 0.0080 | 0.0075 | 0.0168 | 0.0093 | 0.0067 | 0.0068 | 0.0069 |
| | 0-Degree flexural modulus[2] | GPa | 120 | 120 | 107 | 120 | 98 | 107 | 120 | 120 | 122 |
| | 0-Degree flexural strength[2] | MPa | 1575 | 1580 | 1344 | 1567 | 1201 | 1375 | –38, 196 | 1553 | 1550 |
| | Glass transition temperature | °C | 122 | 124 | 65, 105 | 40, 117 | –38, 118 | –38, 117 | 113 | 114 | 115 |

1) Constitution of laminate (I) Component (A) is arranged between every two layers

(II) Component (A) is arranged only between center layers

2) Value calculated in terms of Vf60%

Table 24

| | | | Comparative Examples | | | | | | | | |
|---|---|---|---|---|---|---|---|---|---|---|---|
| | | | 28 | 29 | 30 | 31 | 32 | 33 | 34 | 35 | 36 |
| Prepreg | Component (A) | Names of raw materials, mass% | – | – | – | – | – | – | – | – | – |
| | Component (B) | | Reference Example 33 34 | Reference Example 34 34 | Reference Example 35 34 | Reference Example 36 34 | Reference Example 37 34 | Reference Example 2 34 | Reference Example 2 34 | Reference Example 2 34 | Reference Example 2 34 |
| | Component (C) | | C-1 66 | C-1 66 | C-1 66 | C-1 66 | C-1 66 | C-3 66 | C-4 66 | C-5 66 | C-6 66 |
| | Component (D) | | – | – | – | – | – | – | – | – | – |
| | Surface(s) having (A) thereon | – | – | – | – | – | – | – | – | – | – |
| Fiber-reinforced composite material | Constitution of laminate[1] | – | – | – | – | – | – | – | – | – | – |
| | Loss coefficient | – | 0.0068 | 0.0065 | 0.0066 | 0.0066 | 0.0068 | 0.0094 | 0.0110 | 0.0125 | 0.0132 |
| | 0-Degree flexural modulus[2] | GPa | 122 | 119 | 121 | 121 | 120 | 152 | 187 | 223 | 237 |
| | 0-Degree flexural strength[2] | MPa | 1561 | 1630 | 1627 | 1631 | 1625 | 1566 | 1414 | 1360 | 1251 |
| | Glass transition temperature | °C | 113 | 103 | 105 | 104 | 102 | 113 | 113 | 112 | 114 |

1) Constitution of laminate (I) Component (A) is arranged between every two layers

(II) Component (A) is arranged only between center layers

2) Value calculated in terms of Vf60%

EP 2 596 947 B1

82

Table 25

| | | | | Comparative Examples | | | | | | | | |
|---|---|---|---|---|---|---|---|---|---|---|---|---|
| | | | | 37 | 38 | 39 | 40 | 41 | 42 | 43 | 44 | 45 |
| Prepreg | Component (A) | Names of raw materials, mass% | | − | A−19 | A−18 | − | − | − | − | − | − |
| | | | | − | 3 | 18 | − | − | − | − | − | − |
| | Component (B) | | | Reference Example 2 | Reference Example 2 | Reference Example 2 | Reference Example 31 | Reference Example 32 | Reference Example 33 | Reference Example 34 | Reference Example 35 | Reference Example 36 |
| | | | | 38 | 37 | 26 | 38 | 38 | 38 | 38 | 38 | 38 |
| | Component (C) | | | C−1 | C−1 | C−1 | C−1 | C−1 | C−1 | C−1 | C−1 | C−1 |
| | | | | 62 | 60 | 56 | 62 | 62 | 62 | 62 | 62 | 62 |
| | Component (D) | | | − | − | − | − | − | − | − | − | − |
| | | | | − | − | − | − | − | − | − | − | − |
| | Surface(s) having (A) thereon | − | | One surface | One surface | One surface | One surface | One surface | One surface | One surface | One surface | One surface |
| | X[1] | % | | − | − | − | − | − | − | − | − | − |
| Fiber-reinforced composite material | Constitution of laminate[2] | | | − | (V) | (I) | (V) | (V) | (V) | (V) | (V) | (V) |
| | Loss coefficient | − | | 0.0063 | 0.0072 | − | 0.0066 | 0.0067 | 0.0068 | 0.0065 | 0.0065 | 0.0066 |
| | 0-Degree flexural modulus[3] | GPa | | −38, 196 | 120 | − | 121 | 119 | 122 | 121 | 119 | 122 |
| | 0-Degree flexural strength[3] | MPa | | 1563 | 1518 | − | 1568 | 1552 | 1551 | 1560 | 1633 | 1628 |
| | Glass transition temperature | °C | | 113 | <−60, 111 | − | 113 | 114 | 115 | 112 | 104 | 103 |

1) X = (mass of component (D) contained per unit area of component (A))/d 2) Constitution of laminate

   (I) One layer of component (A) is arranged between every two layers of prepreg precursors

   (V) One layer of component (A) is arranged per two layers of the prepreg precursors 3) Value calculated in terms of Vf60%

Table 26

| | | | Comparative Examples | | | | | | | |
|---|---|---|---|---|---|---|---|---|---|---|
| | | | 46 | 47 | 48 | 49 | 50 | 51 | 52 | 53 |
| Prepreg | Component (A) | Names of raw materials, mass% | – | – | – | – | – | – | – | – |
| | | | – | – | – | – | – | – | – | – |
| | Component (B) | | Reference Example 37 | Reference Example 1 | Reference Example 4 | Reference Example 6 | Reference Example 2 | Reference Example 2 | Reference Example 2 | Reference Example 2 |
| | | | 38 | 38 | 38 | 38 | 38 | 38 | 38 | 38 |
| | Component (C) | | C-1 | C-1 | C-1 | C-1 | C-3 | C-4 | C-5 | C-6 |
| | | | 62 | 62 | 62 | 62 | 62 | 62 | 62 | 62 |
| | Component (D) | | – | – | – | – | – | – | – | – |
| | | | – | – | – | – | – | – | – | – |
| | Surface(s) having (A) thereon | – | One surface | One surface | One surface | One surface | One surface | One surface | One surface | One surface |
| | X[1] | % | – | – | – | – | – | – | – | – |
| Fiber-reinforced composite material | Constitution of laminate[2] | | (V) | (V) | (V) | (V) | (V) | (V) | (V) | (V) |
| | Loss coefficient | – | 0.0066 | 0.0067 | 0.0067 | 0.0068 | 0.0093 | 0.0108 | 0.0123 | 0.0129 |
| | 0-Degree flexural modulus[3] | GPa | –38, 196 | 121 | 120 | 122 | 151 | 186 | 223 | 238 |
| | 0-Degree flexural strength[3] | MPa | 1630 | 1585 | 1608 | 1615 | 1565 | 1414 | 1362 | 1253 |
| | Glass transition temperature | °C | 104 | 116 | 118 | 105 | 113 | 112 | 113 | 114 |

1) X = (mass of component (D) contained per unit area of component (A))/d 2) Constitution of laminate (V) One layer of component (A) is arranged per two layers of the prepreg precursors

   (VI) One layer of component (A) is arranged per two layers of the prepreg precursors 3) Value calculated in terms of Vf60%

Table 27

| | | | Comparative Examples | | | | | | | | | |
|---|---|---|---|---|---|---|---|---|---|---|---|---|
| | | | 54 | 55 | 56 | 57 | 58 | 59 | 60 | 61 | 62 | 63 |
| Prepreg | Component (A) | Names of raw materials, mass% | − | − | − | − | − | − | − | − | − | − |
| | Component (B) | | Reference Example 2 | Reference Example 1 | Reference Example 4 | Reference Example 6 | Reference Example 20 | Reference Example 30 | Reference Example 21 | Reference Example 22 | Reference Example 23 | Reference Example 24 |
| | | | 32 | 32 | 32 | 32 | 32 | 32 | 32 | 32 | 32 | 32 |
| | Component (C) | | C−1 | C−1 | C−1 | C−1 | C−1 | C−1 | C−1 | C−1 | C−1 | C−1 |
| | | | 68 | 68 | 68 | 68 | 68 | 68 | 68 | 68 | 68 | 68 |
| | Component (D) | | − | − | − | − | − | − | − | − | − | − |
| | Surface(s) having (A) thereon | − | − | − | − | − | − | − | − | − | − | − |
| Fiber-reinforced composite material | Constitution of laminate[1] | − | − | − | − | − | − | − | − | − | − | − |
| | Loss coefficient | − | 0.0067 | 0.0068 | 0.0067 | 0.0067 | 0.0069 | 0.0064 | 0.0067 | 0.0071 | 0.0068 | 0.0064 |
| | 0-Degree flexural modulus[3] | GPa | 121 | 120 | 118 | 120 | 119 | 120 | 119 | 122 | 121 | 120 |
| | 0-Degree flexural strength[3] | MPa | 1565 | 1578 | 1603 | 1616 | 1718 | 1680 | 1578 | 1781 | 1692 | 1527 |
| | Glass transition temperature | °C | −38, 196 | 109 | 111 | 105 | 129 | 84 | 133 | 162 | 136 | 128 |

1) Constitution of laminate (I) Component (A) is arranged between every two layers

  (II) Component (A) is arranged only between center layers

2) Value calculated in terms of Vf60%

85

Table 28

| | | | Comparative Examples | | | | | | | | |
|---|---|---|---|---|---|---|---|---|---|---|---|
| | | | 64 | 65 | 66 | 67 | 68 | 69 | 70 | 71 | 72 |
| Prepreg | Component (A) | Names of raw materials, mass% | – | – | – | – | – | – | – | – | – |
| | Component (B) | | Reference Example 25 32 | Reference Example 27 32 | Reference Example 28 32 | Reference Example 29 32 | Reference Example 31 32 | Reference Example 32 32 | Reference Example 33 32 | Reference Example 34 32 | Reference Example 35 32 |
| | Component (C) | | C-1 68 | C-1 68 | C-1 68 | C-1 68 | C-1 68 | C-1 68 | C-1 68 | C-1 68 | C-1 68 |
| | Component (D) | | – | – | – | – | – | – | – | – | – |
| | Surface(s) having (A) thereon | – | – | – | – | – | – | – | – | – | – |
| | $X^{1)}$ | % | – | – | – | – | – | – | – | – | – |
| Fiber-reinforced composite material | Constitution of laminate$^{2)}$ | | – | – | – | – | – | – | – | – | – |
| | Loss coefficient | – | 0.0069 | 0.0067 | 0.0067 | 0.0069 | 0.0069 | 0.0070 | 0.0069 | 0.0066 | 0.0067 |
| | 0-Degree flexural modulus$^{3)}$ | GPa | -38, 196 | 122 | 119 | 118 | 120 | 121 | 122 | 120 | 120 |
| | 0-Degree flexural strength$^{3)}$ | MPa | 1730 | 1578 | 1629 | 1756 | 1553 | 1550 | 1561 | 1630 | 1627 |
| | Glass transition temperature | °C | 190 | 108 | 98 | 191 | 114 | 115 | 113 | 103 | 105 |

1) X = (mass of component (D) contained per unit area of component (A))/d 2) Constitution of laminate (I) Component (A) is arranged between every two layers

(II) Component (A) is arranged only between center layers

3) Value calculated in terms of Vf60%

Table 29

| | | | Comparative Examples | | | | | | | |
|---|---|---|---|---|---|---|---|---|---|---|
| | | | 73 | 74 | 75 | 76 | 77 | 78 | 79 | 80 |
| Prepreg | Component (A) | Names of raw materials, mass% | – | – | – | – | – | – | A-19 3 | A-8 5 |
| | Component (B) | | Reference Example 36 32 | Reference Example 37 32 | Reference Example 2 32 | Reference Example 2 32 | Reference Example 2 32 | Reference Example 2 32 | Reference Example 2 28 | Reference Example 2 28 |
| | Component (C) | | C-1 68 | C-1 68 | C-3 68 | C-4 68 | C-5 68 | C-6 68 | C-1 60 | C-1 61 |
| | Component (D) | | – | – | – | – | – | – | Reference Example 2 9 | Reference Example 2 6 |
| | Surface(s) having (A) thereon | – | – | – | – | – | – | – | One surface | One surface |
| | X[1] | % | – | – | – | – | – | – | 87% | 86% |
| Fiber-reinforced composite material | Constitution of laminate[2] | – | – | – | – | – | – | – | (V) | (VI) |
| | Loss coefficient | – | 0.0067 | 0.0069 | 0.0094 | 0.0110 | 0.0125 | 0.0132 | 0.0074 | 0.0075 |
| | 0-Degree flexural modulus[3] | GPa | –38, 196 | 120 | 152 | 187 | 223 | 237 | 120 | 105 |
| | 0-Degree flexural strength[3] | MPa | 1631 | 1625 | 1566 | 1414 | 1360 | 1251 | 1535 | 1330 |
| | Glass transition temperature | °C | 104 | 102 | 113 | 113 | 112 | 114 | <-60, 113 | 91 |

1) X = (mass of component (D) contained per unit area of component (A))/d 2) Constitution of laminate (V) One layer of component (A) is arranged per two layers of the prepreg precursors

  (VI) One layer of component (A) is arranged per two layers of the prepreg precursors 3) Value calculated in terms of Vf60%

Table 30

[Table 30]

| | | | Example | Comparative Example |
|---|---|---|---|---|
| | | | 100 | 81 |
| Fiber-reinforced composite material | Component (A) | Names of raw materials, mass% | A-3 10 | - |
| | Component (B) | | Reference Example 13 38 | Reference Example 13 42 |
| | Component (C) | | C-2 52 | C-2 58 |
| | Component (D) | | - | - |
| | Constitution of laminate [1] | | (I) | - |
| | Loss coefficient | - | 0.0135 | 0.0069 |
| | flexural strength [2] | MPa | 940 | 960 |
| | Glass transition temperature | °C | -38, 144 | 143 |

1) Constitution of laminate
(I) Component (A) is arranged between every two layers
2) Value calculated in terms of Vf60%

Table 31

[Table 31]

| | | | Examples | |
|---|---|---|---|---|
| | | | 43 | 101 |
| Prepreg | Component (A) | Names of raw materials, mass% | A-12 6 | A-20 6 |
| | Component (B) | | Reference Example 2 36 | Reference Example 2 36 |
| | Component (C) | | C-1 58 | C-1 58 |
| | Component (D) | | - - | - - |
| | Surface(s) having (A) thereon | | One surface | One surface |
| | X[1] | % | - | - |

(continued)

| | | | Examples | |
|---|---|---|---|---|
| | | | 43 | 101 |
| Fiber-reinforced composite material | Constitution of laminate[2) | | (I) | (V) |
| | Loss coefficient | - | 0.0109 | 0.0110 |
| | 0-Degree flexural modulus[3) | GPa | 120 | 119 |
| | 0-Degree flexural strength[3) | MPa | -38, 196 | 1521 |
| | Glass transition temperature | °C | -3, 113 | -3, 112 |
| Tubular body | Weight | g | 78.7 | 79.0 |
| 1) X = (mass of component (D) contained per unit area of component (A))/d<br>2) Constitution of laminate<br>(I) Component (A) is arranged between every two layers<br>(V) One layer of component (A) is arranged per two layers of the prepreg precursors<br>3) Value calculated in terms of Vf60% | | | | |

Table 32

[Table 32]

| | | | Examples | |
|---|---|---|---|---|
| | | | 64 | 102 |
| Prepreg | Component (A) | Names of raw materials, mass% | A-12<br>3 | A-20<br>3 |
| | Component (B) | | Reference Example 2<br>28 | Reference Example 2<br>28 |
| | Component (C) | | C-1<br>60 | C-1<br>60 |
| | Component (D) | | Reference Example 2<br>9 | Reference Example 2<br>9 |
| | Surface(s) having (A) thereon | | One surface | One surface |
| | Constitution of laminate[2) | | (V) | (V) |
| | X[1) | % | 95% | 106% |
| Fiber-reinforced composite material | Loss coefficient | - | -38, 196 | 0.0087 |
| | 0-Degree flexural modulus[3) | GPa | 120 | 120 |
| | 0-Degree flexural strength[3) | MPa | 1534 | 1530 |
| | Glass transition temperature | °C | -2, 113 | -2, 113 |

(continued)

|  |  |  | Examples | |
|---|---|---|---|---|
|  |  |  | 64 | 102 |
| Tubular body | Weight | g | 79 | 79.3 |

1) X = (mass of component (D) contained per unit area of component (A))/d
2) Constitution of laminate
(V) One layer of component (A) is arranged per two layers of the prepreg precursors
3) Value calculated in terms of Vf60%

Table 33

[Table 33]

|  |  |  | Example | Comparative Example |
|---|---|---|---|---|
|  |  |  | 103 | 82 |
| Fiber-reinforced composite material | Component (A) | Names of raw materials, mass% | A-12<br>5 | - |
|  | Component (B) |  | Reference Example 26<br>30 | Reference Example 26<br>32 |
|  | Component (C) |  | C-2<br>65 | C-2<br>68 |
|  | Component (D) |  | - | - |
|  | Constitution of laminate[1] |  | (V) | - |
|  | Loss coefficient | - | 0.0071 | 0.0054 |
|  | flexural strength[2] | MPa | 910 | 958 |
|  | Glass transition temperature | °C | -3, 142 | 141 |

1) Constitution of laminate
(V) One layer of component (A) is arranged per two layers of the prepreg precursors
2) Value calculated in terms of Vf60%

DESCRIPTION OF REFERENCE SIGNS

A: Component (A)
B: Component (B)
C: Component (C)
D: Component (D)
E: Component (E)
F: Component (F)
G: Component (G)
H: Component (H)
J: (A-11) Polyamide polyether elastomer particle
1: Average boundary line
2: Average center thickness line

INDUSTRIAL APPLICABILITY

According to the present invention, it becomes possible to provide a fiber-reinforced composite material having excellent rigidity, strength and vibration damping performance and a prepreg that can be used suitably for the production of the fiber-reinforced composite material. That is, according to the fiber-reinforced composite material and the prepreg of the present invention, it becomes possible to improve vibration damping performance of a fiber-reinforced composite material without deteriorating rigidity and strength thereof by arranging a non-woven fabric comprising a thermoplastic elastomer and/or a polyolefin each having high vibration damping performance between layers of the fiber-reinforced composite material. The present invention is useful for the improvement in ball feel of a golf shaft, the improvement in impact absorption performance of a tennis racket, the improvement in fish strike sensitivity of a fishing rod and so on.

**Claims**

1. A prepreg containing components (A) to (C) as mentioned below, wherein the component (A) is arranged on one surface or both surfaces of a layer comprising the components (B) and (C) :

   (A) a non-woven fabric comprising a thermoplastic elastomer and/or a polyolefin which has a value of tanδ of 0.06 or more at 10°C as measured in a viscoelasticity measurement in which a plate-like molding comprising only component (A) is measured using a dynamic viscoelasticity measurement from -70 to 250°C at a temperature rise rate of 5°C/min and is incompatible with the component (B), herein components (A) and (B) being incompatible means that the glass transition temperature of the cured product of the resin composition comprising the components (A) and (B) is observed at the same temperature as the glass transition temperatures of the plate-like molding comprising only the component (A) and the cured resin produced by curing only the component (B) as measured by a dynamic viscoelasticity measurement from -70 to 250°C at a temperature rise rate of 5°C/min;
   (B) a first epoxy resin composition; and
   (C) a reinforcing fiber.

2. The prepreg according to claim 1, wherein the component (A) is a non-woven fabric comprising a thermoplastic elastomer.

3. The prepreg according to claim 1, wherein the component (A) is a non-woven fabric comprising a polyolefin.

4. The prepreg according to claim 2, wherein the component (A) is a non-woven fabric comprising a thermoplastic elastomer selected from a polyamide-based thermoplastic elastomer having a polyamide structure and a polyether structure and a polyester-based thermoplastic elastomer having a polyester structure and a polyether structure.

5. The prepreg according to any one of claims 1 to 4, wherein the component (A) has a fabric weight of 5 to 100 g/m$^2$.

6. The prepreg according to any one of claims 1 to 5, wherein the component (B) contains an epoxy resin having an epoxy equivalent of 800 to 5500.

7. The prepreg according to any one of claims 1 to 6, wherein the component (C) is a carbon fiber.

8. The prepreg according to claim 3, wherein a resin that constitutes the component (A) has a specific gravity determined by the water displacement method described in JIS K7112 (2005) of 0.95 or less.

9. The prepreg according to any one of claims 1 to 8, wherein the prepreg additionally contains a component (D) as mentioned below and the component (A) is arranged in the state contained in the component (D) on one surface or both surfaces of the layer comprising the components (B) and (C):
   (D) a second epoxy resin composition that is incompatible with the component (A), herein components (A) and (D) being incompatible means that the glass transition temperature of the cured product of the resin composition comprising the components (A) and (D) is observed at the same temperature as the glass transition temperatures of the plate-like molding comprising only the component (A) and the cured resin produced by curing only the component (D) as measured by a dynamic viscoelasticity measurement from -70 to 250°C at a temperature rise rate of 5°C/min.

10. The prepreg according to claim 9, wherein the mass of the component (D) to be impregnated per unit area of the component (A) is 95 to 130% of the value d that is determined by formula (1):

$$d = (\beta/3 - A/\alpha) \cdot \gamma \quad (1)$$

A: the fabric weight (g/m$^2$) of the component (A);
$\alpha$: the specific gravity (g/cm$^3$) determined by the water displacement method described in JIS K7112 (2005) of the resin that constitutes the component (A);
$\beta$: the thickness ($\mu$m) of the component (A); and
$\gamma$: the specific gravity (g/cm$^3$) of a cured product of the component (D).

**11.** A process for producing the prepreg recited in any one of claims 1 to 8, comprising the steps of: impregnating the component (C) with the component (B) to produce a prepreg precursor; and attaching the component (A) onto the prepreg precursor.

**12.** A fiber-reinforced composite material containing components (E) to (G) as mentioned below, wherein multiple layers each comprising the components (F) and (G) are laminated together, and the component (E) is arranged between the layers each comprising the components (F) and (G):

(E) a non-woven fabric comprising a thermoplastic elastomer and/or a polyolefin which has a value of tan$\delta$ of 0.06 or more at 10°C in which a plate-like molding comprising only component (E) is measured using a dynamic viscoelasticity measurement from -70 to 250°C at a temperature rise rate of 5°C/min, and is incompatible with a third epoxy resin composition, herein components (E) and the third epoxy resin composition being incompatible means that the glass transition temperature of the cured product of the resin composition comprising the component (E) and the third epoxy resin composition is observed at the same temperature as the glass transition temperatures of the plate-like molding comprising only the component (E) and the cured resin produced by curing only the third epoxy resin composition as measured by a dynamic viscoelasticity measurement from -70 to 250°C at a temperature rise rate of 5°C/min;
(F) a cured product of the third epoxy resin composition; and
(G) a reinforcing fiber.

**13.** The fiber-reinforced composite material according to claim 12, wherein the component (E) is a non-woven fabric comprising a thermoplastic elastomer.

**14.** The fiber-reinforced composite material according to claim 12, wherein the component (E) is a non-woven fabric comprising a polyolefin.

**15.** The fiber-reinforced composite material according to any one of claims 12 to 14, wherein the fiber-reinforced composite material additionally comprises a component (H) as mentioned below and the component (E) is arranged in the state contained in the component (H) between the layers each comprising the components (F) and (G):
(H) a cured product of a fourth epoxy resin composition.

**16.** The fiber-reinforced composite material according to any one of claims 13 to 15, wherein the component (E) is contained in the fiber-reinforced composite material in an amount of 2 to 20 mass%.

**Patentansprüche**

**1.** Prepreg, das die nachstehenden Komponenten (A) bis (C) enthält, wobei Komponente (A) auf einer Oberfläche oder auf beiden Oberflächen einer Schicht angeordnet ist, welche die Komponenten (B) und (C) umfasst:

(A) ein thermoplastisches Elastomer und/oder ein Polyolefin umfassender Vliesstoff, der bei 10 °C einen tan$\delta$-Wert von 0,06 oder mehr, gemessen durch eine Viskoelastizitätsmessung, bei der eine plattenartiges Formteil, das nur Komponente (A) umfasst, durch eine dynamische Viskoelastizitätsmessung von -70 bis 250 °C mit einer Temperaturanstiegsrate von 5 °C/min gemessen wird, aufweist und der mit der Komponente (B) inkompatibel ist, wobei die Inkompatibilität der Komponenten (A) und (B) hierin bedeutet, dass die Glastemperatur eines gehärteten Produkts aus der Harzzusammensetzung, welche die Komponenten (A) und (B) umfasst, bei der gleichen Temperatur liegt wie die Glastemperatur des plattenartigen Formteils, das nur die Komponente (A) umfasst, und des gehärteten Harzes, das durch Härten von nur Komponente (B) erhalten wird, gemessen mittels einer dynamischen Viskoelastizitätsmessung von -70 bis 250 °C mit einer Temperaturanstiegsrate von 5 °C/min;

(B) eine erste Epoxidharzzusammensetzung; und

(C) eine Verstärkungsfaser.

2. Prepreg nach Anspruch 1, wobei die Komponente (A) ein Vliesstoff ist, der ein thermoplastisches Elastomer umfasst.

3. Prepreg nach Anspruch 1, wobei die Komponente (A) ein Vliesstoff ist, der ein Polyolefin umfasst.

4. Prepreg nach Anspruch 2, wobei die Komponente (A) ein Vliesstoff ist, der ein thermoplastisches Elastomer umfasst, das aus einem thermoplastischen Elastomer auf Polyamidbasis mit einer Polyamidstruktur und einer Polyetherstruktur und einem thermoplastischen Elastomer auf Polyesterbasis mit einer Polyesterstruktur und einer Polyetherstruktur ausgewählt ist.

5. Prepreg nach einem der Ansprüche 1 bis 4, wobei die Komponente (A) ein Stoffgewicht von 5 bis 100 g/m$^2$ aufweist.

6. Prepreg nach einem der Ansprüche 1 bis 5, wobei die Komponente (B) ein Epoxidharz mit einem Epoxidäquivalent von 800 bis 5.500 aufweist.

7. Prepreg nach einem der Ansprüche 1 bis 6, wobei die Komponente (C) eine Kohlefaser ist.

8. Prepreg nach Anspruch 3, wobei ein Harz, das die Komponente (A) bildet, eine durch das in JIS K7112 (2005) beschriebene Wasserverdrängungsverfahren spezifische Gewicht von 0,95 oder weniger aufweist.

9. Prepreg nach einem der Ansprüche 1 bis 8, wobei das Prepreg außerdem eine Komponente (D) wie nachstehend angeführt umfasst und die Komponente (A) in dem in Komponente (D) enthaltenen Zustand auf einer Oberfläche oder auf beiden Oberflächen der die Komponenten (B) und (C) umfassenden Schicht angeordnet ist:

(D) eine zweite Epoxidharzzusammensetzung, die mit der Komponente (B) inkompatibel ist, wobei die Inkompatibilität der Komponenten (A) und (D) hierin bedeutet, dass die Glastemperatur eines gehärteten Produkts aus der Harzzusammensetzung, welche die Komponenten (A) und (D) umfasst, bei der gleichen Temperatur liegt wie die Glastemperatur des plattenartigen Formteils, das nur die Komponente (A) umfasst, und des gehärteten Harzes, das durch Härten von nur Komponente (D) erhalten wird, gemessen mittels einer dynamischen Viskoelastizitätsmessung von -70 bis 250 °C mit einer Temperaturanstiegsrate von 5 °C/min.

10. Prepreg nach Anspruch 9, wobei die Masse der Komponente (D), die pro Einheitsfläche der Komponente (A) zu imprägnieren ist, 95 bis 130 % des durch Formel (1) bestimmten Werts d beträgt:

$$d = (\beta/3 - A/\alpha)\cdot\gamma \quad (1)$$

A: Stoffgewicht (g/m$^2$) der Komponente (A);
$\alpha$: spezifisches Gewicht (g/cm$^3$), bestimmt durch das in JIS K7112 (2005) beschriebene Wasserverdrängungsverfahren, des Harzes, das die Komponente (A) bildet;
$\beta$: Dicke ($\mu$m) der Komponente (A) und
$\gamma$: spezifisches Gewicht (g/cm$^3$) eines gehärteten Produkts aus der Komponente (D).

11. Verfahren zur Herstellung eines Prepregs nach einem der Ansprüche 1 bis 8, das die folgenden Schritte umfasst: Imprägnieren der Komponente (C) mit Komponente (B), um einen Prepreg-Vorläufer herzustellen; und Aufbringen der Komponente (A) auf den Prepreg-Vorläufer.

12. Faserverstärktes Verbundmaterial, das die nachstehenden Komponenten (E) bis (G) umfasst, wobei mehrere Schichten, die jeweils die Komponenten (F) und (G) umfassen, zusammenlaminiert sind und die Komponente (E) zwischen den Schichten, die jeweils die Komponenten (F) und (G) umfassen, angeordnet ist:

(E) ein thermoplastisches Elastomer und/oder ein Polyolefin umfassender Vliesstoff, der bei 10 °C einen tan$\delta$-Wert von 0,06 oder mehr, wobei ein plattenartiges Formteil, das nur Komponente (E) umfasst, durch eine dynamische Viskoelastizitätsmessung von -70 bis 250 °C mit einer Temperaturanstiegsrate von 5 °C/min gemessen wird, aufweist und der mit einer dritten Epoxidharzzusammensetzung inkompatibel ist, wobei die Inkompatibilität der Komponente (E) und der dritten Epoxidharzzusammensetzung hierin bedeutet, dass die Glastemperatur eines gehärteten Produkts aus der Harzzusammensetzung, welche die Komponente (E) und die dritte Epoxidharzzusammensetzung umfasst, bei der gleichen Temperatur liegt wie die Glastemperatur des plattenartigen Formteils, das nur die Komponente (E) umfasst, und des gehärteten Harzes, das durch Härten von nur der dritten Epoxidharzzusammensetzung erhalten wird, gemessen mittels einer dynamischen Viskoelastizitätsmessung von -70 bis 250 °C mit einer Temperaturanstiegsrate von 5 °C/min;
(F) ein gehärtetes Produkt aus der dritten Epoxidharzzusammensetzung; und
(G) eine Verstärkungsfaser.

**13.** Faserverstärktes Verbundmaterial nach Anspruch 12, wobei die Komponente (E) ein Vliesstoff ist, der ein thermoplastisches Elastomer umfasst.

**14.** Faserverstärktes Verbundmaterial nach Anspruch 12, wobei die Komponente (E) ein Vliesstoff ist, der ein Polyolefin umfasst.

**15.** Faserverstärktes Verbundmaterial nach einem der Ansprüche 12 bis 14, wobei das faserverstärkte Verbundmaterial außerdem eine Komponente (H) wie nachstehend angeführt umfasst und die Komponente (E) in dem in der Komponente (H) enthaltenen Zustand zwischen den Sichten angeordnet ist, die jeweils die Komponenten (F) und (G) enthalten:
(H) ein gehärtetes Produkt aus einer vierten Epoxidharzzusammensetzung.

**16.** Faserverstärktes Verbundmaterial nach einem der Ansprüche 13 bis 15, wobei die Komponente (E) im faserverstärkten Verbundmaterial in einer Menge von 2 bis 20 Massen-% enthalten ist.

**Revendications**

**1.** Préimprégné contenant des composants (A) à (C) tels que mentionnés ci-dessous, dans lequel le composant (A) est agencé sur une surface ou les deux surfaces d'une couche comprenant les composants (B) et (C) :

(A) un tissu non tissé comprenant un élastomère thermoplastique et/ou une polyoléfine qui a une valeur de tan$\delta$ de 0,06 ou plus à 10 °C telle que mesurée dans une mesure de la viscoélasticité dans laquelle une pièce moulée en forme de plaque comprenant seulement le composant (A) est mesurée en utilisant une mesure de la viscoélasticité dynamique de -70 à 250 °C à une vitesse d'élévation de la température de 5 °C/min et est incompatible avec le composant (B), ici les composants (A) et (B) étant incompatibles signifie que la température de transition vitreuse du produit durci de la composition de résine comprenant les composants (A) et (B) est observée à la même température que les températures de transition vitreuse de la pièce moulée en forme de plaque comprenant seulement le composant (A) et de la résine durcie produite en durcissant seulement le composant (B) telles que mesurées par une mesure de la viscoélasticité dynamique de -70 à 250 °C à une vitesse d'élévation de la température de 5 °C/min ;
(B) une première composition de résine époxy ; et
(C) une fibre de renforcement.

**2.** Préimprégné selon la revendication 1, dans lequel le composant (A) est un tissu non tissé comprenant un élastomère thermoplastique.

**3.** Préimprégné selon la revendication 1, dans lequel le composant (A) est un tissu non tissé comprenant une polyoléfine.

**4.** Préimprégné selon la revendication 2, dans lequel le composant (A) est un tissu non tissé comprenant un élastomère thermoplastique choisi parmi un élastomère thermoplastique à base de polyamide ayant une structure polyamide et une structure polyéther et un élastomère thermoplastique à base de polyester ayant une structure polyester et une structure polyéther.

**5.** Préimprégné selon l'une quelconque des revendications 1 à 4, dans lequel le composant (A) a un poids de tissu de 5 à 100 g/m$^2$.

**6.** Préimprégné selon l'une quelconque des revendications 1 à 5, dans lequel le composant (B) contient une résine époxy ayant un équivalent époxy de 800 à 5500.

**7.** Préimprégné selon l'une quelconque des revendications 1 à 6, dans lequel le composant (C) est une fibre de carbone.

**8.** Préimprégné selon la revendication 3, dans lequel une résine qui constitue le composant (A) a une densité relative déterminée par la méthode de déplacement d'eau décrite dans la norme JIS K7112 (2005) de 0,95 ou moins.

**9.** Préimprégné selon l'une quelconque des revendications 1 à 8, dans lequel le préimprégné contient en outre un composant (D) tel que mentionné ci-dessous et le composant (A) est agencé dans l'état contenu dans le composant (D) sur une surface ou les deux surfaces de la couche comprenant les composants (B) et (C) :
(D) une deuxième composition de résine époxy qui est incompatible avec le composant (A), ici les composants (A) et (D) étant incompatibles signifie que la température de transition vitreuse du produit durci de la composition de résine comprenant les composants (A) et (D) est observée à la même température que les températures de transition vitreuse de la pièce moulée en forme de plaque comprenant seulement le composant (A) et de la résine durcie produite en durcissant seulement le composant (D) telles que mesurées par une mesure de la viscoélasticité dynamique de -70 à 250 °C à une vitesse d'élévation de la température de 5 °C/min.

**10.** Préimprégné selon la revendication 9, dans lequel la masse du composant (D) devant être imprégné par unité de surface du composant (A) est de 95 à 130 % de la valeur d qui est déterminée par la formule (1) :

$$d = (\beta/3 - A/\alpha) \cdot \gamma \quad (1)$$

A : le poids de tissu (g/m$^2$) du composant (A) ;
$\alpha$ : la densité relative (g/cm$^2$) déterminée par la méthode de déplacement d'eau décrite dans la norme JIS K7112 (2005) de la résine qui constitue le composant (A) ;
$\beta$ : l'épaisseur ($\mu$m) du composant (A) ; et
$\gamma$ : la densité relative (g/cm$^3$) d'un produit durci du composant (D).

**11.** Procédé de production du préimprégné selon l'une quelconque des revendications 1 à 8, comprenant les étapes de : imprégnation du composant (C) avec le composant (B) pour produire un précurseur de préimprégné ; et fixation du composant (A) sur le précurseur de préimprégné.

**12.** Matériau composite renforcé par des fibres contenant des composants (E) à (G) tels que mentionnés ci-dessous, dans lequel de multiples couches comprenant chacune les composants (F) et (G) sont stratifiées ensemble, et le composant (E) est agencé entre les couches comprenant chacune les composants (F) et (G) :

(E) un tissu non tissé comprenant un élastomère thermoplastique et/ou une polyoléfine qui a une valeur de tan$\delta$ de 0,06 ou plus à 10 °C dans laquelle une pièce moulée en forme de plaque comprenant seulement le composant (E) est mesurée en utilisant une mesure de la viscoélasticité dynamique de -70 à 250 °C à une vitesse d'élévation de la température de 5 °C/min, et est incompatible avec une troisième composition de résine époxy, ici les composants (E) et la troisième composition de résine époxy étant incompatibles signifie que la température de transition vitreuse du produit durci de la composition de résine comprenant le composant (E) et de la troisième composition de résine époxy est observée à la même température que les températures de transition vitreuse de la pièce moulée en forme de plaque comprenant seulement le composant (E) et de la résine durcie produite en durcissant seulement la troisième composition de résine époxy telles que mesurées par une mesure de la viscoélasticité dynamique de -70 à 250 °C à une vitesse d'élévation de la température de 5 °C/min ;
(F) un produit durci de la troisième composition de résine époxy ; et
(G) une fibre de renforcement.

**13.** Matériau composite renforcé par des fibres selon la revendication 12, dans lequel le composant (E) est un tissu non tissé comprenant un élastomère thermoplastique.

**14.** Matériau composite renforcé par des fibres selon la revendication 12, dans lequel le composant (E) est un tissu non tissé comprenant une polyoléfine.

**15.** Matériau composite renforcé par des fibres selon l'une quelconque des revendications 12 à 14, dans lequel le matériau composite renforcé par des fibres comprend en outre un composant (H) tel que mentionné ci-dessous et le composant (E) est agencé dans l'état contenu dans le composant (H) entre les couches comprenant chacune les composants (F) et (G) :

(H) un produit durci d'une quatrième composition de résine époxy.

16. Matériau composite renforcé par des fibres selon l'une quelconque des revendications 13 à 15, dans lequel le composant (E) est contenu dans le matériau composite renforcé par des fibres en une quantité de 2 à 20 % en masse.

Fig. 1

(A)

(B)

(C)

Fig. 2

(A)

(B)

(C)

Fig. 3

(D)

(A)

(B)

(C)

Fig. 4

(D)

(A)

(B)

(C)

Fig. 5

(E)

(F)

(G)

Fig. 6

(H)

(E)

(G)

(F)

Fig. 7

(E)

(F)

(G)

Fig. 8

(H)

(E)

(F)

(G)

Fig. 9

(E)

(F)

(G)

Fig. 10

(H)

(E)

(F)

(G)

Fig. 11

（E）

（F）

（G）

Fig. 12

（H）
（E）
（F）
（G）

Fig. 13

(E)

(F)

(G)

Fig. 14

(H)

(E)

(F)

(G)

Fig. 15

**EP 2 596 947 B1**

**Patent documents cited in the description**

- JP 8259713 A
- JP 6041332 A
- JP 8225667 A
- JP 8283435 A
- JP 3149230 A
- JP 2009261473 A
- JP 2008237373 A
- JP 2003012889 A
- JP 4292909 A
- JP 7252372 A
- JP 4207139 A